# EUROPÄISCHE PATENTSCHRIFT

(11) **EP 1 429 613 B1**
(45) Veröffentlichungstag und Bekanntmachung des Hinweises auf die Patenterteilung: **17.01.2007**
(21) Anmeldenummer: 02799360.9
(22) Anmeldetag: 10.09.2002
(51) Int. Cl.: A01N 47/38

(54) **SELEKTIVE HERBIZIDE AUF BASIS VON SUBSTITUIERTEN THIEN-3-YL-SULFONYLAMINO(THIO)CARBONYL-TRIAZOLIN(THI)ONEN UND SAFENERN**
SELECTIVE HERBICIDES BASED ON SUBSTITUTED THIEN-3-YL-SULFONYLAMINO(THIO)CARBONYL-TRIAZOLIN(THI)ONES AND SAFENERS
HERBICIDES SELECTIFS A BASE DE THIEN-3-YL-SULFONYLAMINO(THIO)CARBONYL-TRIAZOLIN(THI)ONES SUBSTITUEES ET DE PHYTOPROTECTEURS

(30) Priorität: 21.09.2001 DE 10146590
(43) Veröffentlichungstag der Anmeldung: 23.06.2004
(73) Patentinhaber: Bayer CropScience AG, 40789 Monheim (DE)
(72) Erfinder: FEUCHT, Dieter, 65760 Eschborn (DE); DAHMEN, Peter, 41470 Neuss (DE); DREWES, Mark, Wilhelm, 40764 Langenfeld (DE); PONTZEN, Rolf, 42799 Leichlingen (DE); GESING, Ernst, Rudolf, F., 40699 Erkrath (DE); SCHWARZ, Hans-Georg, 40764 Langenfeld (DE); MÜLLER, Klaus-Helmut, 40593 Düsseldorf (DE)
(74) Vertreter: Schwenk, Norbert
(86) Internationale Anmeldenummer: PCT/EP2002/010104
(87) Internationale Veröffentlichungsnummer: WO 2003/026427

(56) Entgegenhaltungen:
- WO-A-01/05788

## Beschreibung

Die Erfindung betrifft neue selektiv-herbizide Wirkstoffkombinationen, die substituierte Thien-3-yl-sulfonylamino(thio)carbonyl-triazolin(thi)one einerseits und zumindest eine die Kulturpflanzen-Verträglichkeit verbessernde Verbindung andererseits enthalten und mit besonders gutem Erfolg zur selektiven Unkrautbekämpfung in verschiedenen Nutzpflanzenkulturen verwendet werden können.

Substituierte Thien-3-yl-sulfonylamino(thio)carbonyl-triazolin(thi)one sind bereits als wirksame Herbizide bekannt (vgl. WO-A-01/05788). Die Wirkung dieser Verbindungen und/oder ihre Verträglichkeit gegenüber Kulturpflanzen sind jedoch nicht unter allen Bedingungen ganz zufriedenstellend.

Überraschenderweise wurde nun gefunden, dass bestimmte substituierte Thien-3-yl-sulfonylamino(thio)carbonyl-triazolin(thi)one bei gemeinsamer Anwendung mit den im weiteren beschriebenen, die Kulturpflanzen-Verträglichkeit verbessernden Verbindungen (Safenern/Antidots), ausgesprochen gut die Schädigung der Kulturpflanzen verhindern und besonders vorteilhaft als breit wirksame Kombinationspräparate zur selektiven Bekämpfung von Unkräutern in Nutzpflanzenkulturen, wie z.B. in Getreide und Mais, verwendet werden können.

Gegenstand der Erfindung sind selektiv-herbizide Mittel, gekennzeichnet durch einen wirksamen Gehalt an einer Wirkstoffkombination umfassend

### (a) substituierte Thien-3-yl-sulfonylamino(thio)carbonyl-triazolin(thi)one der Formel (I)

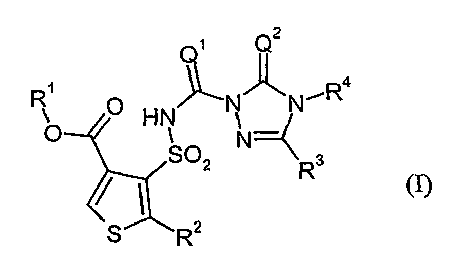

in welcher
- Q¹: für O (Sauerstoff) oder S (Schwefel) steht,
- Q²: für O (Sauerstoff) oder S (Schwefel) steht,
- R¹: für gegebenenfalls durch Cyano, Halogen oder C₁-C₄-Alkoxy substituiertes Alkyl mit 1 bis 6 Kohlenstoffatomen, für jeweils gegebenenfalls durch Cyano oder Halogen substituiertes Alkenyl oder Alkinyl mit jeweils 2 bis 6 Kohlenstoffatomen, für jeweils gegebenenfalls durch Cyano, Halogen oder C₁-C₄-Alkyl substituiertes Cycloalkyl oder Cycloalkylalkyl mit jeweils 3 bis 6 Kohlenstoffatomen in der Cycloalkylgruppe und gegebenenfalls 1 bis 4 Kohlenstoffatomen im Alkylteil, für jeweils gegebenenfalls durch Nitro, Cyano, Halogen, C₁-C₄-Alkyl oder C₁-C₄-Alkoxy substituiertes Aryl oder Arylalkyl mit jeweils 6 oder 10 Kohlenstoffatomen in der Arylgruppe und gegebenenfalls 1 bis 4 Kohlenstoffatomen im Alkylteil, oder für jeweils gegebenenfalls durch Nitro, Cyano, Halogen, C₁-C₄-Alkyl oder C₁-C₄-Alkoxy substituiertes Heterocyclyl oder Heterocyclylalkyl mit jeweils bis zu 6 Kohlenstoffatomen und zusätzlich 1 bis 4 Stickstoffatomen und/oder 1 bis 2 Sauerstoff- oder Schwefelatomen in der Heterocyclylgruppe und gegebenenfalls 1 bis 4 Kohlenstoffatomen im Alkylteil steht,
- R²: für Wasserstoff, Cyano, Nitro, Halogen, für jeweils gegebenenfalls durch Cyano, Halogen oder C₁-C₄-Alkoxy substituiertes Alkyl, Alkoxy, Alkoxycarbonyl, Alkylthio, Alkylsulfinyl oder Alkylsulfonyl mit jeweils 1 bis 6 Kohlenstoffatomen in der Alkylgruppe, oder für jeweils gegebenenfalls durch Cyano oder Halogen substituiertes Alkenyl, Alkinyl, Alkenyloxy oder Alkinyloxy mit jeweils 2 bis 6 Kohlenstoffatomen in der Alkenyl- oder Alkinylgruppe steht,
- R³: für Wasserstoff, Hydroxy, Mercapto, Amino, Cyano, Fluor, Chlor, Brom, Iod, für gegebenenfalls durch Fluor, Chlor, Brom, Cyano, C₁-C₄-Alkoxy, C₁-C₄-Alkyl-carbonyl oder C₁-C₄-Alkoxy-carbonyl substituiertes Alkyl mit 1 bis 6 Kohlenstoffatomen, für jeweils gegebenenfalls durch Fluor, Chlor und/oder Brom substituiertes Alkenyl oder Alkinyl mit jeweils 2 bis 6 Kohlenstoffatomen, für jeweils gegebenenfalls durch Fluor, Chlor, Cyano, C₁-C₄-Alkoxy oder C₁-C₄-Alkoxy-carbonyl substituiertes Alkoxy, Alkylthio, Alkylamino oder Alkylcarbonylamino mit jeweils 1 bis 6 Kohlenstoffatomen in der Alkylgruppe, für Alkenyloxy, Alkinyloxy, Alkenylthio, Alkinylthio, Alkenylamino oder Alkinylamino mit jeweils 3 bis 6 Kohlenstoffatomen in der Alkenyl- oder Alkinylgruppe, für Dialkylamino mit jeweils 1 bis 4 Kohlenstoffatomen in den Alkylgruppen, für jeweils gegebenenfalls durch Methyl und/oder Ethyl substituiertes Aziridino, Pyrrolidino, Piperidino oder Morpholino, für jeweils gegebenenfalls durch Fluor, Chlor, Brom, Cyano und/oder C₁-C₄-Alkyl substituiertes Cycloalkyl, Cycloalkenyl, Cycloalkyloxy, Cycloalkylthio, Cycloalkylamino, Cycloalkylalkyl, Cycloalkylalkoxy, Cycloalkylalkylthio oder Cycloalkylalkylamino mit jeweils 3 bis 6 Kohlenstoffatomen in der Cycloalkyl- bzw. Cycloalkenylgruppe und gegebenenfalls 1 bis 4 Kohlenstoffatomen im Alkylteil, oder für jeweils gegebenenfalls durch Fluor, Chlor, Brom, Cyano, Nitro, C₁-C₄-Alkyl, Trifluormethyl, C₁-C₄-Alkoxy und/oder C₁-C₄-Alkoxy-carbonyl substituiertes Aryl, Arylalkyl, Aryloxy, Arylalkoxy, Arylthio, Arylalkylthio, Arylamino oder Arylalkylamino mit jeweils 6 oder 10 Kohlenstoffatomen in der Arylgruppe und gegebenenfalls 1 bis 4 Kohlenstoffatomen im Alkylteil steht,
- R⁴: für Wasserstoff, Hydroxy, Amino, Cyano, für C₂-C₁₀-Alkylidenamino, für gegebenenfalls durch Fluor, Chlor, Brom, Cyano, C₁-C₄-Alkoxy, C₁-C₄-Alkylcarbonyl oder C₁-C₄-Alkoxy-carbonyl substituiertes Alkyl mit 1 bis 6 Kohlenstoffatomen, für jeweils gegebenenfalls durch Fluor, Chlor und/oder Brom substituiertes Alkenyl oder Alkinyl mit jeweils 2 bis 6 Kohlenstoffatomen, für jeweils gegebenenfalls durch Fluor, Chlor, Brom, Cyano, C₁-C₄-Alkoxy oder C₁-C₄-Alkoxy-carbonyl substituiertes Alkoxy, Alkylamino oder Alkyl-carbonylamino mit jeweils 1 bis 6 Kohlenstoffatomen in der Alkylgruppe, für Alkenyloxy mit 3 bis 6 Kohlenstoffatomen, für Dialkylamino mit jeweils 1 bis 4 Kohlenstoffatomen in den Alkylgruppen, für jeweils gegebenenfalls durch Fluor, Chlor, Brom, Cyano und/oder C₁-C₄-Alkyl substituiertes Cycloalkyl, Cycloalkylamino oder Cycloalkylalkyl mit jeweils 3 bis 6 Kohlenstoffatomen in der Alkylgruppe und gegebenenfalls 1 bis 4 Kohlenstoffatomen im Alkylteil, oder für jeweils gegebenenfalls durch Fluor, Chlor, Brom, Cyano, Nitro, C₁-C₄-Alkyl, Trifluormethyl und/oder C₁-C₄-Alkoxy substituiertes Aryl oder Arylalkyl mit jeweils 6 oder 10 Kohlenstoffatomen in der Arylgruppe und gegebenenfalls 1 bis 4 Kohlenstoffatomen im Alkylteil steht, oder
- R³ und R⁴: zusammen für gegebenenfalls verzweigtes Alkandiyl mit 3 bis 6 Kohlenstoffatomen stehen,
- sowie Salze der Verbindungen der Formel (I) -
("wirksame Verbindungen der Gruppe 1")
und

### (b) zumindest eine die Kulturpflanzen-Verträglichkeit verbessernde Verbindung aus der folgenden Gruppe von Verbindungen:

4-Dichloracetyl-1-oxa-4-aza-spiro[4.5]-decan (AD-67, MON-4660), 5-Chlor-chinolin-8-oxy-essigsäure-(1-methyl-hexylester) (Cloquintocet-mexyl 2,2-Dichlor-N,N-di-2-propenyl-acetamid (Dichlormid), 1-(2,4-Dichlor-phenyl)-5-trichlormethyl-1H-1,2,4-triazol-3-carbonsäure-ethylester (Fenchlorazole-ethyl), 2-Chlor-4-trifluormethyl-thiazol-5-carbonsäure-phenylmethylester (Flurazole), 3-Dichloracetyl-5-(2-furanyl)-2,2-dimethyl-oxazolidin (Furilazole, MON-13900), Ethyl-4,5-dihydro-5,5-diphenyl-3-isoxazolcarboxylat (Isoxadifen-ethyl), Diethyl-1-(2,4-dichlor-phenyl)-4,5-dihydro-5-methyl-1H-pyrazol-3,5-dicarboxylat (Mefenpyr-diethyl), Diphenylmethoxyessigsäure-methylester (MON-7400,
und/oder die folgenden Verbindungen
der Formel (IIa) 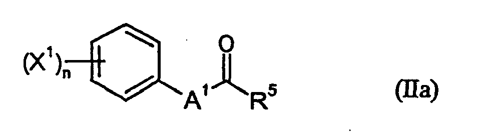 oder der Formel (IIb) 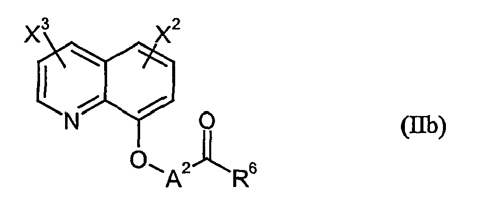 oder der Formel (IIc) 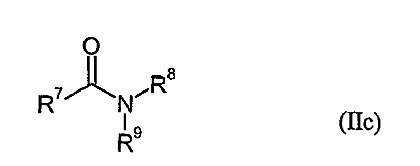 wobei
- n: für eine Zahl zwischen 0 und 5 steht,
- A¹: für eine der nachstehend skizzierten divalenten heterocyclischen Gruppierungen steht, 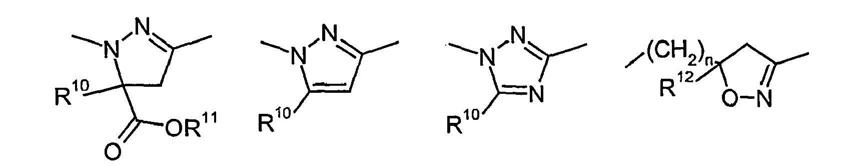
- A²: für gegebenenfalls durch C₁-C₄-Alkyl und/oder C₁-C₄-Alkoxy-carbonyl substituiertes Alkandiyl mit 1 oder 2 Kohlenstoffatomen steht,
- R⁵: für Hydroxy, Mercapto, Amino, C₁-C₆-Alkoxy, C₁-C₆-Alkylthio, C₁-C₆-Alkylamino oder Di-(C₁-C₄-alkyl)-amino steht,
- R⁶: für Hydroxy, Mercapto, Amino, jeweils gegebenenfalls durch C₁-C₄-Alkyl, C₁-C₄-Alkoxy oder C₂-C₄-Alkenoxy substituiertes C₁-C₆-Alkoxy, C₂-C₆-Alkenoxy, C₁-C₆-Alkylthio, C₁-C₆-Alkylamino oder Di-(C₁-C₄-alkyl)-amino steht,
- R⁷: für jeweils gegebenenfalls durch Fluor, Chlor und/oder Brom substituiertes C₁-C₄-Alkyl steht,
- R⁸: für Wasserstoff, jeweils gegebenenfalls durch Fluor, Chlor und/oder Brom substituiertes C₁-C₆-Alkyl, C₂-C₆-Alkenyl oder C₂-C₆-Alkinyl, C₁-C₄-Alkoxy-C₁-C₄-alkyl, Dioxolanyl-C₁-C₄-alkyl, Furyl, Furyl-C₁-C₄-alkyl, Thienyl, Thiazolyl, Piperidinyl, oder gegebenenfalls durch Fluor, Chlor und/oder Brom oder C₁-C₄-Alkyl substituiertes Phenyl steht,
- R⁹: für Wasserstoff, jeweils gegebenenfalls durch Fluor, Chlor und/oder Brom substituiertes C₁-C₆-Alkyl, C₂-C₆-Alkenyl oder C₂-C₆-Alkinyl, C₁-C₄-Alkoxy-C₁-C₄-alkyl, Dioxolanyl-C₁-C₄-alkyl, Furyl, Furyl-C₁-C₄-alkyl, Thienyl, Thiazolyl, Piperidinyl, oder gegebenenfalls durch Fluor, Chlor und/oder Brom oder C₁-C₄-Alkyl substituiertes Phenyl, oder zusammen mit R⁸ für jeweils gegebenenfalls durch C₁-C₄-Alkyl, Phenyl, Furyl, einen annellierten Benzolring oder durch zwei Substituenten, die gemeinsam mit dem C-Atom, an das sie gebunden sind, einen 5- oder 6-gliedrigen Carbocyclus bilden, substituiertes C₃-C₆-Alkandiyl oder C₂-C₅-Oxaalkandiyl steht,
- R¹⁰: für Wasserstoff, Cyano, Halogen, oder für jeweils gegebenenfalls durch Fluor, Chlor und/oder Brom substituiertes C₁-C₄-Alkyl, C₃-C₆-Cycloalkyl oder Phenyl steht,
- R¹¹: für Wasserstoff, gegebenenfalls durch Hydroxy, Cyano, Halogen oder C₁-C₄-Alkoxy substituiertes C₁-C₆-Alkyl, C₃-C₆-Cycloalkyl oder Tri-(C₁-C₄-alkyl)-silyl steht,
- R¹²: für Wasserstoff, Cyano, Halogen, oder für jeweils gegebenenfalls durch Fluor, Chlor und/oder Brom substituiertes C₁-C₄-Alkyl, C₃-C₆-Cycloalkyl oder Phenyl steht,
- X¹: für Nitro, Cyano, Halogen, C₁-C₄-Alkyl, C₁-C₄-Halogenalkyl, C₁-C₄-Alkoxy oder C₁-C₄-Halogenalkoxy steht,
- X²: für Wasserstoff, Cyano, Nitro, Halogen, C₁-C₄-Alkyl, C₁-C₄-Halogenalkyl, C₁-C₄-Alkoxy oder C₁-C₄-Halogenalkoxy steht,
- X³: für Wasserstoff, Cyano, Nitro, Halogen, C₁-C₄-Alkyl, C₁-C₄-Halogenalkyl, C₁-C₄-Alkoxy oder C₁-C₄-Halogenalkoxy steht,
wobei X¹ bevorzugt an den Positionen (2) und (4), X² bevorzugt an der Position (5) und X³ an der Position (2) zu finden ist,
und/ oder die folgenden Verbindungen
der Formel (IId) 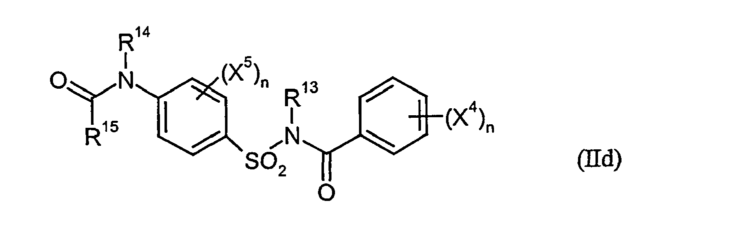 oder der Formel (IIe) 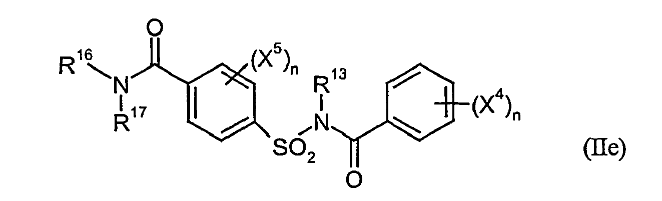 wobei
- n: wiederum für eine Zahl zwischen 0 und 5 steht,
- R¹³: für Wasserstoff oder C₁-C₄-Alkyl steht,
- R¹⁴: für Wasserstoff oder C₁-C₄-Alkyl steht,
- R¹⁵: für Wasserstoff, jeweils gegebenenfalls durch Cyano, Halogen oder C₁-C₄-Alkoxy substituiertes C₁-C₆-Alkyl, C₁-C₆-Alkoxy, C₁-C₆-Alkylthio, C₁-C₆-Alkylamino oder Di-(C₁-C₄-alkyl)-amino, oder jeweils gegebenenfalls durch Cyano, Halogen oder C₁-C₄-Alkyl substituiertes C₃-C₆-Cycloalkyl, C₃-C₆-Cycloalkyloxy, C₃-C₆-Cycloalkylthio oder C₃-C₆-Cycloalkylamino steht,
- R¹⁶: für Wasserstoff, gegebenenfalls durch Cyano, Hydroxy, Halogen oder C₁-C₄-Alkoxy substituiertes C₁-C₆-Alkyl, jeweils gegebenenfalls durch Cyano oder Halogen substituiertes C₃-C₆-Alkenyl oder C₃-C₆-Alkinyl, oder gegebenenfalls durch Cyano, Halogen oder C₁-C₄-Alkyl substituiertes C₃-C₆-Cycloalkyl steht,
- R¹⁷: für Wasserstoff, gegebenenfalls durch Cyano, Hydroxy, Halogen oder C₁-C₄-Alkoxy substituiertes C₁-C₆-Alkyl, jeweils gegebenenfalls durch Cyano oder Halogen substituiertes C₃-C₆-Alkenyl oder C₃-C₆-Alkinyl, gegebenenfalls durch Cyano, Halogen oder C₁-C₄-Alkyl substituiertes C₃-C₆-Cycloalkyl, oder gegebenenfalls durch Nitro, Cyano, Halogen, C₁-C₄-Alkyl, C₁-C₄-Halogenalkyl, C₁-C₄-Alkoxy oder C₁-C₄-Halogenalkoxy substituiertes Phenyl steht, oder zusammen mit R¹⁶ für jeweils gegebenenfalls durch C₁-C₄-Alkyl substituiertes C₂-C₆-Alkandiyl oder C₂-C₅-Oxaalkandiyl steht,
- X⁴: für Nitro, Cyano, Carboxy, Carbamoyl, Formyl, Sulfamoyl, Hydroxy, Amino, Halogen, C₁-C₄-Alkyl, C₁-C₄-Halogenalkyl, C₁-C₄-Alkoxy oder C₁-C₄-Halogenalkoxy steht, und
- X⁵: für Nitro, Cyano, Carboxy, Carbamoyl, Formyl, Sulfamoyl, Hydroxy, Amino, Halogen, C₁-C₄-Alkyl, C₁-C₄-Halogenalkyl, C₁-C₄-Alkoxy oder C₁-C₄-Halogenalkoxy steht,
wobei X⁴ bevorzugt an Position (2) und/oder (5) zu finden ist
("wirksame Verbindungen der Gruppe 2").

In den Definitionen sind die Kohlenwasserstoffketten, wie in Alkyl oder Alkandiyl - auch in Verbindung mit Heteroatomen, wie in Alkoxy - jeweils geradkettig oder verzweigt.

Bevorzugte Bedeutungen der oben in Zusammenhang mit der Formel (I) aufgeführten Gruppen werden im Folgenden definiert.
- Q¹: steht bevorzugt für O (Sauerstoff) oder S (Schwefel).
- Q²: steht bevorzugt für O (Sauerstoff) oder S (Schwefel).
- R¹: steht bevorzugt für jeweils gegebenenfalls durch Cyano, Fluor, Chlor, Methoxy oder Ethoxy substituiertes Methyl, Ethyl, n- oder i-Propyl, n-, i-, s- oder t-Butyl, für jeweils gegebenenfalls durch Cyano, Fluor oder Chlor substituiertes Propenyl, Butenyl, Propinyl oder Butinyl, für jeweils gegebenenfalls durch Cyano, Fluor, Chlor, Methyl oder Ethyl substituiertes Cyclopropyl, Cyclobutyl, Cyclopentyl, Cyclohexyl, Cyclopropylmethyl, Cyclobutylmethyl, Cyclopentylmethyl oder Cyclohexylmethyl, für jeweils gegebenenfalls durch Cyano, Fluor, Chlor, Brom, Methyl, Ethyl, n- oder i-Propyl, Trifluormethyl, Methoxy, Ethoxy, n- oder i-Propoxy, Difluormethoxy oder Trifluormethoxy substituiertes Phenyl, Phenylmethyl oder Phenylethyl, oder für jeweils gegebenenfalls durch Cyano, Fluor, Chlor, Brom, Methyl, Ethyl, n- oder i-Propyl, Methoxy, Ethoxy, n- oder i-Propoxy substituiertes Heterocyclyl oder Heterocyclylmethyl, wobei die Heterocyclylgruppe jeweils aus der Reihe Oxetanyl, Thietanyl, Furyl, Tetrahydrofuryl, Thienyl, Tetrahydrothienyl ausgewählt ist.
- R²: steht bevorzugt für Wasserstoff, Cyano, Fluor, Chlor, Brom, für jeweils gegebenenfalls durch Cyano, Fluor, Chlor, Methoxy oder Ethoxy substituiertes Methyl, Ethyl, n- oder i-Propyl, n-, i-, s- oder t-Butyl, Methoxy, Ethoxy, n- oder i-Propoxy, Methoxycarbonyl, Ethoxycarbonyl, n- oder i-Propoxycarbonyl, Methylthio, Ethylthio, n- oder i-Propylthio, Methylsulfmyl, Ethylsulfinyl, Methylsulfonyl oder Ethylsulfonyl, oder für jeweils gegebenenfalls durch Cyano, Fluor oder Chlor substituiertes Propenyl, Butenyl, Propinyl, Butinyl, Propenyloxy, Butenyloxy, Propinyloxy oder Butinyloxy.
- R³: steht bevorzugt für Wasserstoff, Hydroxy, Mercapto, Amino, Cyano, Fluor, Chlor, Brom, für jeweils gegebenenfalls durch Fluor, Chlor, Cyano, Methoxy, Ethoxy, n- oder i-Propoxy, Acetyl, Propionyl, n- oder i-Buyroyl, Methoxycarbonyl, Ethoxycarbonyl, n- oder i-Propoxy-carbonyl substituiertes Methyl, Ethyl, n- oder i-Propyl, n-, i-, s- oder t-Butyl, für jeweils gegebenenfalls durch Fluor, Chlor und/oder Brom substituiertes Ethenyl, Propenyl, Butenyl, Ethinyl, Propinyl oder Butinyl, für jeweils gegebenenfalls durch Fluor, Chlor, Cyano, Methoxy, Ethoxy, n- oder i-Propoxy, Methoxycarbonyl, Ethoxycarbonyl, n- oder i-Propoxy-carbonyl substituiertes Methoxy, Ethoxy, n- oder i-Propoxy, n-, i-, s- oder t-Butoxy, Methylthio, Ethylthio, n- oder i-Propylthio, n-, i-, s- oder t-Butylthio, Methylamino, Ethylamino, n- oder i-Propylamino, n-, i-, s- oder t-Butylamino, Acetylamino oder Propionylamino, für Propenyloxy, Butenyloxy, Ethinyloxy, Propinyloxy, Butinyloxy, Propenylthio, Butenylthio, Propinylthio, Butinylthio, Propenylamino, Butenylamino, Propinylamino oder Butinylamino, für Dimethylamino, Diethylamino oder Dipropylamino, für jeweils gegebenenfalls durch Fluor, Chlor, Methyl und/oder Ethyl substituiertes Cyclopropyl, Cyclobutyl, Cyclopentyl, Cyclohexyl, Cyclopentenyl, Cyclohexenyl, Cyclopropyloxy, Cyclobutyloxy, Cyclopentyloxy, Cyclohexyloxy, Cyclopropylthio, Cyclobutylthio, Cyclopentylthio, Cyclohexylthio, Cyclopropylamino, Cyclobutylamino, Cyclopentylamino, Cyclohexylamino, Cyclopropylmethyl, Cyclobutylmethyl, Cyclopentylmethyl, Cyclohexylmethyl, Cyclopropylmethoxy, Cyclobutylmethoxy, Cyclopentylmethoxy, Cyclohexylmethoxy, Cyclopropylmethylthio, Cyclobutylmethylthio, Cyclopentylmethylthio, Cyclohexylmethylthio, Cyclopropylmethylamino, Cyclobutylmethylamino, Cyclopentylmethylamino oder Cyclohexylmethylamino, oder für jeweils gegebenenfalls durch Fluor, Chlor, Brom, Methyl, Trifluormethyl, Methoxy oder Methoxy-carbonyl substituiertes Phenyl, Benzyl, Phenoxy, Benzyloxy, Phenylthio, Benzylthio, Phenylamino oder Benzylamino.
- R⁴: steht bevorzugt für Wasserstoff, Hydroxy, Amino, für jeweils gegebenenfalls durch Fluor, Chlor, Cyano, Methoxy oder Ethoxy substituiertes Methyl, Ethyl, n- oder i-Propyl, n-, i-, s- oder t-Butyl, für jeweils gegebenenfalls durch Fluor, Chlor und/oder Brom substituiertes Ethenyl, Propenyl, Butenyl, Propinyl oder Butinyl, für jeweils gegebenenfalls durch Fluor, Chlor, Cyano, Methoxy oder Ethoxy substituiertes Methoxy, Ethoxy, n- oder i-Propoxy, n-, i-, s- oder t-Butoxy, Methylamino, Ethylamino, n- oder i-Propylamino, n-, i-, s- oder t-Butylamino, für Propenyloxy oder Butenyloxy, für Dimethylamino oder Diethylamino, für jeweils gegebenenfalls durch Fluor, Chlor, Methyl und/oder Ethyl substituiertes Cyclopropyl, Cyclobutyl, Cyclopentyl, Cyclohexyl, Cyclopropylamino, Cyclobutylamino, Cyclopentylamino, Cyclohexylamino, Cyclopropylmethyl, Cyclobutylmethyl, Cyclopentylmethyl oder Cyclohexylmethyl, oder für jeweils gegebenenfalls durch Fluor, Chlor, Methyl, Trifluormethyl und/oder Methoxy substituiertes Phenyl oder Benzyl.
- R³ und R⁴: stehen auch bevorzugt zusammen für Trimethylen (Propan-1,3-diyl), Tetramethylen (Butan-1,4-diyl) oder Pentamethylen (Pentan-1,5-diyl).
- Q¹: steht besonders bevorzugt für O (Sauerstoff).
- Q²: steht besonders bevorzugt für O (Sauerstoff).
- R¹: steht besonders bevorzugt für jeweils gegebenenfalls durch Fluor, Chlor, Methoxy oder Ethoxy substituiertes Methyl, Ethyl, n- oder i-Propyl.
- R²: steht besonders bevorzugt für Fluor, Chlor, Brom oder für jeweils gegebenenfalls durch Fluor, Chlor, Methoxy oder Ethoxy substituiertes Methyl, Ethyl, n- oder i-Propyl.
- R³: steht besonders bevorzugt für Wasserstoff, Chlor, Brom, für jeweils gegebenenfalls durch Fluor, Chlor, Methoxy, Ethoxy, n- oder i-Propoxy substituiertes Methyl, Ethyl, n- oder i-Propyl, für jeweils gegebenenfalls durch Fluor oder Chlor substituiertes Ethenyl, Propenyl, Butenyl, Propinyl oder Butinyl, für jeweils gegebenenfalls durch Fluor, Chlor, Methoxy, Ethoxy, n- oder i-Propoxy substituiertes Methoxy, Ethoxy, n- oder i-Propoxy, Methylthio, Ethylthio, n- oder i-Propylthio, Methylamino, Ethylamino, n- oder i-Propylamino, für Propenyloxy, Propinyloxy, Propenylthio, Propinylthio, Propenylamino oder Propinylamino, für Dimethylamino oder Diethylamino, für jeweils gegebenenfalls durch Fluor, Chlor oder Methyl substituiertes Cyclopropyl, Cyclopropyloxy, Cyclopropylmethyl oder Cyclopropylmethoxy.
- R⁴: steht besonders bevorzugt für jeweils gegebenenfalls durch Fluor, Chlor, Methoxy oder Ethoxy substituiertes Methyl, Ethyl, n- oder i-Propyl, für jeweils gegebenenfalls durch Fluor oder Chlor substituiertes Ethenyl, Propenyl oder Propinyl, für jeweils gegebenenfalls durch Fluor, Chlor, Methoxy oder Ethoxy substituiertes Methoxy, Ethoxy, n- oder i-Propoxy, für Methylamino, oder für Cyclopropyl.
- R¹ und R²: stehen am meisten bevorzugt für Methyl, Ethyl, n- oder i-Propyl.

Als bevorzugte Wirkstoff-Komponenten der Gruppe 1 sind insbesondere auch die Natrium-, Kalium-, Magnesium-, Calcium-, Ammonium-, C₁-C₄-Alkyl-ammonium-, Di-(C₁-C₄-alkyl)-ammonium-, Tri-(C₁-C₄-alkyl)-ammonium-, Tetra-(C₁-C₄-alkyl)-ammonium, Tri-(C₁-C₄-alkyl)-sulfonium-, C₅- oder C₆-Cycloalkyl-ammonium- und Di-(C₁-C₂-alkyl)-benzyl-ammonium-Salze von Verbindungen der Formel (I), in welcher Q¹, Q², R¹, R², R³ und R⁴ die oben vorzugsweise angegebenen Bedeutungen haben, hervorzuheben.

Beispiele für die als erfindungsgemäße Wirkstoff-Komponenten ganz besonders bevorzugten Verbindungen der Formel (I) sind in der nachstehenden Tabelle 1 aufgeführt.

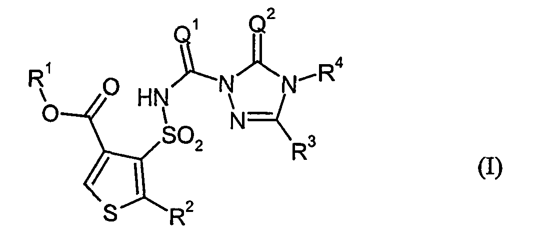

**Tabelle 1: Beispiele für die Verbindungen der Formel (I)**

| Bsp.- Nr. | Q¹ | Q² | R¹ | R² | R³ | R⁴ | Schmelzpunkt (°C) |
|---|---|---|---|---|---|---|---|
| I-1 | O | O | CH₃ | CH₃ | OC₂H₅ | CH₃ | 163 |
| I-2 | O | O | CH₃ | CH₃ | OCH₃ | CH₃ | 201 |
| I-3 | O | O | CH₃ | CH₃ | OC₃H₇-n | CH₃ | 156 |
| I-4 | O | O | CH₃ | CH₃ | OC₃H₇-i | CH₃ | 150 |
| I-5 | O | O | CH₃ | CH₃ | OCH₃ | 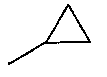 | 218 |
| I-6 | O | O | CH₃ | CH₃ | OC₂H₅ | 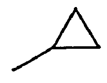 | 170 |
| I-7 | O | O | CH₃ | CH₃ | OC₃H₇-n | 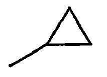 | 156 |
| I-8 | O | O | CH₃ | CH₃ | OC₃H₇-i | 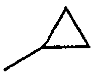 | 188 |
| I-9 | O | O | CH₃ | CH₃ | 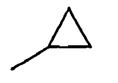 | 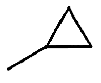 | 200 |
| I-10 | O | O | CH₃ | CH₃ | CH₃ | CH₃ | 178 |
| I-11 | O | O | CH₃ | CH₃ | C₂H₅ | CH₃ | 161 |
| I-12 | O | O | CH₃ | CH₃ | SCH₃ | CH₃ | 183 |
| I-13 | O | O | C₂H₅ | CH₃ | OCH₃ | CH₃ | 176 |
| I-14 | O | O | CH₃ | CH₃ | CH₂OCH | 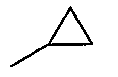 | 185 |
| I-15 | O | O | C₂H₅ | CH₃ | OC₂H₅ | CH₃ | 172 |
| I-16 | O | O | C₂H₅ | CH₃ | OCH₃ | 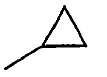 | 173 |
| I-17 | O | O | CH₃ | CH₃ | C₂H₅ | OC₂H₅ | 183 |
| I-18 | O | O | CH₃ | CH₃ | C₂H₅ | 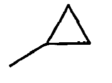 | 175 |

Auch die Natriumsalze der Verbindungen aus Tabelle 1 seien als erfindungsgemäße Wirkstoff-Komponenten ganz besonders hervorgehoben.

Bevorzugte Bedeutungen der oben in Zusammenhang mit den die Kulturpflanzen-Verträglichkeit verbessernden Verbindungen ("Herbizid-Safenern") der Formeln (IIa), (IIb), (IIc), (IId) und (IIe) aufgeführten Gruppen werden im Folgenden definiert.
- n: steht bevorzugt für die Zahlen 0, 1, 2, 3 oder 4.
- A²: steht bevorzugt für jeweils gegebenenfalls durch Methyl, Ethyl, Methoxycarbonyl oder Ethoxy-carbonyl substituiertes Methylen oder Ethylen.
- R⁵: steht bevorzugt für Hydroxy, Mercapto, Amino, Methoxy, Ethoxy, n- oder i-Propoxy, n-, i-, s- oder t-Butoxy, Methylthio, Ethylthio, n- oder i-Propylthio, n-, i-, s- oder t-Butylthio, , Methylamino, Ethylamino, n- oder i-Propylamino, n-, i-, s- oder t-Butylamino, Dimethylamino oder Diethylamino.
- R⁶: steht bevorzugt für Hydroxy, Mercapto, Amino, Methoxy, Ethoxy, n- oder i-Propoxy, n-, i-, s- oder t-Butoxy, Methylthio, Ethylthio, n- oder i-Propylthio, n-, i-, s- oder t-Butylthio, , Methylamino, Ethylamino, n- oder i-Propylamino, n-, i-, s- oder t-Butylamino, Dimethylamino oder Diethylamino.
- R⁷: steht bevorzugt für jeweils gegebenenfalls durch Fluor, Chlor und/oder Brom substituiertes Methyl, Ethyl, n- oder i-Propyl.
- R⁸: steht bevorzugt für Wasserstoff, jeweils gegebenenfalls durch Fluor und/oder Chlor substituiertes Methyl, Ethyl, n- oder i-Propyl, n-, i-, s- oder t-Butyl, Propenyl, Butenyl, Propinyl oder Butinyl, Methoxymethyl, Ethoxymethyl, Methoxyethyl, Ethoxyethyl, Dioxolanylmethyl, Furyl, Furylmethyl, Thienyl, Thiazolyl, Piperidinyl, oder gegebenenfalls durch Fluor, Chlor, Methyl, Ethyl, n- oder i-Propyl, n-, i-, s- oder t-Butyl substituiertes Phenyl.
- R⁹: steht bevorzugt für Wasserstoff, jeweils gegebenenfalls durch Fluor und/oder Chlor substituiertes Methyl, Ethyl, n- oder i-Propyl, n-, i-, s- oder t-Butyl, Propenyl, Butenyl, Propinyl oder Butinyl, Methoxymethyl, Ethoxymethyl, Methoxyethyl, Ethoxyethyl, Dioxolanylinethyl, Furyl, Furylmethyl, Thienyl, Thiazolyl, Piperidinyl, oder gegebenenfalls durch Fluor, Chlor, Methyl, Ethyl, n- oder i-Propyl, n-, i-, s- oder t-Butyl substituiertes Phenyl, oder zusammen mit R⁸ für einen der Reste -CH₂-O-CH₂-CH₂- und -CH₂-CH₂-O-CH₂-CH₂-, die gegebenenfalls substituiert sind durch Methyl, Ethyl, Furyl, Phenyl, einen annellierten Benzolring oder durch zwei Substituenten, die gemeinsam mit dem C-Atom, an das sie gebunden sind, einen 5- oder 6-gliedrigen Carbocyclus bilden.
- R¹⁰: steht bevorzugt für Wasserstoff, Cyano, Fluor, Chlor, Brom, oder für jeweils gegebenenfalls durch Fluor, Chlor und/oder Brom substituiertes Methyl, Ethyl, n- oder i-Propyl, Cyclopropyl, Cyclobutyl, Cyclopentyl, Cyclohexyl oder Phenyl.
- R¹¹: steht bevorzugt für Wasserstoff, gegebenenfalls durch Hydroxy, Cyano, Fluor, Chlor, Methoxy, Ethoxy, n- oder i-Propoxy substituiertes Methyl, Ethyl, n- oder i-Propyl, n-, i-, s- oder t-Butyl.
- R¹²: steht bevorzugt für Wasserstoff, Cyano, Fluor, Chlor, Brom, oder für jeweils gegebenenfalls durch Fluor, Chlor und/oder Brom substituiertes Methyl, Ethyl, n- oder i-Propyl, n-, i-, s- oder t-Butyl, Cyclopropyl, Cyclobutyl, Cyclopentyl, Cyclohexyl oder Phenyl.
- X¹: steht bevorzugt für Nitro, Cyano, Fluor, Chlor, Brom, Methyl, Ethyl, n- oder i-Propyl, n-, i-, s- oder t-Butyl, Difluormethyl, Dichlormethyl, Trifluormethyl, Trichlormethyl, Chlordifluormethyl, Fluordichlormethyl, Methoxy, Ethoxy, n-oder i-Propoxy, Difluormethoxy oder Trifluormethoxy.
- X²: steht bevorzugt für Wasserstoff, Nitro, Cyano, Fluor, Chlor, Brom, Methyl, Ethyl, n- oder i-Propyl, n-, i-, s- oder t-Butyl, Difluormethyl, Dichlormethyl, Trifluormethyl, Trichlormethyl, Chlordifluormethyl, Fluordichlormethyl, Methoxy, Ethoxy, n- oder i-Propoxy, Difluormethoxy oder Trifluormethoxy.
- X³: steht bevorzugt für Wasserstoff, Nitro, Cyano, Fluor, Chlor, Brom, Methyl, Ethyl, n- oder i-Propyl, n-, i-, s- oder t-Butyl, Difluormethyl, Dichlormethyl, Trifluormethyl, Trichlormethyl, Chlordifluormethyl, Fluordichlormethyl, Methoxy, Ethoxy, n- oder i-Propoxy, Difluormethoxy oder Trifluormethoxy.
- R ¹³: steht bevorzugt für Wasserstoff, Methyl, Ethyl, n- oder i-Propyl.
- R ¹⁴: steht bevorzugt für Wasserstoff, Methyl, Ethyl, n- oder i-Propyl.
- R¹⁵: steht bevorzugt für Wasserstoff, jeweils gegebenenfalls durch Cyano, Fluor, Chlor, Methoxy, Ethoxy, n- oder i-Propoxy substituiertes Methyl, Ethyl, n- oder i-Propyl, n-, i-, s- oder t-Butyl, Methoxy, Ethoxy, n- oder i-Propoxy, n-, i-, s- oder t-Butoxy, Methylthio, Ethylthio, n- oder i-Propylthio, n-, i-, s- oder t-Butylthio, Methylamino, Ethylamino, n- oder i-Propylamino, n-, i-, s- oder t-Butylamino, Dimethylamino oder Diethylamino, oder jeweils gegebenenfalls durch Cyano, Fluor, Chlor, Brom, Methyl, Ethyl, n- oder i-Propyl substituiertes Cyclopropyl, Cyclobutyl, Cyclopentyl, Cyclohexyl, Cyclopropyloxy, Cyclobutyloxy, Cyclopentyloxy, Cyclohexyloxy, Cyclopropylthio, Cyclobutylthio, Cyclopentylthio, Cyclohexylthio, Cyclopropylamino, Cyclobutylamino, Cyclopentylamino oder Cyclohexylamino.
- R¹⁶: steht bevorzugt für Wasserstoff, jeweils gegebenenfalls durch Cyano, Hydroxy, Fluor, Chlor, Methoxy, Ethoxy, n- oder i-Propoxy substituiertes Methyl, Ethyl, n- oder i-Propyl, n-, i- oder s-Butyl, jeweils gegebenenfalls durch Cyano, Fluor, Chlor oder Brom substituiertes Propenyl, Butenyl, Propinyl oder Butinyl, oder jeweils gegebenenfalls durch Cyano, Fluor, Chlor, Brom, Methyl, Ethyl, n- oder i-Propyl substituiertes Cyclopropyl, Cyclobutyl, Cyclopentyl oder Cyclohexyl.
- R¹⁷: steht bevorzugt für Wasserstoff, jeweils gegebenenfalls durch Cyano, Hydroxy, Fluor, Chlor, Methoxy, Ethoxy, n- oder i-Propoxy substituiertes Methyl, Ethyl, n- oder i-Propyl, n-, i- oder s-Butyl, jeweils gegebenenfalls durch Cyano, Fluor, Chlor oder Brom substituiertes Propenyl, Butenyl, Propinyl oder Butinyl, jeweils gegebenenfalls durch Cyano, Fluor, Chlor, Brom, Methyl, Ethyl, n- oder i-Propyl substituiertes Cyclopropyl, Cyclobutyl, Cyclopentyl oder Cyclohexyl, oder gegebenenfalls durch Nitro, Cyano, Fluor, Chlor, Brom, Methyl, Ethyl, n- oder i-Propyl, n-, i-, s- oder t-Butyl, Trifluormethyl, Methoxy, Ethoxy, n- oder i-Propoxy, Difluormethoxy oder Trifluormethoxy substituiertes Phenyl, oder zusammen mit R¹⁶ für jeweils gegebenenfalls durch Methyl oder Ethyl substituiertes Butan-1,4-diyl (Trimethylen), Pentan-1,5-diyl, 1-Oxa-butan-1,4-diyl oder 3-Oxa-pentan-1,5-diyl.
- X⁴: steht bevorzugt für Nitro, Cyano, Carboxy, Carbamoyl, Formyl, Sulfamoyl, Hydroxy, Amino, Fluor, Chlor, Brom, Methyl, Ethyl, n- oder i-Propyl, n-, i-, s- oder t-Butyl, Trifluormethyl, Methoxy, Ethoxy, n- oder i-Propoxy, Difluormethoxy oder Trifluormethoxy.
- X⁵: steht bevorzugt für Nitro, Cyano, Carboxy, Carbamoyl, Formyl, Sulfamoyl, Hydroxy, Amino, Fluor, Chlor, Brom, Methyl, Ethyl, n- oder i-Propyl, n-, i-, s- oder t-Butyl, Trifluormethyl, Methoxy, Ethoxy, n- oder i-Propoxy, Difluormethoxy oder Trifluormethoxy.

Beispiele für die als erfindungsgemäße Herbizid-Safener ganz besonders bevorzugten Verbindungen der Formel (IIa) sind in der nachstehenden Tabelle 2 aufgeführt.

**Tabelle 2: Beispiele für die Verbindungen der Formel (IIa)**

| | | | |
|---|---|---|---|
| 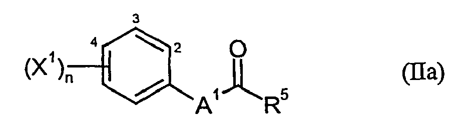 | | | |

| Beispiel- Nr. | (Positionen) (X¹)ₙ | A¹ | R⁵ |
|---|---|---|---|
| IIa-2 | (2) Cl, (4) Cl | 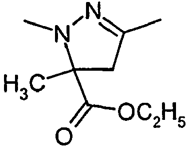 | OCH₃ |
| IIa-3 | (2) Cl, (4) Cl | 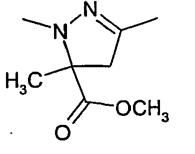 | OC₂H₅ |
| IIa-4 | (2) Cl, (4) Cl | 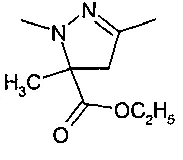 | OC₂H₅ |
| IIa-5 | (2) Cl | 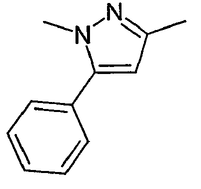 | OCH₃ |
| IIa-6 | (2) Cl, (4) Cl | 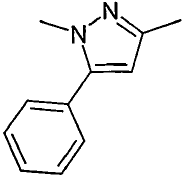 | OCH₃ |
| IIa-7 | (2) F | 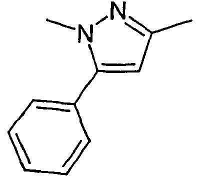 | OCH₃ |
| IIa-8 | (2) F | 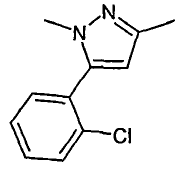 | OCH₃ |
| IIa-9 | (2) Cl, (4) Cl | 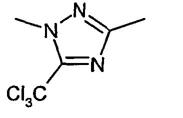 | OC₂H₅ |
| IIa-10 | (2) Cl, (4) CF₃ | 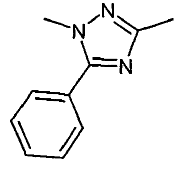 | OCH₃ |
| IIa-11 | (2) Cl | 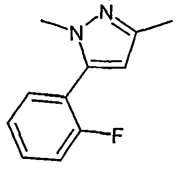 | OCH₃ |
| IIa-12 | - | 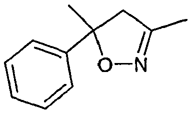 | OC₂H₅ |
| IIa-13 | (2) Cl, (4) Cl | 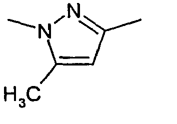 | OC₂H₅ |
| IIa-14 | (2) Cl, (4) Cl | 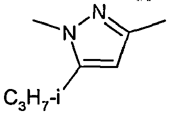 | OC₂H₅ |
| IIa-15 | (2) Cl, (4) Cl | 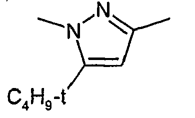 | OC₂H₅ |
| IIa-16 | (2) Cl, (4) Cl | 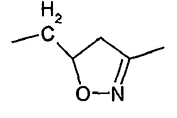 | OC₂Hs |
| IIa-17 | (2) Cl, (4) Cl | 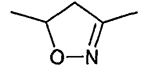 | OC₂H₅ |

Beispiele für die als erfindungsgemäße Herbizid-Safener ganz besonders bevorzugten Verbindungen der Formel (IIb) sind in der nachstehenden Tabelle 3 aufgeführt.

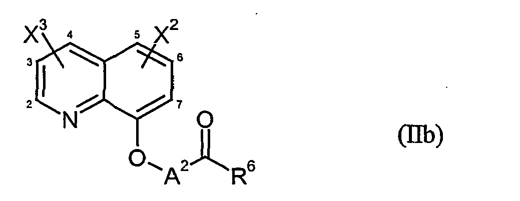

**Tabelle 3: Beispiele für die Verbindungen der Formel (IIb)**

| Beispiel- Nr. | (Position) X² | (Position) X³ | A² | R⁶ |
|---|---|---|---|---|
| IIb-1 | (5) | - | CH₂ | OH |
| | Cl | | | |
| IIb-2 | (5) | - | CH₂ | OCH₃ |
| | Cl | | | |
| IIb-3 | (5) | - | CH₂ | OC₂H₅ |
| | Cl | | | |
| IIb-4 | (5) | - | CH₂ | OC₃H₇-n |
| | Cl | | | |
| IIb-5 | (5) | - | CH₂ | OC₃H₇-i |
| | Cl | | | |
| IIb-6 | (5) | - | CH₂ | OC₄H₉-n |
| | Cl | | | |
| IIb-7 | (5) | - | CH₂ | OCH(CH₃)C₅H₁₁-n |
| | Cl | | | |
| IIb-8 | (5) | (2) F | CH₂ | OH |
| | Cl | | | |
| IIb-9 | (5) | (2) Cl | CH₂ | OH |
| | Cl | | | |
| IIb-10 | (5) | - | CH₂ | OCH₂CH=CH₂ |
| | Cl | | | |
| IIb-11 | (5) | - | CH₂ | OC₄H₉-i |
| | Cl | | | |
| IIb-12 | (5) | - | CH₂ | 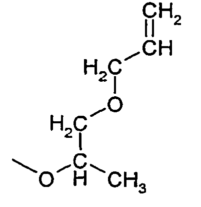 |
| | Cl | | | |
| IIb-13 | (5) | - | 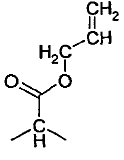 | OCH₂CH=CH₂ |
| | Cl | | | |
| IIb-14 | (5) | - | 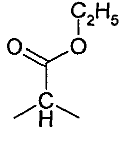 | OC₂H₅ |
| | Cl | | | |

Beispiele für die als erfindungsgemäße Herbizid-Safener ganz besonders bevorzugten Verbindungen der Formel (IIc) sind in der nachstehenden Tabelle 4 aufgeführt.

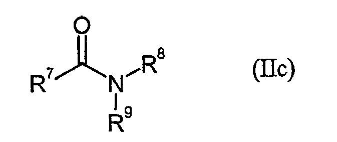

**Tabelle 4: Beispiele für die Verbindungen der Formel (IIc)**

| Beispiel- Nr | R⁷ | N(R⁸,R⁹) |
|---|---|---|
| IIc-1 | CHCl₂ | N(CH₂CH=CH₂)₂ |
| IIc-2 | CHCl₂ | 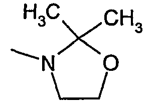 |
| IIc-3 | CHCl₂ | 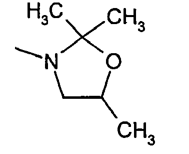 |
| IIc-4 | CHCl₂ | 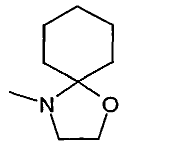 |
| IIc-5 | CHCl₂ | 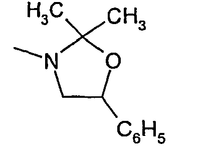 |
| IIc-6 | CHCl₂ | 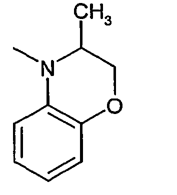 |
| IIc-7 | CHCl₂ | 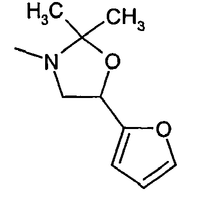 |

Beispiele für die als erfindungsgemäße Herbizid-Safener ganz besonders bevorzugten Verbindungen der Formel (IId) sind in der nachstehenden Tabelle 5 aufgeführt.

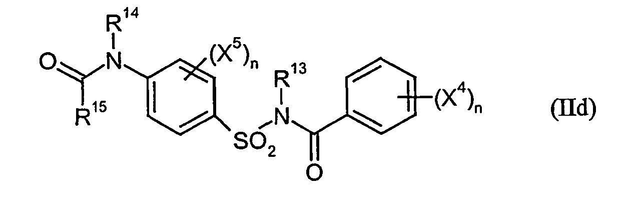

**Tabelle 5: Beispiele für die Verbindungen der Formel (IId)**

| Beispiel- Nr. | R¹³ | R¹⁴ | R¹⁵ | (Positionen) (X⁴)ₙ | (Positionen) (X⁵)ₙ |
|---|---|---|---|---|---|
| IId-1 | H | H | CH₃ | (2) OCH₃ | - |
| IId-2 | H | H | C₂H₅ | (2) OCH₃ | - |
| IId-3 | H | H | C₃H₇-n | (2) OCH₃ | - |
| IId-4 | H | H | C₃H₇-i | (2) OCH₃ | - |
| IId-5 | H | H | 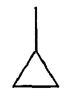 | (2) OCH₃ | - |
| IId-6 | H | H | CH₃ | (2) OCH₃ | - |
| | | | | (5) CH₃ | |
| IId-7 | H | H | C₂H₅ | (2) OCH₃ | - |
| | | | | (5) CH₃ | |
| IId-8 | H | H | C₃H₇-n | (2) OCH₃ | - |
| | | | | (5) CH₃ | |
| IId-9 | H | H | C₃H₇-i | (2) OCH₃ | - |
| | | | | (5) CH₃ | |
| IId-10 | H | H | 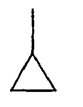 | (2) OCH₃ | - |
| | | | | (5) CH₃ | |
| IId-11 | H | H | OCH₃ | (2) OCH₃ | - |
| | | | | (5) CH₃ | |
| IId-12 | H | H | OC₂H₅ | (2) OCH₃ | - |
| | | | | (5) CH₃ | |
| IId-13 | H | H | OC₃H₇-i | (2) OCH₃ | - |
| | | | | (5) CH₃ | |
| IId-14 | H | H | SCH₃ | (2) OCH₃ | - |
| | | | | (5) CH₃ | |
| IId-15 | H | H | SC₂H₅ | (2) OCH₃ | - |
| | | | | (5) CH₃ | |
| IId-16 | H | H | SC₃H₇-i | (2) OCH₃ | - |
| | | | | (5) CH₃ | |
| IId-17 | H | H | NHCH₃ | (2) OCH₃ | - |
| | | | | (5) CH₃ | |
| IId-18 | H | H | NHC₂H₅ | (2) OCH₃ | - |
| | | | | (5) CH₃ | |
| IId-19 | H | H | NHC₃H₇-i | (2) OCH₃ | - |
| | | | | (5) CH₃ | |
| IId-20 | H | H | 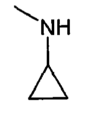 | (2) OCH₃ | - |
| | | | | (5) CH₃ | |
| IId-21 | H | H | NHCH₃ | (2) OCH₃ | - |
| IId-22 | H | H | NHC₃H₇-i | (2) OCH₃ | - |
| IId-23 | H | H | N(CH₃)₂ | (2) OCH₃ | - |
| IId-24 | H | H | N(CH₃)₂ | (3) CH₃ | - |
| | | | | (4) CH₃ | |
| IId-25 | H | H | CH₂OCH₃ | (2) OCH₃ | - |
| IId-26 | H | H | CH₂OCH₃ | (2) OCH₃ | - |
| | | | | (5) CH₃ | |

Beispiele für die als erfindungsgemäße Herbizid-Safener ganz besonders bevorzugten Verbindungen der Formel (IIe) sind in der nachstehenden Tabelle 6 aufgeführt.

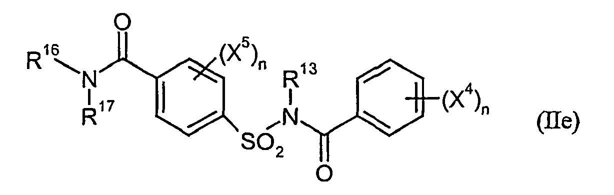

**Tabelle 6: Beispiele für die Verbindungen der Formel (IIe)**

| Beispiel- Nr. | R¹³ | R¹⁶ | R¹⁷ | (Positionen) (X⁴)ₙ | (Positionen) (X⁵)ₙ |
|---|---|---|---|---|---|
| IIe-1 | H | H | CH₃ | (2) OCH₃ | - |
| IIe-2 | H | H | C₂H₅ | (2) OCH₃ | - |
| IIe-3 | H | H | C₃H₇-n | (2) OCH₃ | - |
| IIe-4 | H | H | C₃H₇-i | (2) OCH₃ | - |
| IIe-5 | H | H | 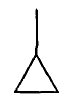 | (2) OCH₃ | - |
| IIe-6 | H | CH₃ | CH₃ | (2) OCH₃ | - |
| IIe-7 | H | H | CH₃ | (2) OCH₃ | - |
| | | | | (5) CH₃ | |
| IIe-8 | H | H | C₂H₅ | (2) OCH₃ | - |
| | | | | (5) CH₃ | |
| IIe-9 | H | H | C₃H₇-n | (2) OCH₃ | - |
| | | | | (5) CH₃ | |
| IIe-10 | H | H | C₃H₇-i | (2) OCH₃ | - |
| | | | | (5) CH₃ | |
| IIe-11 | H | H | 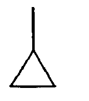 | (2) OCH₃ | - |
| | | | | (5) CH₃ | |
| IIe-12 | H | CH₃ | CH₃ | (2) OCH₃ | - |
| | | | | (5) CH₃ | |
| IIe-13 | H | H | CH₂CH=CH₂ | (2) OCH₃ | - |
| IIe-14 | H | H | CH₂CH=CH₂ | (2) OCH₃ | - |
| | | | | (5) CH₃ | |
| IIe-15 | H | H | 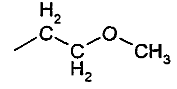 | (2) OCH₃ | - |
| IIe-16 | H | H | 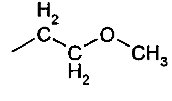 | (2) OCH₃ | - |
| | | | | (5) CH₃ | |
| IIe-17 | H | H | 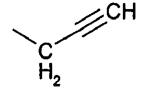 | (2) OCH₃ | - |
| IIe-18 | H | H | 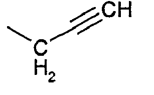 | (2) OCH₃ | - |
| | | | | (5) CH₃ | |
| IIe-19 | H | H | 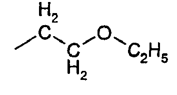 | (2) OCH₃ | - |
| IIe-20 | H | H | 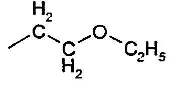 | (2) OCH₃ | - |
| | | | | (5) CH₃ | |

Die als Safener erfindungsgemäß zu verwendenden Verbindungen der allgemeinen Formel (IIa) sind bekannt und/oder können nach an sich bekannten Verfahren hergestellt werden (vgl. WO-A-91/07874, WO-A-95/07897).

Die als Safener erfindungsgemäß zu verwendenden Verbindungen der allgemeinen Formel (IIb) sind bekannt und/oder können nach an sich bekannten Verfahren hergestellt werden (vgl. EP-A-191736).

Die als Safener erfindungsgemäß zu verwendenden Verbindungen der allgemeinen Formel (IIc) sind bekannt und/oder können nach an sich bekannten Verfahren hergestellt werden (vgl. DE-A-2218097, DE-A-2350547).

Die als Safener erfindungsgemäß zu verwendenden Verbindungen der allgemeinen Formel (IId) sind bekannt und/oder können nach an sich bekannten Verfahren hergestellt werden (vgl. DE-A-19621522 / US-A-6235680 / WO 97/45016).

Die als Safener erfindungsgemäß zu verwendenden Verbindungen der allgemeinen Formel (IIe) sind bekannt und/oder können nach an sich bekannten Verfahren hergestellt werden (vgl. WO-A-99/66795 / US-A-6251827).

Beispiele für die erfindungsgemäßen selektiv herbiziden Kombinationen aus jeweils einem Wirkstoff der Formel (I) und jeweils einem der oben definierten Safener sind in der nachstehenden Tabelle 7 aufgeführt.

**Tabelle 7: Beispiele für die erfindungsgemäßen Kombinationen**

| Wirkstoff der Formel (I) | Safener |
|---|---|
| I-1 | AD-67 |
| I-1 | Cloquintocet-mexyl |
| I-1 | Dichlormid |
| I-1 | Fenchlorazole-ethyl |
| I-1 | Isoxadifen-ethyl |
| I-1 | Mefenpyr-diethyl |
| I-1 | MON-7400 |
| I-1 | Flurazole |
| I-1 | Furilazole |
| I-1 | IId-25 |
| I-1 | IIe-11 |
| I-2 | AD-67 |
| I-2 | Cloquintocet-mexyl |
| I-2 | Dichlormid |
| I-2 | Fenchlorazole-ethyl |
| I-2 | Isoxadifen-ethyl |
| I-2 | Mefenpyr-diethyl |
| I-2 | MON-7400 |
| I-2 | Flurazole |
| I-2 | Furilazole |
| I-2 | IId-25 |
| I-2 | IIe-11 |
| I-3 | AD-67 |
| I-3 | Cloquintocet-mexyl |
| I-3 | Dichlormid |
| I-3 | Fenchlorazole-ethyl |
| I-3 | Isoxadifen-ethyl |
| I-3 | Mefenpyr-diethyl |
| I-3 | MON-7400 |
| I-3 | Flurazole |
| I-3 | Furilazole |
| I-3 | IId-25 |
| I-3 | IIe-11 |
| I-4 | AD-67 |
| I-4 | Cloquintocet-mexyl |
| I-4 | Dichlormid |
| I-4 | Fenchlorazole-ethyl |
| I-4 | Isoxadifen-ethyl |
| I-4 | Mefenpyr-diethyl |
| I-4 | MON-7400 |
| I-4 | Flurazole |
| I-4 | Furilazole |
| I-4 | IId-25 |
| I-4 | IIe-11 |
| I-5 | AD-67 |
| I-5 | Cloquintocet-mexyl |
| I-5 | Dichlormid |
| I-5 | Fenchlorazole-ethyl |
| I-5 | Isoxadifen-ethyl |
| I-5 | Mefenpyr-diethyl |
| I-5 | MON-7400 |
| I-5 | Flurazole |
| I-5 | Furilazole |
| I-5 | IId-25 |
| I-5 | IIe-11 |
| I-6 | AD-67 |
| I-6 | Cloquintocet-mexyl |
| I-6 | Dichlormid |
| I-6 | Fenchlorazole-ethyl |
| I-6 | Isoxadifen-ethyl |
| I-6 | Mefenpyr-diethyl |
| I-6 | MON-7400 |
| I-6 | Flurazole |
| I-6 | Furilazole |
| I-6 | IId-25 |
| I-6 | IIe-11 |
| I-7 | AD-67 |
| I-7 | Cloquintocet-mexyl |
| I-7 | Dichlormid |
| I-7 | Fenchlorazole-ethyl |
| I-7 | Isoxadifen-ethyl |
| I-7 | Mefenpyr-diethyl |
| I-7 | MON-7400 |
| I-7 | Flurazole |
| I-7 | Furilazole |
| I-7 | IId-25 |
| I-7 | IIe-11 |
| I-8 | AD-67 |
| I-8 | Cloquintocet-mexyl |
| I-8 | Dichlormid |
| I-8 | Fenchlorazole-ethyl |
| I-8 | Isoxadifen-ethyl |
| I-8 | Mefenpyr-diethyl |
| I-8 | MON-7400 |
| I-8 | Flurazole |
| I-8 | Furilazole |
| I-8 | IId-25 |
| I-8 | IIe-11 |
| I-9 | AD-67 |
| I-9 | Cloquintocet-mexyl |
| I-9 | Dichlormid |
| I-9 | Fenchlorazole-ethyl |
| I-9 | Isoxadifen-ethyl |
| I-9 | Mefenpyr-diethyl |
| I-9 | MON-7400 |
| I-9 | Flurazole |
| I-9 | Furilazole |
| I-9 | IId-25 |
| I-9 | IIe-11 |
| I-10 | AD-67 |
| I-10 | Cloquintocet-mexyl |
| I-10 | Dichlormid |
| I-10 | Fenchlorazole-ethyl |
| I-10 | Isoxadifen-ethyl |
| I-10 | Mefenpyr-diethyl |
| I-10 | MON-7400 |
| I-10 | Flurazole |
| I-10 | Furilazole |
| I-10 | IId-25 |
| I-10 | IIe-11 |
| I-11 | AD-67 |
| I-11 | Cloquintocet-mexyl |
| I-11 | Dichlormid |
| I-11 | Fenchlorazole-ethyl |
| I-11 | Isoxadifen-ethyl |
| I-11 | Mefenpyr-diethyl |
| I-11 | MON-7400 |
| I-11 | Flurazole |
| I-11 | Furilazole |
| I-11 | IId-25 |
| I-11 | IIe-11 |
| I-12 | AD-67 |
| I-12 | Cloquintocet-mexyl |
| I-12 | Dichlormid |
| I-12 | Fenchlorazole-ethyl |
| I-12 | Isoxadifen-ethyl |
| I-12 | Mefenpyr-diethyl |
| I-12 | MON-7400 |
| I-12 | Flurazole |
| I-12 | Furilazole |
| I-12 | IId-25 |
| I-12 | IIe-1 |
| I-13 | Mefenpyr-diethyl |
| I-2, Natriumsalz | IId-25 |
| I-15 | Mefenpyr-diethyl |
| I-16 | Mefenpyr-diethyl |
| I-17 | Mefenpyr-diethyl |
| I-14 | Mefenpyr-diethyl |
| I-18 | Mefenpyr-diethyl |

Es wurde nun überraschend gefunden, dass die oben definierten Wirkstoffkombinationen aus substituierten Thien-3-yl-sulfonylamino(thio)carbonyl-triazolin(thi)onen der allgemeinen Formel (I) und/oder ihren Salzen und Safenern (Antidots) aus der oben aufgeführten Gruppe (2) bei sehr guter Nutzpflanzen-Verträglichkeit eine besonders hohe herbizide Wirksamkeit aufweisen und in verschiedenen Kulturen, insbesondere in Getreide (vor allem Weizen) und Mais, aber auch in Reis, Kartoffeln und Soja, zur selektiven Unkrautbekämpfung verwendet werden können.

Dabei ist es als überraschend anzusehen, dass aus einer Vielzahl von bekannten Safenern oder Antidots, die befähigt sind, die schädigende Wirkung eines Herbizids auf die Kulturpflanzen zu antagonisieren, gerade die oben aufgeführten Verbindungen der Gruppe (2) geeignet sind, die schädigende Wirkung von substituierten Thien-3-yl-sulfonylamino(thio)carbonyl-triazolin(thi)onen auf die Kulturpflanzen annähernd vollständig aufzuheben, ohne dabei die herbizide Wirksamkeit gegenüber den Unkräutern zu beeinträchtigen.

Hervorgehoben sei hierbei die besonders vorteilhafte Wirk-ung der besonders und am meisten bevorzugten Kombinationspartner aus der Gruppe (2), insbesondere hinsichtlich der Schonung von Getreidepflanzen, wie z.B. Weizen, Gerste und Roggen, aber auch Mais und Reis, als Kulturpflanzen.

Die erfindungsgemäßen Wirkstoffkombinationen können z.B. bei den folgenden Pflanzen verwendet werden:
Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum.
Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cuburbita, Helianthus.
Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.
Monokotyle Kulturen der Gattungen: Oryza, Zea, Triticum, Triticale, Hordeum, Avena, Secale, Sorghum, Panicum, Saccharum, Ananas, Asparagus, Allium.

Die Verwendung der erfindungsgemäßen Wirkstoffkombinationen ist jedoch keineswegs auf diese Gattungen beschränkt, sondern erstreckt sich in gleicher Weise auch auf andere Pflanzen. Die Kulturpflanzen sind dabei erfindungsgemäß alle Pflanzen und Pflanzensorten einschließlich transgener Pflanzen und Pflanzensorten, wobei an transgenen Pflanzen und Pflanzensorten auch synergistische Effekte auftreten können.

Der vorteilhafte Effekt der Kulturpflanzen-Verträglichkeit der erfindungsgemäßen Wirkstoffkombinationen ist bei bestimmten Konzentrationsverhältnissen besonders stark ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff der Formel (I) oder seinen Salzen 0,001 bis 1000 Gewichtsteile, vorzugsweise 0,01 bis 100 Gewichtsteile, besonders bevorzugt 0,1 bis 50 Gewichtsteile und am meisten bevorzugt 1 bis 25 Gewichtsteile einer der oben bei Gruppe 2 genannten, die Kulturpflanzen Verträglichkeit verbessernden Verbindungen (Antidots/Safener).

Die Wirkstoffe bzw. Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

### Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengeln; als Emulgier- und/oder schaumerzeugende Mittel kommen in Frage: z.B. nicht-ionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent an Wirkstoffen einschließlich der safenden Wirkstoffe, vorzugsweise zwischen 0,5 und 90%.

Die erfindungsgemäßen Wirkstoffkombinationen werden im allgemeinen in Form von Fertigformulierungen zur Anwendung gebracht. Die in den Wirkstoffkombinationen enthaltenen Wirkstoffe können aber auch in Einzelformulierungen bei der Anwendung gemischt, d.h. in Form von Tankmischungen zur Anwendung gebracht werden.

Die neuen Wirkstoffkombinationen können als solche oder in ihren Formulierungen weiterhin auch in Mischung mit anderen bekannten Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstruktur-Verbesserungsmitteln ist möglich. Für bestimmte Anwendungszwecke, insbesondere im Nachauflauf-Verfahren, kann es ferner vorteilhaft sein, in die Formulierungen als weitere Zusatzstoffe pflanzenverträgliche mineralische oder vegetabilische Öle (z.B. das Handelspräparat "Rako Binol") oder Ammoniumsalze wie z.B. Ammoniumsulfat oder Ammoniumrhodanid aufzunehmen.

Die neuen Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die Aufwandmengen der erfindungsgemäßen Wirkstoffkombinationen können in einem gewissen Bereich variiert werden; sie hängen u.a. vom Wetter und von den Bodenfaktoren ab. Im allgemeinen liegen die Aufwandmengen zwischen 0,001 und 5 kg pro ha, vorzugsweise zwischen 0,001 und 1 kg pro ha, besonders bevorzugt zwischen 0,003 und 0,5 kg pro ha.

Die erfindungsgemäßen Wirkstoffkombinationen können vor und nach dem Auflaufen der Pflanzen appliziert werden, also im Vorauflauf und Nachauflauf-Verfahren.

### Anwendungsbeispiele:

Die Wirkstoff- bzw.- Safener-Komponenten werden jeweils in einigen ml (im Regelfall 2-3 ml) Lösungsmittel (im Regelfall Aceton oder N,N-Dimethyl-formamid) gelöst, die Lösungen vereinigt und dann - gegebenenfalls nach Zugabe eines Emulgators - mit Wasser auf die gewünschte Konzentration verdünnt. Es wurde im Regelfall eine wässrige Spritzbrühe mit 0,1 % des Additivs Renex-36 hergestellt.

### Beispiel A

### Post-emergence-Test

Die Testpflanzen werden unter kontrollierten Bedingungen (Temperatur, Licht, Luftfeuchte) im Gewächshaus aufgezogen. Die Spritzung wird durchgeführt, wenn die Testpflanzen eine Höhe von 5-15 cm erreicht haben. Die Konzentration der Spritzbrühe wird so gewählt, dass in 5001 Wasser/ha die jeweils gewünschten Wirkstoffmengen ausgebracht werden.

Nach der Spritzung werden die Töpfe mit den Testpflanzen in einer Gewächshauskammer bis zum Testende unter kontrollierten Bedingungen (Temperatur, Licht, Luftfeuchte) gehalten. Etwa drei Wochen nach der Applikation wird der Schädigungsgrad der Kulturpflanzen bonitiert in % Schädigung im Vergleich zur Entwicklung der unbehandelten Kontrolle.

Es bedeuten:
0 % = keine Schädigung (wie unbehandelte Kontrolle)
100 % = totale Vernichtung/Schädigung

Wirkstoffe, Aufwandmengen, Testpflanzen und Resultate gehen aus den nachfolgenden Tabellen hervor, wobei die in den Tabellen verwendeten Bezeichnungen die folgende Bedeutung haben:
Mais = Mais der Sorte "Pioneer"
a.i. = active ingredient = Wirkstoff/Safener

**Tabelle A1 post emergence Test/ Gewächshaus**

| Wirkstoff (+ Safener) | Aufwandmenge (g a.i./ha) | Schädigung Mais (in %) |
|---|---|---|
| I-2 | 10 | 35 |
| I-2 + AD-67 | 10 + 100 | 7 |
| I-2 + Cloquintocet-mexyl | 10 + 100 | 1,5 |
| I-2 + Dichlormid | 10 + 100 | 13,5 |
| I-2 + Fenchlorazole-ethyl | 10 + 100 | 12 |
| I-2 + Isoxadifen-ethyl | 10 + 100 | 4 |
| I-2 + Furilazole | 10 + 100 | 2,5 |
| I-2 + Flurazole | 10 + 100 | 4,5 |
| I-2 + IIe-11 | 10 + 100 | 2 |
| I-2 + MON-7400 | 10 + 100 | 1,5 |

### Beispiel A-2

### Post-emergence-Test

Es wurde hier eine wäßrige Spritzbrühe mit 0,5 % des Additivs Renex-36 hergestellt.

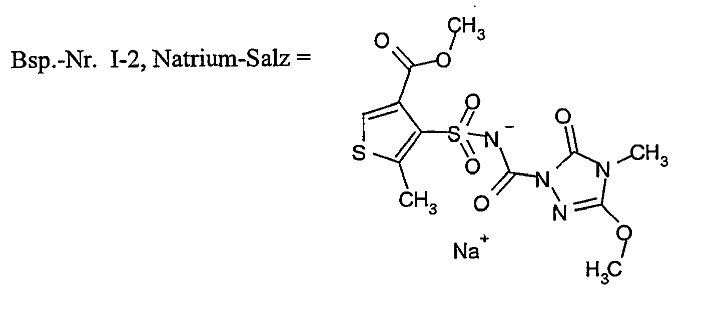

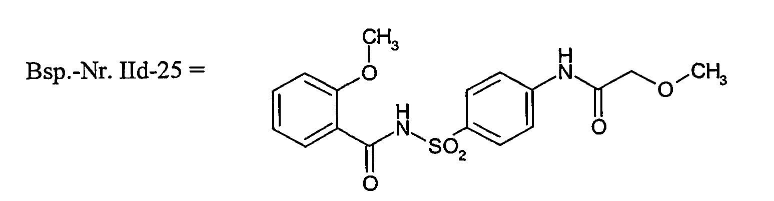

**Tabelle A-2-1 post emergence Test/ Gewächshaus**

| Wirkstoff (+ Safener) | Aufwandmenge (g a.i./ha) | Schädigung Wintergerste (in %) |
|---|---|---|
| I-2, Natrium-Salz | 4 | 60 |
| | 2 | 50 |
| I-2, Natrium-Salz + Verb.-Nr. IId- | 4+100 | 50 |
| 25 | 2+100 | 25 |
| | 4+30 | 50 |
| | 2+30 | 35 |

**Tabelle A-2-2 post emergence Test/ Gewächshaus**

| Safener | Aufwandmenge (g a.i./ha) | Schädigung Wintergerste (in %) |
|---|---|---|
| Verb.-Nr. IId-25 | 100 | 0 |
| | 30 | 0 |

### Beispiel A-3

### Post-emergence-Test

Die Verbindung 1-2 wurde als 10 WP eingesetzt. Marlipal^{®} wurde jeweils in einer Menge von 500 ml/ha zugesetzt.
Die Auswertung erfolgte bereits 7 Tage nach der Applikation.
Mais 1 = Mais der Sorte "Prinz"
Mais 2 = Mais der Sorte "Pioneer"
Mais 3 = Mais der Sorte "LIXIS"

**Tabelle A-3-1 post emergence Test/ Gewächshaus**

| Wirkstoff (+ Safener) | Aufwandmenge (g a.i./ha) | Schädigung Mais 1 (in %) |
|---|---|---|
| I-2 | 15 | 20 |
| | 8 | 10 |
| I-2 + Verb.-Nr. IId-25 | 15+100 | 5 |
| | 8+100 | 0 |

**Tabelle A-3-2 post emergence Test/ Gewächshaus**

| Wirkstoff (+ Safener) | Aufwandmenge (g a.i./ha) | Schädigung Mais 2 (in %) |
|---|---|---|
| I-2 | 15 | 40 |
| | 8 | 10 |
| I-2 + Verb.-Nr. IId-25 | 15+100 | 5 |
| | 8+100 | 5 |

**Tabelle A-3-3 post emergence Test/ Gewächshaus**

| Wirkstoff (+ Safener) | Aufwandmenge (g a.i./ha) | Schädigung Mais 3 (in %) |
|---|---|---|
| I-2 | 15 | 40 |
| | 8 | 20 |
| I-2 + Verb.-Nr. IId-25 | 15+100 | 20 |
| | 8+100 | 10 |
| | 15+50 | 10 |
| | 8+50 | 10 |

### Beispiel A-4

### Post-emergence-Test

Mefenpyr-diethyl wurde als 100 EC verwendet.
Die Verbindungen der Bsp.-Nr. 1-2 und I-13 als 10 WP.

**Tabelle A-4-1 post emergence Test/ Gewächshaus**

| Safener | Aufwandmenge (g a.i./ha) | Schädigung Winterweizen (in %) |
|---|---|---|
| Mefenpyr-diethyl | 50 | 0 |

**Tabelle A-4-2 post emergence Test/ Gewächshaus**

| Wirkstoff (+ Safener) | Aufwandmenge (g a.i./ha) | Schädigung Winterweizen (in %) |
|---|---|---|
| I-2 | 30 | 60 |
| | 15 | 40 |
| I-2 + Mefenpyr-diethyl | 30+50 | 10 |
| | 15+50 | 5 |

**Tabelle A-4-3 post emergence Test/ Gewächshaus**

| Wirkstoff (+ Safener) | Aufwandmenge (g a.i./ha) | Schädigung Winterweizen (in %) |
|---|---|---|
| I-13 | 125 | 30 |
| | 60 | 20 |
| I-13 + Mefenpyr-diethyl | 125+50 | 10 |
| | 60+50 | 5 |

**Tabelle A-4-4 post emergence Test/ Gewächshaus**

| Safener | Aufwandmenge (g a.i./ha) | Schädigung Wintergerste (in %) |
|---|---|---|
| Mefenpyr-diethyl | 50 | 0 |

**Tabelle A-4-5 post emergence Test/ Gewächshaus**

| Wirkstoff (+ Safener) | Aufwandmenge (g a.i./ha) | Schädigung Wintergerste (in %) |
|---|---|---|
| I-2 | 30 | 80 |
| | 15 | 70 |
| | 8 | 50 |
| I-2 + Mefenpyr-diethyl | 30+50 | 70 |
| | 15+50 | 40 |
| | 8+50 | 30 |

**Tabelle A-4-6 post emergence Test/ Gewächshaus**

| Wirkstoff (+ Safener) | Aufwandmenge (g a.i./ha) | Schädigung Wintergerste (in %) |
|---|---|---|
| I-13 | 125 | 80 |
| | 60 | 70 |
| | 30 | 50 |
| I-13 + Mefenpyr-diethyl | 125+50 | 60 |
| | 60+50 | 50 |
| | 30+50 | 30 |

### Beispiel A-5

### Post-emergence-Test

Mefenpyr-diethyl wurde als 100 EC und die Verbindung von Bsp.-Nr. 1-2 als 10 WP verwendet.

**Tabelle A-5-1 post emergence Test/ Gewächshaus**

| Wirkstoff (+ Safener) | Aufwandmenge (g a.i./ha) | Schädigung Winterweizen (in %) |
|---|---|---|
| I-2 | 30 | 60 |
| Mefenpyr-diethyl | 50 | 0 |
| I-2 + Mefenpyr-diethyl | 30+50 | 5 |

**Tabelle A-5-2 post emergence Test/ Gewächshaus**

| Wirkstoff (+ Safener) | Aufwandmenge (g a.i./ha) | Schädigung Winterweizen (in %) |
|---|---|---|
| I-13 | 125 | 50 |
| Mefenpyr-diethyl | 50 | 0 |
| I-13 + Mefenpyr-diethyl | 125+50 | 10 |

**Tabelle A-5-3 post emergence Test/ Gewächshaus**

| Wirkstoff (+ Safener) | Aufwandmenge (g a.i./ha) | Schädigung Winterweizen (in %) |
|---|---|---|
| I-15 | 60 | 80 |
| Mefenpyr-diethyl | 50 | 0 |
| I-15 + Mefenpyr-diethyl | 60+50 | 40 |

**Tabelle A-5-4 post emergence Test/ Gewächshaus**

| Wirkstoff (+ Safener) | Aufwandmenge (g a.i./ha) | Schädigung Winterweizen (in %) |
|---|---|---|
| I-16 | 60 | 25 |
| Mefenpyr-diethyl | 50 | 0 |
| I-16 + Mefenpyr-diethyl | 60+50 | 15 |

**Tabelle A-5-5 post emergence Test/ Gewächshaus**

| Safener | Aufwandmenge (g a.i./ha) | Schädigung Winterweizen (in %) |
|---|---|---|
| Mefenpyr-diethyl | 50 | 0 |

**Tabelle A-5-6 post emergence Test/ Gewächshaus**

| Wirkstoff (+ Safener) | Aufwandmenge (g a.i./ha) | Schädigung Winterweizen (in %) |
|---|---|---|
| I-2 | 30 | 40 |
| | 15 | 30 |
| | 8 | 20 |
| I-2 + Mefenpyr-diethyl | 30+50 | 20 |
| | 15+50 | 10 |
| | 8+50 | 10 |

**Tabelle A-5-7 post emergence Test/ Gewächshaus**

| Wirkstoff (+ Safener) | Aufwandmenge (g a.i./ha) | Schädigung Winterweizen (in %) |
|---|---|---|
| I-17 | 30 | 70 |
| | 15 | 50 |
| | 8 | 40 |
| I-17 + Mefenpyr-diethyl | 30+50 | 40 |
| | 15+50 | 30 |
| | 8+50 | 20 |

**Tabelle A-5-8 post emergence Test/ Gewächshaus**

| Wirkstoff (+ Safener) | Aufwandmenge (g a.i./ha) | Schädigung Winterweizen (in %) |
|---|---|---|
| I-14 | 1 | 40 |
| | 0,5 | 20 |
| I-14 + Mefenpyr-diethyl | 1+50 | 30 |
| | 0,5+50 | 10 |

**Tabelle A-5-9 post emergence Test/ Gewächshaus**

| Wirkstoff (+ Safener) | Aufwandmenge (g a.i./ha) | Schädigung Winterweizen (in %) |
|---|---|---|
| I-18 | 2 | 50 |
| | 1 | 30 |
| I-18 + Mefenpyr-diethyl | 2+50 | 20 |
| | 1+50 | 10 |

**Tabelle A-5-10 post emergence Test/ Gewächshaus**

| Wirkstoff (+ Safener) | Aufwandmenge (g a.i./ha) | Schädigung Winterweizen (in %) |
|---|---|---|
| I-15 | 30 | 70 |
| | 15 | 40 |
| | 8 | 30 |
| I-15 + Mefenpyr-diethyl | 30+50 | 10 |
| | 15+50 | 0 |
| | 8+50 | 0 |

**Tabelle A-5-11 post emergence Test/ Gewächshaus**

| Safener | Aufwandmenge (g a.i./ha) | Schädigung Wintergerste (in %) |
|---|---|---|
| Mefenpyr-diethyl | 50 | 0 |

**Tabelle A-5-12 post emergence Test/ Gewächshaus**

| Wirkstoff (+ Safener) | Aufwandmenge (g a.i./ha) | Schädigung Wintergerste (in %) |
|---|---|---|
| I-2 | 30 | 80 |
| | 15 | 70 |
| | 8 | 60 |
| I-2 + Mefenpyr-diethyl | 30+50 | 50 |
| | 15+50 | 20 |
| | 8+50 | 10 |

**Tabelle A-5-13 post emergence Test/ Gewächshaus**

| Wirkstoff (+ Safener) | Aufwandmenge (g a.i./ha) | Schädigung Wintergerste (in %) |
|---|---|---|
| I-17 | 30 | 80 |
| | 15 | 70 |
| | 8 | 70 |
| I-17 + Mefenpyr-diethyl | 30+50 | 70 |
| | 15+50 | 60 |
| | 8+50 | 20 |

**Tabelle A-5-14 post emergence Test/ Gewächshaus**

| Wirkstoff (+ Safener) | Aufwandmenge (g a.i./ha) | Schädigung Wintergerste (in %) |
|---|---|---|
| I-14 | 0,5 | 30 |
| | 0,25 | 10 |
| I-14 + Mefenpyr-diethyl | 0,5+50 | 20 |
| | 0,25+50 | 0 |

**Tabelle A-5-15 post emergence Test/ Gewächshaus**

| Wirkstoff (+ Safener) | Aufwandmenge (g a.i./ha) | Schädigung Wintergerste (in %) |
|---|---|---|
| I-18 | 2 | 60 |
| | 1 | 20 |
| | 0,5 | 10 |
| I-18 + Mefenpyr-diethyl | 2+50 | 20 |
| | 1+50 | 10 |
| | 0,5+50 | 0 |

**Tabelle A-5-19 post emergence Test/ Gewächshaus**

| Wirkstoff (+ Safener) | Aufwandmenge (g a.i./ha) | Schädigung Wintergerste (in %) |
|---|---|---|
| I-15 | 30 | 80 |
| | 15 | 70 |
| | 8 | 60 |
| I-15 + Mefenpyr-diethyl | 30+50 | 30 |
| | 15+50 | 20 |
| | 8+50 | 10 |

## Patentansprüche

1. Mittel, enthaltend eine Wirkstoffkombination umfassend
(a) eine oder mehrere Verbindungen der Formel (I) 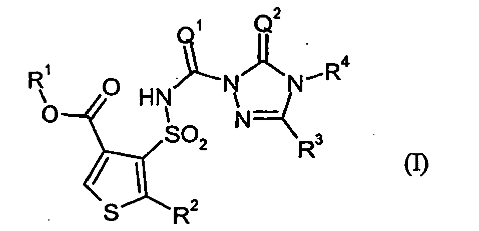 in welcher
Q¹ für O (Sauerstoff) oder S (Schwefel) steht,
Q² für O (Sauerstoff) oder S (Schwefel) steht,
R¹ für gegebenenfalls durch Cyano, Halogen oder C₁-C₄-Alkoxy substituiertes Alkyl mit 1 bis 6 Kohlenstoffatomen, für jeweils gegebenenfalls durch Cyano oder Halogen substituiertes Alkenyl oder Alkinyl mit jeweils 2 bis 6 Kohlenstoffatomen, für jeweils gegebenenfalls durch Cyano, Halogen oder C₁-C₄-Alkyl substituiertes Cycloalkyl oder Cycloalkylalkyl mit jeweils 3 bis 6 Kohlenstoffatomen in der Cycloalkylgruppe und gegebenenfalls 1 bis 4 Kohlenstoffatomen im Alkylteil, für jeweils gegebenenfalls durch Nitro, Cyano, Halogen, C₁-C₄-Alkyl oder C₁-C₄-Alkoxy substituiertes Aryl oder Arylalkyl mit jeweils 6 oder 10 Kohlenstoffatomen in der Arylgruppe und gegebenenfalls 1 bis 4 Kohlenstoffatomen im Alkylteil, oder für jeweils gegebenenfalls durch Nitro, Cyano, Halogen, C₁-C₄-Alkyl oder C₁-C₄-Alkoxy substituiertes Heterocyclyl oder Heterocyclylalkyl mit jeweils bis zu 6 Kohlenstoffatomen und zusätzlich 1 bis 4 Stickstoffatomen und/oder 1 bis 2 Sauerstoff- oder Schwefelatomen in der Heterocyclylgruppe und gegebenenfalls 1 bis 4 Kohlenstoffatomen im Alkylteil steht,
R² für Wasserstoff, Cyano, Nitro, Halogen, für jeweils gegebenenfalls durch Cyano, Halogen oder C₁-C₄-Alkoxy substituiertes Alkyl, Alkoxy, Alkoxycarbonyl, Alkylthio, Alkylsulfinyl oder Alkylsulfonyl mit jeweils 1 bis 6 Kohlenstoffatomen in der Alkylgruppe, oder für jeweils gegebenenfalls durch Cyano oder Halogen substituiertes Alkenyl, Alkinyl, Alkenyloxy oder Alkinyloxy mit jeweils 2 bis 6 Kohlenstoffatomen in der Alkenyl- oder Alkinylgruppe steht,
R³ für Wasserstoff, Hydroxy, Mercapto, Amino, Cyano, Fluor, Chlor, Brom, Iod, für gegebenenfalls durch Fluor, Chlor, Brom, Cyano, C₁-C₄-Alkoxy, C₁-C₄-Alkyl-carbonyl oder C₁-C₄-Alkoxy-carbonyl substituiertes Alkyl mit 1 bis 6 Kohlenstoffatomen, für jeweils gegebenenfalls durch Fluor, Chlor und/oder Brom substituiertes Alkenyl oder Alkinyl mit jeweils 2 bis 6 Kohlenstoffatomen, für jeweils gegebenenfalls durch Fluor, Chlor, Cyano, C₁-C₄-Alkoxy oder C₁-C₄-Alkoxy carbonyl substituiertes Alkoxy, Alkylthio, Alkylamino oder Alkylcarbonylamino mit jeweils 1 bis 6 Kohlenstoffatomen in der Alkylgruppe, für Alkenyloxy, Alkinyloxy, Alkenylthio, Alkinylthio, Alkenylamino oder Alkinylamino mit jeweils 3 bis 6 Kohlenstoffatomen in der Alkenyl- oder Alkinylgruppe, für Dialkylamino mit jeweils 1 bis 4 Kohlenstoffatomen in den Alkylgruppen, für jeweils gegebenenfalls durch Methyl und/oder Ethyl substituiertes Aziridino, Pyrrolidino, Piperidino oder Morpholino, für jeweils gegebenenfalls durch Fluor, Chlor, Brom, Cyano und/oder C₁-C₄-Alkyl substituiertes Cycloalkyl, Cycloalkenyl, Cycloalkyloxy, Cycloalkylthio, Cycloalkylamino, Cycloalkylalkyl, Cycloalkylalkoxy, Cycloalkylalkylthio oder Cycloalkylalkylamino mit jeweils 3 bis 6 Kohlenstoffatomen in der Cycloalkyl- bzw. Cycloalkenylgruppe und gegebenenfalls 1 bis 4 Kohlenstoffatomen im Alkylteil, oder für jeweils gegebenenfalls durch Fluor, Chlor, Brom, Cyano, Nitro, C₁-C₄-Alkyl, Trifluormethyl, C₁-C₄-Alkoxy und/oder C₁-C₄-Alkoxy-carbonyl substituiertes Aryl, Arylalkyl, Aryloxy, Arylalkoxy, Arylthio, Arylalkylthio, Arylamino oder Arylalkylamino mit jeweils 6 oder 10 Kohlenstoffatomen in der Arylgruppe und gegebenenfalls 1 bis 4 Kohlenstoffatomen im Alkylteil steht,
R⁴ für Wasserstoff, Hydroxy, Amino, Cyano, für C₂-C₁₀-Alkylidenamino, für gegebenenfalls durch Fluor, Chlor, Brom, Cyano, C₁-C₄-Alkoxy, C₁-C₄-Alkyl-carbonyl oder C₁-C₄-Alkoxy-carbonyl substituiertes Alkyl mit 1 bis 6 Kohlenstoffatomen, für jeweils gegebenenfalls durch Fluor, Chlor und/oder Brom substituiertes Alkenyl oder Alkinyl mit jeweils 2 bis 6 Kohlenstoffatomen, für jeweils gegebenenfalls durch Fluor, Chlor, Brom, Cyano, C₁-C₄-Alkoxy oder C₁-C₄-Alkoxycarbonyl substituiertes Alkoxy, Alkylamino oder Alkyl-carbonylamino mit jeweils 1 bis 6 Kohlenstoffatomen in der Alkylgruppe, für Alkenyloxy mit 3 bis 6 Kohlenstoffatomen, für Dialkylamino mit jeweils 1 bis 4 Kohlenstoffatomen in den Alkylgruppen, für jeweils gegebenenfalls durch Fluor, Chlor, Brom, Cyano und/oder C₁-C₄-Alkyl substituiertes Cycloalkyl, Cycloalkylamino oder Cycloalkylalkyl mit jeweils 3 bis 6 Kohlenstoffatomen in der Alkylgruppe und gegebenenfalls 1 bis 4 Kohlenstoffatomen im Alkylteil, oder für jeweils gegebenenfalls durch Fluor, Chlor, Brom, Cyano, Nitro, C₁-C₄-Alkyl, Trifluormethyl und/oder C₁-C₄-Alkoxy substituiertes Aryl oder Arylalkyl mit jeweils 6 oder 10 Kohlenstoffatomen in der Arylgruppe und gegebenenfalls 1 bis 4 Kohlenstoffatomen im Alkylteil steht, oder R³ und R⁴ zusammen für gegebenenfalls verzweigtes Alkandiyl mit 3 bis 6 Kohlenstoffatomen stehen,
- sowie Salze der Verbindungen der Formel (I) -
und
(b) zumindest eine Verbindung aus der folgenden Gruppe von Verbindungen:
4-Dichloracetyl-1-oxa-4-aza-spiro[4.5]-decan (AD-67, MON-4660), 5-Chlorchinolin-8-oxy-essigsäure-(1-methyl-hexylester) (Cloquintocet-mexyl), 2,2-Dichlor-N,N-di-2-propenyl-acetamid (Dichlormid), 1-(2,4-Dichlor-phenyl)-5-trichlormethyl-1H-1,2,4-triazol-3-carbonsäure-ethylester (Fenchlorazole-ethyl), 2-Chlor-4-trifluormethyl-thiazol-5-carbonsäure-phenylmethylester (Flurazole), 3-Dichloroacetyl-5-(2-furanyl)-2,2,-dimethyl-oxazolidin (Furilazole), Ethyl-4,5-dihydro-5,5-diphenyl-3-isoxazolcarboxylat (Isoxadifen-ethyl), Diethyl-1-(2,4-dichlor-phenyl)-4,5-dihydro-5-methyl-1H-pyrazol-3,5-dicarboxylat (Mefenpyr-diethyl), Diphenylmethoxyessigsäure-methylester (MON-7400),
und/oder die folgenden Verbindungen
der Formel (IIa) 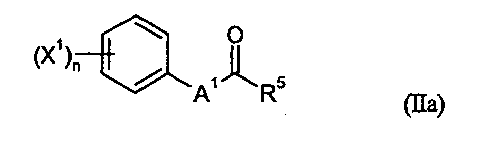 oder der Formel (IIb) 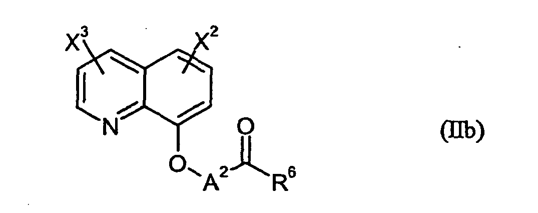 oder der Formel (IIc) 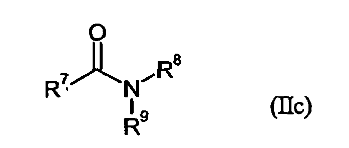
wobei
n für eine Zahl zwischen 0 und 5 steht,
A¹ für eine der nachstehend skizzierten divalenten heterocyclischen Gruppierungen steht, 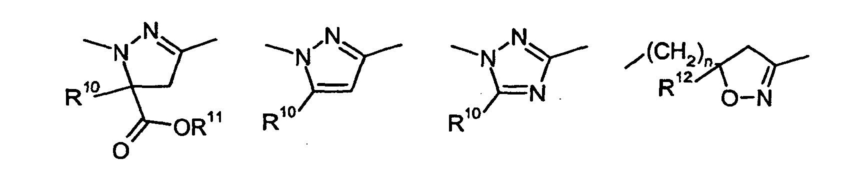
A² für gegebenenfalls durch C₁-C₄-Alkyl und/oder C₁-C₄-Alkoxy-carbonyl substituiertes Alkandiyl mit 1 oder 2 Kohlenstoffatomen steht,
R⁵ für Hydroxy, Mercapto, Amino, C₁-C₆-Alkoxy, C₁-C₆-Akylthio, C₁-C₆-Alkylamino oder Di-(C₁-C₄-alkyl)-amino steht,
R⁶ für Hydroxy, Mercapto, Amino, jeweils gegebenenfalls durch C₁-C₄-Alkyl, C₁-C₄-Alkoxy oder C₂-C₄-Alkenoxy substituiertes C₁-C₆-Alkoxy, C₂-C₆-Alkenoxy, C₁-C₆-Alkylthio, C₁-C₆-Alkylamino oder Di-(C₁-C₄-alkyl)-amino steht,
R⁷ für jeweils gegebenenfalls durch Fluor, Chlor und/oder Brom substituiertes C₁-C₄-Alkyl steht,
R⁸ für Wasserstoff, jeweils gegebenenfalls durch Fluor, Chlor und/oder Brom substituiertes C₁-C₆-Alkyl, C₂-C₆-Akenyl oder C₂-C₆-Alkinyl, C₁-C₄-Alkoxy-C₁-C₄-alkyl, Dioxolanyl-C₁-C₄-alkyl, Furyl, Furyl-C₁-C₄-alkyl, Thienyl, Thiazolyl, Piperidinyl, oder gegebenenfalls durch Fluor, Chlor und/oder Brom oder C₁-C₄-Alkyl substituiertes Phenyl steht,
R⁹ für Wasserstoff, jeweils gegebenenfalls durch Fluor, Chlor und/oder Brom substituiertes C₁-C₆-Alkyl, C₂-C₆-Alkenyl oder C₂-C₆-Alkinyl, C₁-C₄-Alkoxy-C₁-C₄-alkyl, Dioxolanyl-C₁-C₄-alkyl, Furyl, Furyl-C₁-C₄-alkyl, Thienyl, Thiazolyl, Piperidinyl, oder gegebenenfalls durch Fluor, Chlor und/oder Brom oder C₁-C₄-Alkyl substituiertes Phenyl, oder zusammen mit R⁸ für jeweils gegebenenfalls durch C₁-C₄-Alkyl, Phenyl, Furyl, einen annellierten Benzolring oder durch zwei Substituenten, die gemeinsam mit dem C-Atom, an das sie gebunden sind, einen 5- oder 6-gliedrigen Carbocyclus bilden, substituiertes C₃-C₆-Alkandiyl oder C₂-C₅-Oxaalkandiyl steht,
R¹⁰ für Wasserstoff, Cyano, Halogen, oder für jeweils gegebenenfalls durch Fluor, Chlor und/oder Brom substituiertes C₁-C₄-Alkyl, C₃-C₆-Cycloalkyl oder Phenyl steht,
R¹¹ für Wasserstoff, gegebenenfalls durch Hydroxy, Cyano, Halogen oder C₁-C₄-Alkoxy substituiertes C₁-C₆-Alkyl, C₃-C₆-Cycloalkyl oder Tri-(C₁-C₄-alkyl)-silyl steht,
R¹² für Wasserstoff, Cyano, Halogen, oder für jeweils gegebenenfalls durch Fluor, Chlor und/oder Brom substituiertes C₁-C₄-Alkyl, C₃-C₆-Cycloalkyl oder Phenyl steht,
X¹ für Nitro, Cyano, Halogen, C₁-C₄-Alkyl, C₁-C₄-Halogenalkyl, C₁-C₄-Alkoxy oder C₁-C₄-Halogenalkoxy steht,
X² für Wasserstoff, Cyano, Nitro, Halogen, C₁-C₄-Akyl, C₁-C₄-Halogenalkyl, C₁-C₄-Alkoxy oder C₁-C₄-Halogenalkoxy steht,
X³ für Wasserstoff, Cyano, Nitro, Halogen, C₁-C₄-Alkyl, C₁-C₄-Halogenalkyl, C₁-C₄-Alkoxy oder C₁-C₄-Halogenalkoxy steht,
und/ oder die folgenden Verbindungen
der Formel (IId) 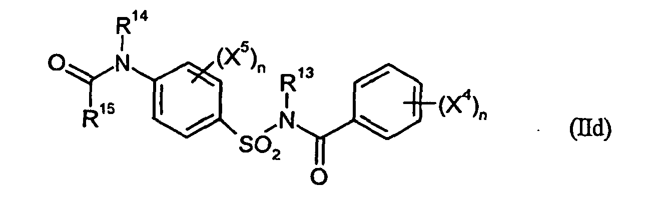 oder der Formel (IIe) 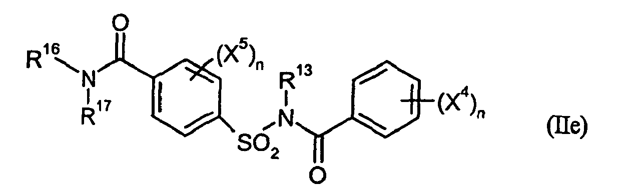 wobei
n wiederum für eine Zahl zwischen 0 und 5 steht,
R¹³ für Wasserstoff oder C₁-C₄-Alkyl steht,
R¹⁴ für Wasserstoff oder C₁-C₄-Alkyl steht,
R¹⁵ für Wasserstoff, jeweils gegebenenfalls durch Cyano, Halogen oder C₁-C₄-Alkoxy substituiertes C₁-C₆-Alkyl, C₁-C₆-Alkoxy, C₁-C₆-Alkylthio, C₁-C₆-Alkylamino oder Di-(C₁-C₄-alkyl)-amino, oder jeweils gegebenenfalls durch Cyano, Halogen oder C₁-C₄-Alkyl substituiertes C₃-C₆-Cycloalkyl, C₃-C₆-Cycloalkyloxy, C₃-C₆-Cycloalkylthio oder C₃-C₆-Cycloalkylamino steht,
R¹⁶ für Wasserstoff, gegebenenfalls durch Cyano, Hydroxy, Halogen oder C₁-C₄-Alkoxy substituiertes C₁-C₆-Alkyl, jeweils gegebenenfalls durch Cyano oder Halogen substituiertes C₃-C₆-Alkenyl oder C₃-C₆-Alkinyl, oder gegebenenfalls durch Cyano, Halogen oder C₁-C₄-Alkyl substituiertes C₃-C₆-Cycloalkyl steht,
R¹⁷ für Wasserstoff, gegebenenfalls durch Cyano, Hydroxy, Halogen oder C₁-C₄-Alkoxy substituiertes C₁-C₆-Alkyl, jeweils gegebenenfalls durch Cyano oder Halogen substituiertes C₃-C₆-Alkenyl oder C₃-C₆-Alkinyl, gegebenenfalls durch Cyano, Halogen oder C₁-C₄-Alkyl substituiertes C₃-C₆-Cycloalkyl, oder gegebenenfalls durch Nitro, Cyano, Halogen, C₁-C₄-Alkyl, C₁-C₄-Halogenalkyl, C₁-C₄-Alkoxy oder C₁-C₄-Halogenalkoxy substituiertes Phenyl steht, oder zusammen mit R¹⁶ für jeweils gegebenenfalls durch C₁-C₄-Alkyl substituiertes C₂-C₆-Alkandiyl oder C₂-C₅-Oxaalkandiyl steht,
X⁴ für Nitro, Cyano, Carboxy, Carbamoyl, Formyl, Sulfamoyl, Hydroxy, Amino, Halogen, C₁-C₄-Alkyl, C₁-C₄-Halogenalkyl, C₁-C₄-Alkoxy oder C₁-C₄-Halogenalkoxy steht, und
X⁵ für Nitro, Cyano, Carboxy, Carbamoyl, Formyl, Sulfamoyl, Hydroxy, Amino, Halogen, C₁-C₄-Alkyl, C₁-C₄-Halogenakyl, C₁-C₄-Alkoxy oder C₁-C₄-Halogenalkoxy steht.

2. Mittel nach Anspruch 1, **dadurch gekennzeichnet, dass**
Q¹ für O (Sauerstoff) oder S (Schwefel) steht,
Q² für O (Sauerstoff) oder S (Schwefel) steht,
R¹ für jeweils gegebenenfalls durch Cyano, Fluor, Chlor, Methoxy oder Ethoxy substituiertes Methyl, Ethyl, n- oder i-Propyl, n-, i-, s- oder t-Butyl, für jeweils gegebenenfalls durch Cyano, Fluor oder Chlor substituiertes Propenyl, Butenyl, Propinyl oder Butinyl, für jeweils gegebenenfalls durch Cyano, Fluor, Chlor, Methyl oder Ethyl substituiertes Cyclopropyl, Cyclobutyl, Cyclopentyl, Cyclohexyl, Cyclopropylmethyl, Cyclobutylmethyl, Cyclopentylmethyl oder Cyclohexylmethyl, für jeweils gegebenenfalls durch Cyano, Fluor, Chlor, Brom, Methyl, Ethyl, n- oder i-Propyl, Trifluormethyl, Methoxy, Ethoxy, n- oder i-Propoxy, Difluormethoxy oder Trifluormethoxy substituiertes Phenyl, Phenylmethyl oder Phenylethyl, oder für jeweils gegebenenfalls durch Cyano, Fluor, Chlor, Brom, Methyl, Ethyl, n- oder i-Propyl, Methoxy, Ethoxy, n- oder i-Propoxy substituiertes Heterocyclyl oder Heterocyclylmethyl steht, wobei die Heterocyclylgruppe jeweils aus der Reihe Oxetanyl, Thietanyl, Furyl, Tetrahydrofuryl, Thienyl, Tetrahydrothienyl ausgewählt ist,
R² für Wasserstoff, Cyano, Fluor, Chlor, Brom, für jeweils gegebenenfalls durch Cyano, Fluor, Chlor, Methoxy oder Ethoxy substituiertes Methyl, Ethyl, n- oder i-Propyl, n-, i-, s- oder t-Butyl, Methoxy, Ethoxy, n- oder i-Propoxy, Methoxycarbonyl, Ethoxycarbonyl, n- oder i-Propoxycarbonyl, Methylthio, Ethylthio, n- oder i-Propylthio, Methylsulfinyl, Ethylsulfinyl, Methylsulfonyl oder Ethylsulfonyl, oder für jeweils gegebenenfalls durch Cyano, Fluor oder Chlor substituiertes Propenyl, Butenyl, Propinyl, Butinyl, Propenyloxy, Butenyloxy, Propinyloxy oder Butinyloxy steht,
R³ für Wasserstoff, Hydroxy, Mercapto, Amino, Cyano, Fluor, Chlor, Brom, für jeweils gegebenenfalls durch Fluor, Chlor, Cyano, Methoxy, Ethoxy, n- oder i-Propoxy, Acetyl, Propionyl, n- oder i-Buyroyl, Methoxycarbonyl, Ethoxycarbonyl, n- oder i-Propoxy-carbonyl substituiertes Methyl, Ethyl, n- oder i-Propyl, n-, i-, s- oder t-Butyl, für jeweils gegebenenfalls durch Fluor, Chlor und/oder Brom substituiertes Ethenyl, Propenyl, Butenyl, Ethinyl, Propinyl oder Butinyl, für jeweils gegebenenfalls durch Fluor, Chlor, Cyano, Methoxy, Ethoxy, n- oder i-Propoxy, Methoxycarbonyl, Ethoxycarbonyl, n- oder i-Propoxycarbonyl substituiertes Methoxy, Ethoxy, n- oder i-Propoxy, n-, i-, s- oder t-Butoxy, Methylthio, Ethylthio, n- oder i-Propylthio, n-, i-, s- oder t-Butylthio, Methylamino, Ethylamino, n- oder i-Propylamino, n-, i-, s- oder t-Butylamino, Acetylamino oder Propionylamino, für Propenyloxy, Butenyloxy, Ethinyloxy, Propinyloxy, Butinyloxy, Propenylthio, Butenylthio, Propinylthio, Butinylthio, Propenylamino, Butenylamino, Propinylamino oder Butinylamino, für Dimethylamino, Diethylamino oder Dipropylamino, für jeweils gegebenenfalls durch Fluor, Chlor, Methyl und/oder Ethyl substituiertes Cyclopropyl, Cyclobutyl, Cyclopentyl, Cyclohexyl, Cyclopentenyl, Cyclohexenyl, Cyclopropyloxy, Cyclobutyloxy, Cyclopentyloxy, Cyclohexyloxy, Cyclopropylthio, Cyclobutylthio, Cyclopentylthio, Cyclohexylthio, Cyclopropylamino, Cyclobutylamino, Cyclopentylamino, Cyclohexylamino, Cyclopropylmethyl, Cyclobutylinethyl, Cyclopentylmethyl, Cyclohexylmethyl, Cyclopropylmethoxy, Cyclobutylmethoxy, Cyclopentylmethoxy, Cyclohexylmethoxy, Cyclopropylmethylthio, Cyclobutylmethylthio, Cyclopentylmethylthio, Cyclohexylmethylthio, Cyclopropylmethylamino, Cyclobutylmethylamino, Cyclopentylmethylamino oder Cyclohexylmethylamino, oder für jeweils gegebenenfalls durch Fluor, Chlor, Brom, Methyl, Trifluormethyl, Methoxy oder Methoxy-carbonyl substituiertes Phenyl, Benzyl, Phenoxy, Benzyloxy, Phenylthio, Benzylthio, Phenylamino oder Benzylamino steht, und
R⁴ für Wasserstoff, Hydroxy, Amino, für jeweils gegebenenfalls durch Fluor, Chlor, Cyano, Methoxy oder Ethoxy substituiertes Methyl, Ethyl, n- oder i-Propyl, n-, i-, s- oder t-Butyl, für jeweils gegebenenfalls durch Fluor, Chlor und/oder Brom substituiertes Ethenyl, Propenyl, Butenyl, Propinyl oder Butinyl, für jeweils gegebenenfalls durch Fluor, Chlor, Cyano, Methoxy oder Ethoxy substituiertes Methoxy, Ethoxy, n- oder i-Propoxy, n-, i-, s- oder t-Butoxy, Methylamino, Ethylamino, n- oder i-Propylamino, n-, i-, s- oder t-Butylamino, für Propenyloxy oder Butenyloxy, für Dimethylamino oder Diethylamino, für jeweils gegebenenfalls durch Fluor, Chlor, Methyl und/oder Ethyl substituiertes Cyclopropyl, Cyclobutyl, Cyclopentyl, Cyclohexyl, Cyclopropylamino, Cyclobutylamino, Cyclopentylamino, Cyclohexylamino, Cyclopropylmethyl, Cyclobutylmethyl, Cyclopentylmethyl oder Cyclohexylmethyl, oder für jeweils gegebenenfalls durch Fluor, Chlor, Methyl, Trifluormethyl und/oder Methoxy substituiertes Phenyl oder Benzyl steht, oder
R³ und R⁴ zusammen für Trimethylen (Propan-1,3-diyl), Tetramethylen (Butan-1,4-diyl) oder Pentamethylen (Pentan-1,5-diyl) stehen.

3. Mittel nach Anspruch 1, **dadurch gekennzeichnet, dass**
Q¹ für O (Sauerstoff) steht,
Q² für O (Sauerstoff) steht,
R¹ für jeweils gegebenenfalls durch Fluor, Chlor, Methoxy oder Ethoxy substituiertes Methyl, Ethyl, n- oder i-Propyl steht,
R² für Fluor, Chlor, Brom oder für jeweils gegebenenfalls durch Fluor, Chlor, Methoxy oder Ethoxy substituiertes Methyl, Ethyl, n- oder i-Propyl steht,
R³ für Wasserstoff, Chlor, Brom, für jeweils gegebenenfalls durch Fluor, Chlor, Methoxy, Ethoxy, n- oder i-Propoxy substituiertes Methyl, Ethyl, n- oder i-Propyl, für jeweils gegebenenfalls durch Fluor oder Chlor substituiertes Ethenyl, Propenyl, Butenyl, Propinyl oder Butinyl, für jeweils gegebenenfalls durch Fluor, Chlor, Methoxy, Ethoxy, n- oder i-Propoxy substituiertes Methoxy, Ethoxy, n- oder i-Propoxy, Methylthio, Ethylthio, n- oder i-Propylthio, Methylamino, Ethylamino, n- oder i-Propylamino, für Propenyloxy, Propinyloxy, Propenylthio, Propinylthio, Propenylamino oder Propinylamino, für Dimethylamino oder Diethylamino, für jeweils gegebenenfalls durch Fluor, Chlor oder Methyl substituiertes Cyclopropyl, Cyclopropyloxy, Cyclopropylmethyl oder Cyclopropylmethoxy steht, und
R⁴ für jeweils gegebenenfalls durch Fluor, Chlor, Methoxy oder Ethoxy substituiertes Methyl, Ethyl, n- oder i-Propyl, für jeweils gegebenenfalls durch Fluor oder Chlor substituiertes Ethenyl, Propenyl oder Propinyl, für jeweils gegebenenfalls durch Fluor, Chlor, Methoxy oder Ethoxy substituiertes Methoxy, Ethoxy, n- oder i-Propoxy, für Methylamine, oder für Cyclopropyl steht.

4. Mittel nach Anspruch 1, **dadurch gekennzeichnet, dass**
n für die Zahlen 0, 1, 2, 3 oder 4 steht,
A² für jeweils gegebenenfalls durch Methyl, Ethyl, Methoxycarbonyl oder Ethoxy-carbonyl substituiertes Methylen oder Ethylen steht,
R⁵ für Hydroxy, Mercapto, Amino, Methoxy, Ethoxy, n- oder i-Propoxy, n-, i-, s- oder t-Butoxy, Methylthio, Ethylthio, n- oder i-Propylthio, n-, i-, s- oder t-Butylthio, Methylamino, Ethylamino, n- oder i-Propylamino, n-, i-, s- oder t-Butylamino, Dimethylamino oder Diethylamino steht,
R⁶ für Hydroxy, Mercapto, Amino, Methoxy, Ethoxy, n- oder i-Propoxy, n-, i-, s- oder t-Butoxy, Methylthio, Ethylthio, n- oder i-Propylthio, n-, i-, s- oder t-Butylthio, Methylamino, Ethylamino, n- oder i-Propylamino, n-, i-, s- oder t-Butylamino, Dimethylamino oder Diethylamino steht,
R⁷ für jeweils gegebenenfalls durch Fluor, Chlor und/oder Brom substituiertes Methyl, Ethyl, n- oder i-Propyl steht,
R⁸ für Wasserstoff, jeweils gegebenenfalls durch Fluor und/oder Chlor substituiertes Methyl, Ethyl, n- oder i-Propyl, n-, i-, s- oder t-Butyl, Propenyl, Butenyl, Propinyl oder Butinyl, Methoxymethyl, Ethoxymethyl, Methoxyethyl, Ethoxyethyl, Dioxolanylmethyl, Furyl, Furylmethyl, Thienyl, Thiazolyl, Piperidinyl, oder gegebenenfalls durch Fluor, Chlor, Methyl, Ethyl, n- oder i-Propyl, n-, i-, s- oder t-Butyl substituiertes Phenyl steht,
R⁹ für Wasserstoff, jeweils gegebenenfalls durch Fluor und/oder Chlor substituiertes Methyl, Ethyl, n- oder i-Propyl, n-, i-, s- oder t-Butyl, Propenyl, Butenyl, Propinyl oder Butinyl, Methoxymethyl, Ethoxymethyl, Methoxyethyl, Ethoxyethyl, Dioxolanylmethyl, Furyl, Furylmethyl, Thienyl, Thiazolyl, Piperidinyl, oder gegebenenfalls durch Fluor, Chlor, Methyl, Ethyl, n- oder i-Propyl, n-, i-, s- oder t-Butyl substituiertes Phenyl steht, oder zusammen mit R⁸ für einen der Reste -CH₂-O-CH₂-CH₂- und -CH₂-CH₂-O-CH₂-CH₂- steht, die gegebenenfalls substituiert sind durch Methyl, Ethyl, Furyl, Phenyl, einen annellierten Benzolring oder durch zwei Substituenten, die gemeinsam mit dem C-Atom, an das sie gebunden sind, einen 5- oder 6-gliedrigen Carbocyclus bilden,
R¹⁰ für Wasserstoff, Cyano, Fluor, Chlor, Brom, oder für jeweils gegebenenfalls durch Fluor, Chlor und/oder Brom substituiertes Methyl, Ethyl, n- oder i-Propyl, Cyclopropyl, Cyclobutyl, Cyclopentyl, Cyclohexyl oder Phenyl steht,
R¹¹ für Wasserstoff, jeweils gegebenenfalls durch Hydroxy, Cyano, Fluor, Chlor, Methoxy, Ethoxy, n- oder i-Propoxy substituiertes Methyl, Ethyl, n- oder i-Propyl, n-, i-, s- oder t-Butyl steht,
R¹² für Wasserstoff, Cyano, Fluor, Chlor, Brom, oder für jeweils gegebenenfalls durch Fluor, Chlor und/oder Brom substituiertes Methyl, Ethyl, n- oder i-Propyl, n-, i-, s- oder t-Butyl, Cyclopropyl, Cyclobutyl, Cyclopentyl, Cyclohexyl oder Phenyl steht,
X¹ für Nitro, Cyano, Fluor, Chlor, Brom, Methyl, Ethyl, n- oder i-Propyl, n-, i-, s- oder t-Butyl, Difluormethyl, Dichlormethyl, Trifluormethyl, Trichlormethyl, Chlordifluormethyl, Fluordichlormethyl, Methoxy, Ethoxy, n- oder i-Propoxy, Difluormethoxy oder Trifluormethoxy steht,
X² für Wasserstoff, Nitro, Cyano, Fluor, Chlor, Brom, Methyl, Ethyl, n- oder i-Propyl, n-, i-, s- oder t-Butyl, Difluormethyl, Dichlormethyl, Trifluormethyl, Trichlormethyl, Chlordifluormethyl, Fluordichlormethyl, Methoxy, Ethoxy, n- oder i-Propoxy, Difluormethoxy oder Trifluormethoxy steht,
X³ für Wasserstoff, Nitro, Cyano, Fluor, Chlor, Brom, Methyl, Ethyl, n- oder i-Propyl, n-, i-, s- oder t-Butyl, Difluormethyl, Dichlormethyl, Trifluormethyl, Trichlormethyl, Chlordifluormethyl, Fluordichlormethyl, Methoxy, Ethoxy, n- oder i-Propoxy, Difluormethoxy oder Trifluormethoxy steht,
R¹³ für Wasserstoff, Methyl, Ethyl, n- oder i-Propyl steht,
R¹⁴ für Wasserstoff, Methyl, Ethyl, n- oder i-Propyl steht,
R¹⁵ für Wasserstoff, jeweils gegebenenfalls durch Cyano, Fluor, Chlor, Methoxy, Ethoxy, n- oder i-Propoxy substituiertes Methyl, Ethyl, n- oder i-Propyl, n-, i-, s- oder t-Butyl, Methoxy, Ethoxy, n- oder i-Propoxy, n-, i-, s- oder t-Butoxy, Methylthio, Ethylthio, n- oder i-Propylthio, n-, i-, s- oder t-Butylthio, Methylamino, Ethylamino, n- oder i-Propylamino, n-, i-, s- oder t-Butylamino, Dimethylamino oder Diethylamino, oder jeweils gegebenenfalls durch Cyano, Fluor, Chlor, Brom, Methyl, Ethyl, n- oder i-Propyl substituiertes Cyclopropyl, Cyclobutyl, Cyclopentyl, Cyclohexyl, Cyclopropyloxy, Cyclobutyloxy, Cyclopentyloxy, Cyclohexyloxy, Cyclopropylthio, Cyclobutylthio, Cyclopentylthio, Cyclohexylthio, Cyclopropylamino, Cyclobutylamino, Cyclopentylamino oder Cyclohexylamino steht,
R¹⁶ für Wasserstoff, jeweils gegebenenfalls durch Cyano, Hydroxy, Fluor, Chlor, Methoxy, Ethoxy, n- oder i-Propoxy substituiertes Methyl, Ethyl, n- oder i-Propyl, n-, i- oder s-Butyl, jeweils gegebenenfalls durch Cyano, Fluor, Chlor oder Brom substituiertes Propenyl, Butenyl, Propinyl oder Butinyl, oder jeweils gegebenenfalls durch Cyano, Fluor, Chlor, Brom, Methyl, Ethyl, n- oder i-Propyl substituiertes Cyclopropyl, Cyclobutyl, Cyclopentyl oder Cyclohexyl steht,
R¹⁷ für Wasserstoff, jeweils gegebenenfalls durch Cyano, Hydroxy, Fluor, Chlor, Methoxy, Ethoxy, n- oder i-Propoxy substituiertes Methyl, Ethyl, n- oder i-Propyl, n-, i- oder s-Butyl, jeweils gegebenenfalls durch Cyano, Fluor, Chlor oder Brom substituiertes Propenyl, Butenyl, Propinyl oder Butinyl, jeweils gegebenenfalls durch Cyano, Fluor, Chlor, Brom, Methyl, Ethyl, n- oder i-Propyl substituiertes Cyclopropyl, Cyclobutyl, Cyclopentyl oder Cyclohexyl, oder gegebenenfalls durch Nitro, Cyano, Fluor, Chlor, Brom, Methyl, Ethyl, n- oder i-Propyl, n-, i-, s- oder t-Butyl, Trifluormethyl, Methoxy, Ethoxy, n- oder i-Propoxy, Difluormethoxy oder Trifluormethoxy substituiertes Phenyl, oder zusammen mit R¹⁶ für jeweils gegebenenfalls durch Methyl oder Ethyl substituiertes Butan-1,4-diyl (Trimethylen), Pentan-1,5-diyl, 1-Oxa-butan-1,4-diyl oder 3-Oxa-pentan-1,5-diyl steht,
X⁴ für Nitro, Cyano, Carboxy, Carbamoyl, Formyl, Sulfamoyl, Hydroxy, Amino, Fluor, Chlor, Brom, Methyl, Ethyl, n- oder i-Propyl, n-, i-, s- oder t-Butyl, Trifluormethyl, Methoxy, Ethoxy, n- oder i-Propoxy, Difluormethoxy oder Trifluonnethoxy steht, und
X⁵ für Nitro, Cyano, Carboxy, Carbamoyl, Formyl, Sulfamoyl, Hydroxy, Amino, Fluor, Chlor, Brom, Methyl, Ethyl, n- oder i-Propyl, n-, i-, s- oder t-Butyl, Trifluormethyl, Methoxy, Ethoxy, n- oder i-Propoxy, Difluormethoxy oder Trifluormethoxy steht.

5. Mittel nach Anspruch 1, **dadurch gekennzeichnet, dass** die Komponente (b) eine oder mehrere der Verbindungen ausgewählt aus den Wirkstoffen AD-67, Cloquintocet-mexyl, Dichlormid, Fenchlorazole-ethyl, Isoxadifen-ethyl, Mefenpyr-diethyl, MON-7400, Flurazole, Furilazole und der Verbindung (II d-25) 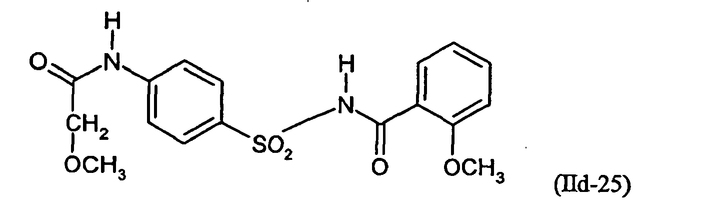 ist.

6. Mittel nach Anspruch 1 **dadurch gekennzeichnet, dass** die Verbindung der Gruppe (b) eine Verbindung der Formel (IIe) ist, bei der die Reste R¹³, R¹⁶, R¹⁷, (X⁴)ₙ und (X⁵)ₙ die in der folgenden Tabelle aufgeführten Bedeutungen haben :
| R¹³ | R¹⁶ | R¹⁷ | (Positionen) (X⁴)ₙ | (Positionen) (X⁵)ₙ |
|---|---|---|---|---|
| H | H | CH₃ | (2) OCH₃ | - |
| H | H | C₂H₅ | (2) OCH₃ | - |
| H | H | C₃H₇-n | (2) OCH₃ | - |
| H | H | C₃H₇-i | (2) OCH₃ | - |
| H | H | 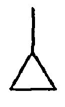 | (2) OCH₃ | - |
| H | CH₃ | CH₃ | (2) OCH₃ | - |
| H | H | CH₃ | (2) OCH₃ | - |
| | | | (5) CH₃ | |
| H | H | C₂H₅ | (2) CCH₃ | - |
| | | | (5) CH₃ | |
| H | H | C₃H₇-n | (2) OCH₃ | - |
| | | | (5) CH₃ | |
| H | H | C₃H₇-i | (2) OCH₃ | - |
| | | | (5) CH₃ | |
| H | H | 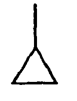 | (2) OCH₃ | - |
| | | | (5) CH₃ | |
| H | CH₃ | CH₃ | (2)OCH₃ | - |
| | | | (5) CH₃ | |
| H | H | CH₂CH=CH₂ | (2)OCH₃ | - |
| H | H | CH₂CH=CH₂ | (2) OCH₃ | - |
| | | | (5) CH₃ | |
| H | H | 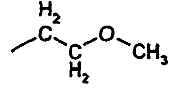 | (2) OCH₃ | - |
| H | H | 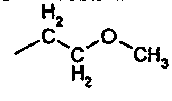 | (2) OCH₃ | - |
| | | | (5) CH₃ | |
| H | H | 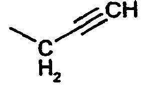 | (2)OCH₃ | - |
| H | H | 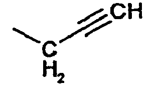 | (2) OCH₃ | - |
| | | | (5) CH₃ | |
| H | H | 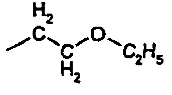 | (2) OCH₃ | - |
| H | H | 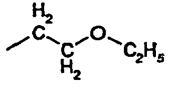 | (2) OCH₃ | - |
| | | | (5) CH₃ | |

7. Mittel nach Anspruch 5 oder 6, **dadurch gekennzeichnet, dass** die Verbindung der Formel (I) oder das Natriumsalz von Verbindungen der Formel (I) eine in der folgenden Tabelle angegebene Bedeutung der Reste Q¹, Q², R¹, R², R³ und R⁴ in der Formel (I) aufweist:
| Q¹ | Q² | R¹ | R² | R³ | R⁴ |
|---|---|---|---|---|---|
| O | O | CH₃ | CH₃ | OC₂H₅ | CH₃ |
| O | O | CH₃ | CH₃ | OCH₃ | CH₃ |
| O | O | CH₃ | CH₃ | OC₃H₇-n | CH₃ |
| O | O | CH₃ | CH₃ | OC₃H₇-i | CH₃ |
| O | O | CH₃ | CH₃ | OCH₃ | 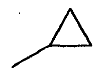 |
| O | O | CH₃ | CH₃ | OC₂H₅ | 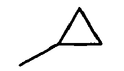 |
| O | O | CH₃ | CH₃ | OC₃H₇-n | 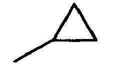 |
| O | O | CH₃ | CH₃ | OC₃H₇-i | 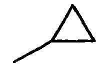 |
| O | O | CH₃ | CH₃ | 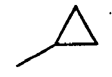 | 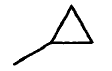 |
| O | O | CH₃ | CH₃ | CH₃ | CH₃ |
| O | O | CH₃ | CH₃ | C₂H₅ | CH₃ |
| O | O | CH₃ | CH₃ | SCH₃ | CH₃ |
| O | O | C₂H₅ | CH₃ | OCH₃ | CH₃ |
| O | O | CH₃ | CH₃ | CH₂OCH₃ | 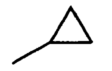 |
| O | O | C₂H₅ | CH₃ | OC₂H₅ | CH₃ |
| O | O | C₂H₅ | CH₃ | OCH₃ | 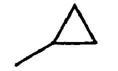 |
| O | O | CH₃ | CH₃ | C₂H₅ | OC₂H₅ |
| O | O | CH₃ | CH₃ | C₂H₅ | 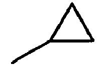 |

8. Verwendung eines Mittels nach Anspruch 1 zur Bekämpfung von unerwünschten Pflanzen.

9. Verfahren zur Bekämpfung von unerwünschten Pflanzen, **dadurch gekennzeichnet, dass** man Mittel nach Anspruch 1 auf die unerwünschten Pflanzen und/oder ihren Lebensraum einwirken lässt.

10. Verfahren zur Herstellung eines herbiziden Mittels, **dadurch gekennzeichnet, dass** man ein Mittel nach Anspruch 1 mit oberflächenaktiven Mitteln und/oder Streckmitteln vermischt.

## Claims

1. Composition, comprising an active compound combination comprising
(a) one or more compounds of the formula (I) 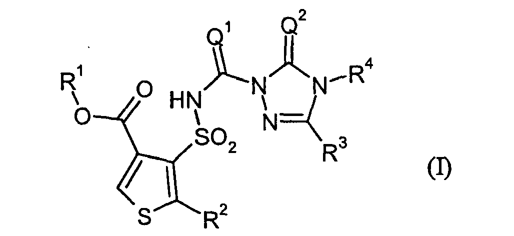 in which
Q¹ represents O (oxygen) or S (sulphur),
Q² represents O (oxygen) or S (sulphur),
R¹ represents optionally cyano-, halogen- or C₁-C₄-alkoxy-substituted alkyl having 1 to 6 carbon atoms, represents in each case optionally cyano- or halogen-substituted alkenyl or alkynyl having in each case 2 to 6 carbon atoms, represents in each case optionally cyano-, halogen- or C₁-C₄-alkyl-substituted cycloalkyl or cycloalkylalkyl having in each case 3 to 6 carbon atoms in the cycloalkyl group and, if appropriate, 1 to 4 carbon atoms in the alkyl moiety, represents in each case optionally nitro-, cyano-, halogen-, C₁-C₄-alkyl- or C₁-C₄-alkoxy-substituted aryl or arylalkyl having in each case 6 or 10 carbon atoms in the aryl group and, if appropriate, 1 to 4 carbon atoms in the alkyl moiety, or represents in each case optionally nitro-, cyano-, halogen-, C₁-C₄-alkyl- or C₁-C₄-alkoxy-substituted heterocyclyl or heterocyclylalkyl having in each case up to 6 carbon atoms and additionally 1 to 4 nitrogen atoms and/or 1 or 2 oxygen or sulphur atoms in the heterocyclyl group and, if appropriate, 1 to 4 carbon atoms in the alkyl moiety,
R² represents hydrogen, cyano, nitro, halogen, represents in each case optionally cyano-, halogen- or C₁-C₄-alkoxy-substituted alkyl, alkoxy, alkoxycarbonyl, alkylthio, alkylsulphinyl or alkylsulphonyl having in each case 1 to 6 carbon atoms in the alkyl group, or represents in each case optionally cyano- or halogen-substituted alkenyl, alkynyl, alkenyloxy or alkynyloxy having in each case 2 to 6 carbon atoms in the alkenyl or alkynyl group,
R³ represents hydrogen, hydroxyl, mercapto, amino, cyano, fluorine, chlorine, bromine, iodine, represents optionally fluorine-, chlorine-, bromine-, cyano-, C₁-C₄-alkoxy-, C₁-C₄-alkyl-carbonyl- or C₁-C₄-alkoxy-carbonyl-substituted alkyl having 1 to 6 carbon atoms, represents in each case optionally fluorine-, chlorine- and/or bromine-substituted alkenyl or alkynyl having in each case 2 to 6 carbon atoms, represents in each case optionally fluorine-, chlorine-, cyano-, C₁-C₄-alkoxy- or C₁-C₄-alkoxy-carbonyl-substituted alkoxy, alkylthio, alkylamino or alkylcarbonylamino having in each case 1 to 6 carbon atoms in the alkyl group, represents alkenyloxy, alkynyloxy, alkenylthio, alkynylthio, alkenylamino or alkynylamino having in each case 3 to 6 carbon atoms in the alkenyl or alkynyl group, represents dialkylamino having in each case 1 to 4 carbon atoms in the alkyl groups, represents in each case optionally methyl- and/or ethyl-substituted aziridino, pyrrolidino, piperidino or morpholino, represents in each case optionally fluorine-, chlorine-, bromine-, cyano- and/or C₁-C₄-alkyl-substituted cycloalkyl, cycloalkenyl, cycloalkyloxy, cycloalkylthio, cycloalkylamino, cycloalkylalkyl, cycloalkylalkoxy, cycloalkylalkylthio or cycloalkylalkylamino having in each case 3 to 6 carbon atoms in the cycloalkyl or cycloalkenyl group and, if appropriate, 1 to 4 carbon atoms in the alkyl moiety, or represents in each case optionally fluorine-, chlorine-, bromine-, cyano-, nitro-, C₁-C₄-alkyl-, trifluoromethyl-, C₁-C₄-alkoxy- and/or C₁-C₄-alkoxy-carbonyl-substituted aryl, arylalkyl, aryloxy, arylalkoxy, arylthio, arylalkylthio, arylamino or arylalkylamino having in each case 6 or 10 carbon atoms in the aryl group and, if appropriate, 1 to 4 carbon atoms in the alkyl moiety,
R⁴ represents hydrogen, hydroxyl, amino, cyano, represents C₂-C₁₀-alkylideneamino, represents optionally fluorine-, chlorine-, bromine-, cyano-, C₁-C₄-alkoxy-, C₁-C₄-akyl-carbonyl- or C₁-C₄-alkoxycarbonyl-substituted alkyl having 1 to 6 carbon atoms, represents in each case optionally fluorine-, chlorine- and/or bromine-substituted alkenyl or alkynyl having in each case 2 to 6 carbon atoms, represents in each case optionally fluorine-, chlorine-, bromine-, cyano-, C₁-C₄-alkoxy- or C₁-C₄-alkoxy-carbonyl-substituted alkoxy, alkylamino or alkyl-carbonylamino having in each case 1 to 6 carbon atoms in the alkyl group, represents alkenyloxy having 3 to 6 carbon atoms, represents dialkylamino having in each case 1 to 4 carbon atoms in the alkyl groups, represents in each case optionally fluorine-, chlorine-, bromine-, cyano- and/or C₁-C₄-alkyl-substituted cycloalkyl, cycloalkylamino or cycloalkylalkyl having in each case 3 to 6 carbon atoms in the alkyl group and, if appropriate, 1 to 4 carbon atoms in the alkyl moiety, or represents in each case optionally fluorine-, chlorine-, bromine-, cyano-, nitro-, C₁-C₄-alkyl-, trifluoromethyl- and/or C₁-C₄-alkoxy-substituted aryl or arylalkyl having in each case 6 or 10 carbon atoms in the aryl group and, if appropriate, 1 to 4 carbon atoms in the alkyl moiety, or
R³ and R⁴ together represent optionally branched alkanediyl having 3 to 6 carbon atoms,
- and salts of the compounds of the formula (I) -
and
(b) at least one compound from the group of compounds below:
4-dichloroacetyl-1-oxa-4-aza-spiro[4.5]-decane (AD-67, MON-4660), 1-methyl-hexyl 5-chloro-quinolin-8-oxy-acetate (cloquintocet-mexyl), 2,2-dichloro-N,N-di-2-propenyl-acetamide (dichlormid), ethyl 1-(2,4-dichlorophenyl)-5-trichloro-methyl-1H-1,2,4-triazole-3-carboxylate (fenchlorazole-ethyl), phenyl-methyl 2-chloro-4-trifluoromethyl-thiazole-5-carboxylate (flurazole), 3-dichloroacetyl-5-(2-furanyl)-2,2-dimethyl-oxazolidine (furilazole), ethyl 4,5-dihydro-5,5-diphenyl-3-isoxazolecarboxylate (isoxadifen-ethyl), diethyl 1-(2,4-dichlorophenyl)-4,5-dihydro-5-methyl-1H-pyrazole-3,5-dicarboxylate (mefenpyr-diethyl), methyl diphenylmethoxyacetate (MON-7400),
and/or the following compounds
of the formula (IIa) 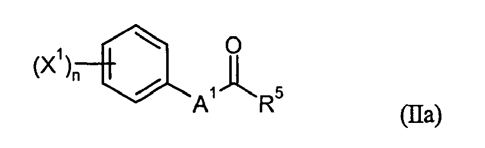 or the formula (IIb) 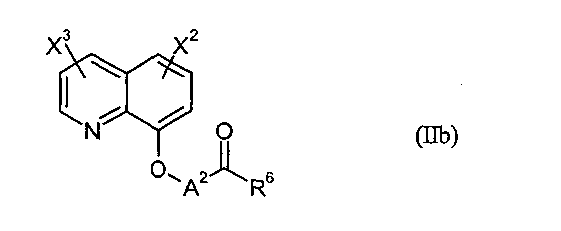 or the formula (IIc) 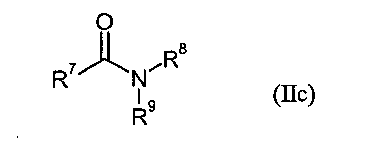 where
n represents a number between 0 and 5,
A¹ represents one of the divalent heterocyclic groupings shown below, 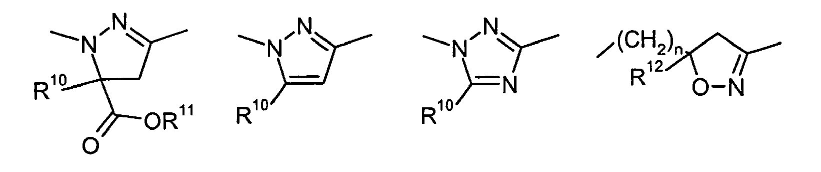
A² represents optionally C₁-C₄-alkyl- and/or C₁-C₄-alkoxy-carbonyl-substituted alkanediyl having 1 or 2 carbon atoms,
R⁵ represents hydroxyl, mercapto, amino, C₁-C₆-alkoxy, C₁-C₆-alkylthio, C₁-C₆-alkylamino or di-(C₁-C₄-alkyl)-amino,
R⁶ represents hydroxyl, mercapto, amino, in each case optionally C₁-C₄-alkyl-, C₁-C₄-alkoxy- or C₂-C₄-alkenoxy-substituted C₁-C₆-alkoxy, C₂-C₆-alkenoxy, C₁-C₆-alkylthio, C₁-C₆-alkylamino or di-(C₁-C₄-alkyl)-amino,
R⁷ represents in each case optionally fluorine-, chlorine- and/or bromine-substituted C₁-C₄-alkyl,
R⁸ represents hydrogen, in each case optionally fluorine-, chlorine- and/or bromine-substituted C₁-C₆-alkyl, C₂-C₆-alkenyl or C₂-C₆-alkynyl, C₁-C₄-alkoxy-C₁-C₄-alkyl, dioxolanyl-C₁-C₄-alkyl, furyl, furyl-C₁-C₄-alkyl, thienyl, thiazolyl, piperidinyl, or optionally fluorine-, chlorine- and/or bromine- or C₁-C₄-alkyl-substituted phenyl,
R⁹ represents hydrogen, in each case optionally fluorine-, chlorine- and/or bromine-substituted C₁-C₆-akyl, C₂-C₆-alkenyl or C₂-C₆-alkynyl, C₁-C₄-alkoxy-C₁-C₄-alkyl, dioxolanyl-C₁-C₄-alkyl, furyl, furyl-C₁-C₄-alkyl, thienyl, thiazolyl, piperidinyl, or optionally fluorine-, chlorine- and/or bromine- or C₁-C₄-alkyl-substituted phenyl, or together with R⁸ represents C₃-C₆-alkanediyl or C₂-C₅-oxaalkanediyl, each of which is optionally substituted by C₁-C₄-alkyl, phenyl, furyl, a fused-on benzene ring or by two substituents which together with the C atom to which they are attached form a 5- or 6-membered carbocycle,
R¹⁰ represents hydrogen, cyano, halogen, or represents in each case optionally fluorine-, chlorine- and/or bromine-substituted C₁-C₄-alkyl, C₃-C₆-cycloalkyl or phenyl,
R¹¹ represents hydrogen, optionally hydroxyl-, cyano-, halogen- or C₁-C₄-alkoxy-substituted C₁-C₆-alkyl, C₃-C₆-cycloalkyl or tri-(C₁-C₄-alkyl)-silyl,
R¹² represents hydrogen, cyano, halogen, or represents in each case optionally fluorine-, chlorine- and/or bromine-substituted C₁-C₄-alkyl, C₃-C₆-cycloalkyl or phenyl,
X¹ represents nitro, cyano, halogen, C₁-C₄-alkyl, C₁-C₄-haloalkyl, C₁-C₄-alkoxy or C₁-C₄-haloalkoxy,
X² represents hydrogen, cyano, nitro, halogen, C₁-C₄-alkyl, C₁-C₄-haloalkyl, C₁-C₄-alkoxy or C₁-C₄-haloalkoxy,
X³ represents hydrogen, cyano, nitro, halogen, C₁-C₄-alkyl, C₁-C₄-haloalkyl, C₁-C₄-alkoxy or C₁-C₄-haloalkoxy,
and/ or the following compounds
of the formula (IId) 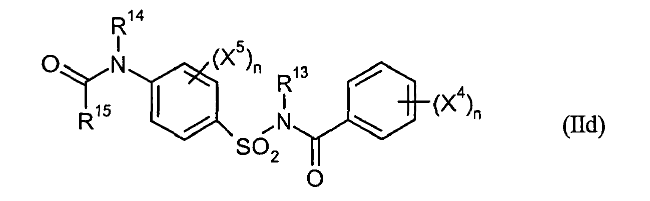 or of the formula (IIe) 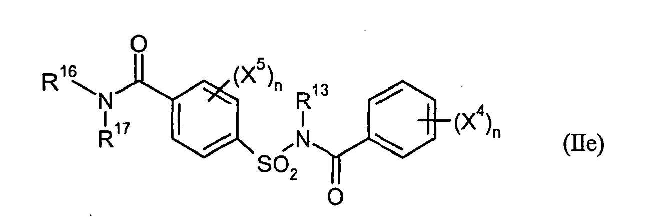 where
n again represents a number between 0 and 5,
R¹³ represents hydrogen or C₁-C₄-alkyl,
R¹⁴ represents hydrogen or C₁-C₄-alkyl,
R¹⁵ represents hydrogen, in each case optionally cyano-, halogen- or C₁-C₄-alkoxy-substituted C₁-C₆-alkyl, C₁-C₆-alkoxy, C₁-C₆-alkylthio, C₁-C₆-alkylamino or di-(C₁-C₄-alkyl)-amino, or in each case optionally cyano-, halogen- or C₁-C₄-alkyl-substituted C₃-C₆-cycloalkyl, C₃-C₆-cycloalkyloxy, C₃-C₆-cycloalkylthio or C₃-C₆-cycloalkylamino,
R¹⁶ represents hydrogen, optionally cyano-, hydroxyl-, halogen- or C₁-C₄-alkoxy-substituted C₁-C₆-alkyl, in each case optionally cyano- or halogen-substituted C₃-C₆-alkenyl or C₃-C₆-alkynyl, or optionally cyano-, halogen- or C₁-C₄-alkyl-substituted C₃-C₆-cycloalkyl,
R¹⁷ represents hydrogen, optionally cyano-, hydroxyl-, halogen- or C₁-C₄-alkoxy-substituted C₁-C₆-alkyl, in each case optionally cyano- or halogen-substituted C₃-C₆-alkenyl or C₃-C₆-alkynyl, optionally cyano-, halogen- or C₁-C₄-alkyl-substituted C₃-C₆-cycloalkyl, or optionally nitro-, cyano-, halogen-, C₁-C₄-alkyl-, C₁-C₄-haloalkyl-, C₁-C₄-alkoxy- or C₁-C₄-haloalkoxy-substituted phenyl, or together with R¹⁶ represents in each case optionally C₁-C₄-alkyl-substituted C₂-C₆-alkanediyl or C₂-C₅-oxaalkanediyl,
X⁴ represents nitro, cyano, carboxyl, carbamoyl, formyl, sulphamoyl, hydroxyl, amino, halogen, C₁-C₄-alkyl, C₁-C₄-haloalkyl, C₁-C₄-alkoxy or C₁-C₄-haloalkoxy, and
X⁵ represents nitro, cyano, carboxyl, carbamoyl, formyl, sulphamoyl, hydroxyl, amino, halogen, C₁-C₄-alkyl, C₁-C₄-haloalkyl, C₁-C₄-alkoxy or C₁-C₄-haloalkoxy.

2. Composition according to Claim 1, **characterized in that**
Q¹ represents O (oxygen) or S (sulphur),
Q² represents O (oxygen) or S (sulphur),
R¹ represents in each case optionally cyano-, fluorine-, chlorine-, methoxy- or ethoxy-substituted methyl, ethyl, n- or i-propyl, n-, i-, s- or t-butyl, represents in each case optionally cyano-, fluorine- or chlorine-substituted propenyl, butenyl, propynyl or butynyl, represents in each case optionally cyano-, fluorine-, chlorine-, methyl- or ethyl-substituted cyclopropyl, cyclobutyl, cyclopentyl, cyclohexyl, cyclopropylmethyl, cyclobutylmethyl, cyclopentylmethyl or cyclohexylmethyl, represents in each case optionally cyano-, fluorine-, chlorine-, bromine-, methyl-, ethyl-, n- or i-propyl-, trifluoromethyl-, methoxy-, ethoxy-, n- or i-propoxy-, difluoromethoxy- or trifluoromethoxy-substituted phenyl, phenylmethyl or phenylethyl, or represents in each case optionally cyano-, fluorine-, chlorine-, bromine-, methyl-, ethyl-, n- or i-propyl-, methoxy-, ethoxy-, n- or i-propoxy-substituted heterocyclyl or heterocyclylmethyl, where the heterocyclyl group is in each case selected from the group consisting of oxetanyl, thietanyl, furyl, tetrahydrofuryl, thienyl, tetrahydrothienyl,
R² represents hydrogen, cyano, fluorine, chlorine, bromine, represents in each case optionally cyano-, fluorine-, chlorine-, methoxy- or ethoxy-substituted methyl, ethyl, n- or i-propyl, n-, i-, s- or t-butyl, methoxy, ethoxy, n- or i-propoxy, methoxycarbonyl, ethoxycarbonyl, n- or i-propoxycarbonyl, methylthio, ethylthio, n- or i-propylthio, methylsulphinyl, ethylsulphinyl, methylsulphonyl or ethylsulphonyl, or represents in each case optionally cyano-, fluorine- or chlorine-substituted propenyl, butenyl, propynyl, butynyl, propenyloxy, butenyloxy, propynyloxy or butynyloxy,
R³ represents hydrogen, hydroxyl, mercapto, amino, cyano, fluorine, chlorine, bromine, represents in each case optionally fluorine-, chlorine-, cyano-, methoxy-, ethoxy-, n- or i-propoxy-, acetyl-, propionyl-, n- or i-butyroyl, methoxycarbonyl-, ethoxycarbonyl-, n- or i-propoxycarbonyl-substituted methyl, ethyl, n- or i-propyl, n-, i-, s- or t-butyl, represents in each case optionally fluorine-, chlorine- and/or bromine-substituted ethenyl, propenyl, butenyl, ethynyl, propynyl or butynyl, represents in each case optionally fluorine-, chlorine-, cyano-, methoxy-, ethoxy-, n- or i-propoxy-, methoxycarbonyl-, ethoxycarbonyl-, n- or i-propoxycarbonyl-substituted methoxy, ethoxy, n- or i-propoxy, n-, i-, s- or t-butoxy, methylthio, ethylthio, n- or i-propylthio, n-, i-, s- or t-butylthio, methylamino, ethylamino, n- or i-propylamino, n-, i-, s- or t-butylamino, acetylamino or propionylamino, represents propenyloxy, butenyloxy, ethynyloxy, propynyloxy, butynyloxy, propenylthio, butenylthio, propynylthio, butynylthio, propenylamino, butenylamino, propynylamino or butynylamino, represents dimethylamino, diethylamino or dipropylamino, represents in each case optionally fluorine-, chlorine-, methyl- and/or ethyl-substituted cyclopropyl, cyclobutyl, cyclopentyl, cyclohexyl, cyclopentenyl, cyclohexenyl, cyclopropyloxy, cyclobutyloxy, cyclopentyloxy, cyclohexyloxy, cyclopropylthio, cyclobutylthio, cyclopentylthio, cyclohexylthio, cyclopropylamino, cyclobutylamino, cyclopentylamino, cyclohexylamino, cyclopropylmethyl, cyclobutylmethyl, cyclopentylmethyl, cyclohexylmethyl, cyclopropylmethoxy, cyclobutylmethoxy, cyclopentylmethoxy, cyclohexylmethoxy, cyclopropylmethylthio, cyclobutylmethylthio, cyclopentylmethylthio, cyclohexylmethylthio, cyclopropylmethylamino, cyclobutylmethylamino, cyclopentylmethylamino or cyclohexylmethylamino, or represents in each case optionally fluorine-, chlorine-, bromine-, methyl-, trifluoromethyl-, methoxy- or methoxycarbonyl-substituted phenyl, benzyl, phenoxy, benzyloxy, phenylthio, benzylthio, phenylamino or benzylamino, and
R⁴ represents hydrogen, hydroxyl, amino, represents in each case optionally fluorine-, chlorine-, cyano-, methoxy- or ethoxy-substituted methyl, ethyl, n- or i-propyl, n-, i-, s- or t-butyl, represents in each case optionally fluorine-, chlorine- and/or bromine-substituted ethenyl, propenyl, butenyl, propynyl or butynyl, represents in each case optionally fluorine-, chlorine-, cyano-, methoxy- or ethoxy-substituted methoxy, ethoxy, n- or i-propoxy, n-, i-, s- or t-butoxy, methylamino, ethylamino, n- or i-propylamino, n-, i-, s- or t-butylamino, represents propenyloxy or butenyloxy, represents dimethylamino or diethylamino, represents in each case optionally fluorine-, chlorine-, methyl- and/or ethyl-substituted cyclopropyl, cyclobutyl, cyclopentyl, cyclohexyl, cyclopropylamino, cyclobutylamino, cyclopentylamino, cyclohexylamino, cyclopropylmethyl, cyclobutylmethyl, cyclopentylmethyl or cyclohexylmethyl, or represents in each case optionally fluorine-, chlorine-, methyl-, trifluoromethyl- and/or methoxy-substituted phenyl or benzyl, or
R³ and R⁴ together represent trimethylene (propane-1,3-diyl), tetramethylene (butane-1,4-diyl) or pentamethylene (pentane-1,5-diyl).

3. Composition according to Claim 1, **characterized in that**
Q¹ represents O (oxygen),
Q² represents O (oxygen),
R¹ represents in each case optionally fluorine-, chlorine-, methoxy- or ethoxy-substituted methyl, ethyl, n- or i-propyl,
R² represents fluorine, chlorine, bromine or represents in each case optionally fluorine-, chlorine-, methoxy- or ethoxy-substituted methyl, ethyl, n- or i-propyl,
R³ represents hydrogen, chlorine, bromine, represents in each case optionally fluorine-, chlorine-, methoxy-, ethoxy-, n- or i-propoxy-substituted methyl, ethyl, n- or i-propyl, represents in each case optionally fluorine- or chlorine-substituted ethenyl, propenyl, butenyl, propynyl or butynyl, represents in each case optionally fluorine-, chlorine-, methoxy-, ethoxy-, n- or i-propoxy-substituted methoxy, ethoxy, n- or i-propoxy, methylthio, ethylthio, n- or i-propylthio, methylamino, ethylamino, n- or i-propylamino, represents propenyloxy, propynyloxy, propenylthio, propynylthio, propenylamino or propynylamino, represents dimethylamino or diethylamino, represents in each case optionally fluorine-, chlorine- or methyl-substituted cyclopropyl, cyclopropyloxy, cyclopropylmethyl or cyclopropylmethoxy, and
R⁴ represents in each case optionally fluorine-, chlorine-, methoxy- or ethoxy-substituted methyl, ethyl, n- or i-propyl, represents in each case optionally fluorine- or chlorine-substituted ethenyl, propenyl or propynyl, represents in each case optionally fluorine-, chlorine-, methoxy- or ethoxy-substituted methoxy, ethoxy, n- or i-propoxy, represents methylamino, or represents cyclopropyl.

4. Composition according to Claim 1, **characterized in that**
n represents the numbers 0, 1, 2, 3 or 4,
A² represents in each case optionally methyl-, ethyl-, methoxycarbonyl- or ethoxycarbonyl-substituted methylene or ethylene,
R⁵ represents hydroxyl, mercapto, amino, methoxy, ethoxy, n- or i-propoxy, n-, i-, s- or t-butoxy, methylthio, ethylthio, n- or i-propylthio, n-, i-, s- or t-butylthio, methylamino, ethylamino, n- or i-propylamino, n-, i-, s- or t-butylamino, dimethylamino or diethylamino,
R⁶ represents hydroxyl, mercapto, amino, methoxy, ethoxy, n- or i-propoxy, n-, i-, s- or t-butoxy, methylthio, ethylthio, n- or i-propylthio, n-, i-, s- or t-butylthio, methylamino, ethylamino, n- or i-propylamino, n-, i-, s- or t-butylamino, dimethylamino or diethylamino,
R⁷ represents in each case optionally fluorine-, chlorine- and/or bromine-substituted methyl, ethyl, n- or i-propyl,
R⁸ represents hydrogen, in each case optionally fluorine- and/or chlorine-substituted methyl, ethyl, n- or i-propyl, n-, i-, s- or t-butyl, propenyl, butenyl, propynyl or butynyl, methoxymethyl, ethoxymethyl, methoxyethyl, ethoxyethyl, dioxolanylmethyl, furyl, furylmethyl, thienyl, thiazolyl, piperidinyl, or optionally fluorine-, chlorine-, methyl-, ethyl-, n- or i-propyl-, n-, i-, s- or t-butyl-substituted phenyl,
R⁹ represents hydrogen, in each case optionally fluorine- and/or chlorine-substituted methyl, ethyl, n- or i-propyl, n-, i-, s- or t-butyl, propenyl, butenyl, propynyl or butynyl, methoxymethyl, ethoxymethyl, methoxyethyl, ethoxyethyl, dioxolanylmethyl, furyl, furylmethyl, thienyl, thiazolyl, piperidinyl, or optionally fluorine-, chlorine-, methyl-, ethyl-, n- or i-propyl-, n-, i-, s- or t-butyl-substituted phenyl, or together with R⁸ represents one of the radicals -CH₂-O-CH₂-CH₂- and -CH₂-CH₂-O-CH₂-CH₂- which are optionally substituted by methyl, ethyl, furyl, phenyl, a fused benzene ring or by two substituents which together with the C atom to which they are attached form a 5- or 6-membered carbocycle,
R¹⁰ represents hydrogen, cyano, fluorine, chlorine, bromine, or represents in each case optionally fluorine-, chlorine- and/or bromine-substituted methyl, ethyl, n- or i-propyl, cyclopropyl, cyclobutyl, cyclopentyl, cyclohexyl or phenyl,
R¹¹ represents hydrogen, in each case optionally hydroxyl-, cyano-, fluorine-, chlorine-, methoxy-, ethoxy-, n- or i-propoxy-substituted methyl, ethyl, n- or i-propyl, n-, i-, s- or t-butyl,
R¹² represents hydrogen, cyano, fluorine, chlorine, bromine, or represents in each case optionally fluorine-, chlorine- and/or bromine-substituted methyl, ethyl, n- or i-propyl, n-, i-, s- or t-butyl, cyclopropyl, cyclobutyl, cyclopentyl, cyclohexyl or phenyl,
X¹ represents nitro, cyano, fluorine, chlorine, bromine, methyl, ethyl, n- or i-propyl, n-, i-, s- or t-butyl, difluoromethyl, dichloromethyl, trifluoromethyl, trichloromethyl, chlorodifluoromethyl, fluorodichloromethyl, methoxy, ethoxy, n- or i-propoxy, difluoromethoxy or trifluoromethoxy,
X² represents hydrogen, nitro, cyano, fluorine, chlorine, bromine, methyl, ethyl, n- or i-propyl, n-, i-, s- or t-butyl, difluoromethyl, dichloromethyl, trifluoromethyl, trichloromethyl, chlorodifluoromethyl, fluorodichloromethyl, methoxy, ethoxy, n- or i-propoxy, difluoromethoxy or trifluoromethoxy,
X³ represents hydrogen, nitro, cyano, fluorine, chlorine, bromine, methyl, ethyl, n- or i-propyl, n-, i-, s- or t-butyl, difluoromethyl, dichloromethyl, trifluoromethyl, trichloromethyl, chlorodifluoromethyl, fluorodichloromethyl, methoxy, ethoxy, n- or i-propoxy, difluoromethoxy or trifluoromethoxy,
R¹³ represents hydrogen, methyl, ethyl, n- or i-propyl,
R¹⁴ represents hydrogen, methyl, ethyl, n- or i-propyl,
R¹⁵ represents hydrogen, in each case optionally cyano-, fluorine-, chlorine-, methoxy-, ethoxy-, n- or i-propoxy-substituted methyl, ethyl, n- or i-propyl, n-, i-, s- or t-butyl, methoxy, ethoxy, n- or i-propoxy, n-, i-, s- or t-butoxy, methylthio, ethylthio, n- or i-propylthio, n-, i-, s- or t-butylthio, methylamino, ethylamino, n- or i-propylamino, n-, i-, s- or t-butylamino, dimethylamino or diethylamino, or in each case optionally cyano-, fluorine-, chlorine-, bromine-, methyl-, ethyl-, n- or i-propyl-substituted cyclopropyl, cyclobutyl, cyclopentyl, cyclohexyl, cyclopropyloxy, cyclobutyloxy, cyclopentyloxy, cyclohexyloxy, cyclopropylthio, cyclobutylthio, cyclopentylthio, cyclohexylthio, cyclopropylamino, cyclobutylamino, cyclopentylamino or cyclohexylamino,
R¹⁶ represents hydrogen, in each case optionally cyano-, hydroxyl-, fluorine-chlorine-, methoxy-, ethoxy-, n- or i-propoxy-substituted methyl, ethyl, n- or i-propyl, n-, i- or s-butyl, in each case optionally cyano-, fluorine-, chlorine- or bromine-substituted propenyl, butenyl, propynyl or butynyl, or in each case optionally cyano-, fluorine-, chlorine-, bromine-, methyl-, ethyl-, n- or i-propyl-substituted cyclopropyl, cyclobutyl, cyclopentyl or cyclohexyl,
R¹⁷ represents hydrogen, in each case optionally cyano-, hydroxyl-, fluorine-chlorine-, methoxy-, ethoxy-, n- or i-propoxy-substituted methyl, ethyl, n- or i-propyl, n-, i- or s-butyl, in each case optionally cyano-, fluorine-, chlorine- or bromine-substituted propenyl, butenyl, propynyl or butynyl, or in each case optionally cyano-, fluorine-, chlorine-, bromine-, methyl-, ethyl-, n- or i-propyl-substituted cyclopropyl, cyclobutyl, cyclopentyl or cyclohexyl, or optionally nitro-, cyano-, fluorine-, chlorine-, bromine-, methyl-, ethyl-, n- or i-propyl-, n-, i-, s- or t-butyl-, trifluoromethyl-, methoxy-, ethoxy-, n- or i-propoxy-, difluoromethoxy- or trifluoromethoxy-substituted phenyl, or together with R¹⁶ represents in each case optionally methyl- or ethyl-substituted butane-1,4-diyl (tri-methylene), pentane-1,5-diyl, 1-oxabutane-1,4-diyl or 3-oxapentane-1,5-diyl,
X⁴ represents nitro, cyano, carboxyl, carbamoyl, formyl, sulphamoyl, hydroxyl, amino, fluorine, chlorine, bromine, methyl, ethyl, n- or i-propyl, n-, i-, s- or t-butyl, trifluoromethyl, methoxy, ethoxy, n- or i-propoxy, difluoromethoxy or trifluoromethoxy, and
X⁵ represents nitro, cyano, carboxyl, carbamoyl, formyl, sulphamoyl, hydroxyl, amino, fluorine, chlorine, bromine, methyl, ethyl, n- or i-propyl, n-, i-, s- or t-butyl, trifluoromethyl, methoxy, ethoxy, n- or i-propoxy, difluoromethoxy or trifluoromethoxy.

5. Composition according to Claim 1, **characterized in that** the component (b) is one or more of the compounds selected from the active compounds AD-67, cloquintocet-mexyl, dichlormid, fenchlorazole-ethyl, isoxadifen-ethyl, mefenpyr-diethyl, MON-7400, flurazole, furilazole and the compound (II d-25)

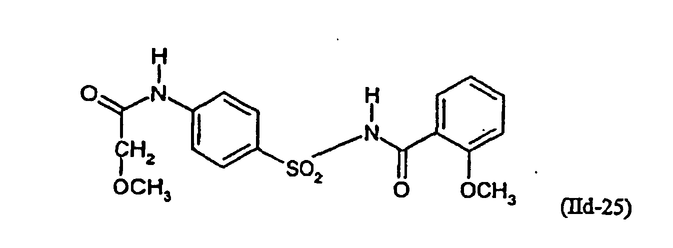

6. Composition according to Claim 1, **characterized in that** the compound of the group (b) is a compound of the formula (IIe), in which the radicals R¹³, R¹⁶, R¹⁷, (X⁴)ₙ and (X⁵)ₙ have the meanings listed in the following table:
| R¹³ | R¹⁶ | R¹⁷ | (positions) (X⁴)ₙ | (positions) (X⁵)ₙ |
|---|---|---|---|---|
| H | H | CH₃ | (2) OCH₃ | - |
| H | H | C₂H₅ | (2) OCH₃ | - |
| H | H | C₃H₇-n | (2) OCH₃ | - |
| H | H | C₃H₇-i | (2) OCH₃ | - |
| H | H | 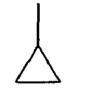 | (2) OCH₃ | - |
| H | CH₃ | CH₃ | (2) OCH₃ | - |
| H | H | CH₃ | (2) OCH₃ | - |
| | | | (5) CH₃ | |
| H | H | C₂H₅ | (2) OCH₃ | - |
| | | | (5) CH₃ | |
| H | H | C₃H₇-n | (2) OCH₃ | - |
| | | | (5) CH₃ | |
| H | H | C₃H₇-i | (2) OCH₃ | - |
| | | | (5) CH₃ | |
| H | H | 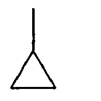 | (2) OCH₃ | - |
| | | | (5) CH₃ | |
| H | CH₃ | CH₃ | (2) OCH₃ | - |
| | | | (5) CH₃ | |
| H | H | CH₂CH=CH₂ | (2) OCH₃ | - |
| H | H | CH₂CH=CH₂ | (2) OCH₃ | - |
| | | | (5) CH₃ | |
| H | H | 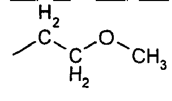 | (2) OCH₃ | - |
| H | H | 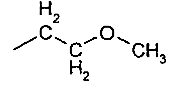 | (2) OCH₃ | - |
| | | | (5) CH₃ | |
| H | H | 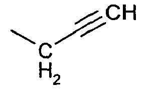 | (2) OCH₃ | - |
| H | H | 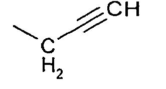 | (2) OCH₃ | - |
| | | | (5) CH₃ | |
| H | H | 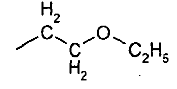 | (2) OCH₃ | - |
| H | H | 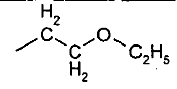 | (2) OCH₃ | - |
| | | | (5) CH₃ | |

7. Composition according to Claim 5 or 6, **characterized in that** the compound of the formula (I) or the sodium salt of compounds of the formula (I) has the meaning of the radicals Q¹, Q², R¹, R², R³ and R⁴ in the formula (I) which is listed in the following table:
| Q¹ | Q² | R¹ | R² | R³ | R⁴ |
|---|---|---|---|---|---|
| O | O | CH₃ | CH₃ | OC₂H₅ | CH₃ |
| O | O | CH₃ | CH₃ | OCH₃ | CH₃ |
| O | O | CH₃ | CH₃ | OC₃H₇-n | CH₃ |
| O | O | CH₃ | CH₃ | OC₃H₇-i | CH₃ |
| O | O | CH₃ | CH₃ | OCH₃ | 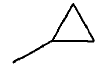 |
| O | O | CH₃ | CH₃ | OC₂H₅ | 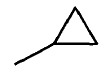 |
| O | O | CH₃ | CH₃ | OC₃H₇-n | 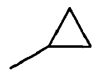 |
| O | O | CH₃ | CH₃ | OC₃H₇-i | 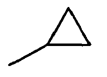 |
| O | O | CH₃ | CH₃ | 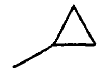 | 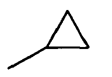 |
| O | O | CH₃ | CH₃ | CH₃ | CH₃ |
| O | O | CH₃ | CH₃ | C₂H₅ | CH₃ |
| O | O | CH₃ | CH₃ | SCH₃ | CH₃ |
| O | O | C₂H₅ | CH₃ | OCH₃ | CH₃ |
| O | O | CH₃ | CH₃ | CH₂OCH₃ | 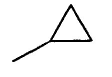 |
| O | O | C₂H₅ | CH₃ | OC₂H₅ | CH₃ |
| O | O | C₂H₅ | CH₃ | OCH₃ | 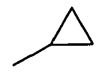 |
| O | O | CH₃ | CH₃ | C₂H₅ | OC₂H₅ |
| O | O | CH₃ | CH₃ | C₂H₅ | 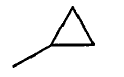 |

8. Use of a composition according to Claim 1 for controlling undesirable plants.

9. Method for controlling undesirable plants, **characterized in that** compositions according to Claim 1 are allowed to act on the undesirable plants and/or their habitat.

10. Process for preparing a herbicidal composition, **characterized in that** a composition according to Claim 1 is mixed with surfactants and/or extenders.

## Revendications

1. Agent, renfermant une combinaison de substances actives comprenant
(a) un ou plusieurs composés de formule (I) 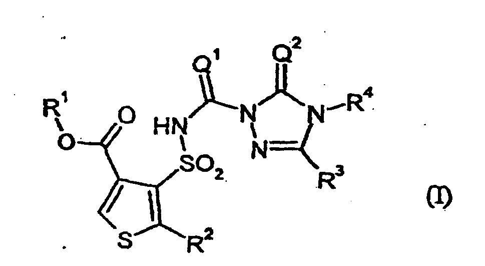 dans laquelle
Q¹ représente O (oxygène) ou S (soufre),
Q² représente O (oxygène) ou S (soufre),
R¹ représente un groupe alkyle présentant 1 à 6 atomes de carbone éventuellement substitué par des substituants cyano, halogène ou alkoxy en C₁-C₄, un groupe alcényle ou alcynyle chacun présentant 2 à 6 atomes de carbone chacun éventuellement substitué par des substituants cyano ou halogène, un groupe cycloalkyle ou cycloalkylalkyle chacun présentant 3 à 6 atomes de carbone dans le groupe cycloalkyle et éventuellement 1 à 4 atomes de carbone dans le fragment alkyle chacun éventuellement substitué par des substituants cyano, halogène ou alkyle en C₁-C₄, un groupe aryle ou arylalkyle chacun présentant 6 ou 10 atomes de carbone dans le groupe aryle et éventuellement 1 à 4 atomes de carbone dans le fragment alkyle chacun éventuellement substitué par des substituants nitro, cyano, halogène, alkyle en C₁-C₄ ou alkoxy en C₁-C₄, ou un hétérocyclyle ou hétérocyclylalkyle chacun présentant jusqu'à 6 atomes de carbone et de plus 1 à 4 atomes d'azote et/ou 1 à 2 atomes d'oxygène ou de soufre dans le groupe hétérocyclyle et éventuellement 1 à 4 atomes de carbone dans le fragment alkyle chacun étant éventuellement substitué par des substituants nitro, cyano, halogène, alkyle en C₁-C₄ ou alkoxy en C₁-C₄,
R² représente un atome d'hydrogène, un groupe cyano, nitro, halogène, un groupe alkyle, alkoxy, alkoxycarbonyle, alkylthio, alkylsulfinyle ou alkylsulfonyle chacun présentant 1 à 6 atomes de carbone dans le groupe alkyle chacun éventuellement substitué par des substituants cyano, halogène ou alkoxy en C₁-C₄, ou un groupe alcényle, alcynyle, alcényloxy ou alcynyloxy chacun présentant 2 à 6 atomes de carbone dans le groupe alcényle ou alcynyle chacun éventuellement substitué par des substituants cyano ou halogène,
R³ représente un atome d'hydrogène, un groupe hydroxy, mercapto, amino, cyano, fluor, chlore, brome, iode, un groupe alkyle présentant 1 à 6 atomes de carbone éventuellement substitué par des substituants fluor, chlore, brome, cyano, alkoxy en C₁-C₄, (alkyl en C₁-C₄) carbonyle ou (alkoxy en C₁-C₄)carbonyle, un groupe alcényle ou alcynyle chacun présentant 2 à 6 atomes de carbone chacun éventuellement substitué par des substituants fluor, chlore et/ou brome, un groupe alkoxy, alkylthio, alkylamino ou alkylcarbonylamino chacun présentant 1 à 6 atomes de carbone dans le groupe alkyle chacun éventuellement substitué par des substituants fluor, chlore, cyano, alkoxy en C₁-C₄ ou (alkoxy en C₁-C₄)carbonyle, un groupe alcényloxy, alcynyloxy, alcénylthio, alcynylthio, alcénylamino ou alcynylamino chacun présentant 3 à 6 atomes de carbone dans le groupe alcényle ou alcynyle, un groupe dialkylamino présentant à chaque fois 1 à 4 atomes de carbone dans les groupes alkyle, un groupe aziridino, pyrrolidino, pipéridino ou morpholino chacun éventuellement substitué par des substituants méthyle et/ou éthyle, un groupe cycloalkyle, cycloalcényle, cycloalkyloxy, cycloalkylthio, cycloalkylamino, cycloalkylalkyle, cycloalkylalkoxy, cycloalkylalkylthio ou cycloalkylalkylamino chacun présentant 3 à 6 atomes de carbone dans le groupe cycloalkyle ou cycloalcényle et éventuellement 1 à 4 atomes de carbone dans le fragment alkyle chacun éventuellement substitué par des substituants fluor, chlore, brome, cyano et/ou alkyle en C₁-C₄, ou représente un groupe aryle, arylalkyle, aryloxy, arylalkoxy, arylthio, arylalkylthio, arylamino ou arylalkylamino chacun présentant 6 ou 10 atomes de carbone dans le groupe aryle et éventuellement 1 à 4 atomes de carbone dans le fragment alkyle chacun éventuellement substitué par des substituants fluor, chlore, brome, cyano, nitro, alkyle en C₁-C₄, trifluorométhyle, alkoxy en C₁-C₄ et/ou (alkoxy en C₁-C₄)-carbonyle,
R⁴ représente un atome d'hydrogène, un groupe hydroxy, amino, cyano, un groupe (alkylidène en C₂-C₁₀)amino, un groupe alkyle présentant 1 à 6 atomes de carbone éventuellement substitué par des substituants fluor, chlore, brome, cyano, alkoxy en C₁-C₄, (alkyl en C₁-C₄) -carbonyle ou (alkoxy en C₁-C₄)-carbonyle, un groupe alcényle ou alcynyle chacun présentant 2 à 6 atomes de carbone chacun éventuellement substitué par des substituants fluor, chlore et/ou brome, un groupe alkoxy, alkylamino ou alkylcarbonylamino chacun présentant 1 à 6 atomes de carbone dans le groupe alkyle chacun éventuellement substitué par des substituants fluor, chlore, brome, cyano, alkoxy en C₁-C₄ ou (alkoxy en C₁-C₄)-carbonyle, un groupe alcényloxy présentant 3 à 6 atomes de carbone, un groupe dialkylamino à chaque fois présentant 1 à 4 atomes de carbone dans les groupes alkyle, un groupe cycloalkyle, cycloalkylamino ou cycloalkylalkyle chacun présentant 3 à 6 atomes de carbone dans le groupe alkyle et éventuellement 1 à 4 atomes de carbone dans le fragment alkyle chacun éventuellement substitué par des substituants fluor, chlore, brome, cyano et/ou alkyle en C₁-C₄, ou un groupe aryle ou arylalkyle chacun présentant 6 ou 10 atomes de carbone dans le groupe aryle et éventuellement 1 à 4 atomes de carbone dans le fragment alkyle chacun éventuellement substitué par des substituants fluor, chlore, brome, cyano, nitro, alkyle en C₁-C₄, trifluorométhyle et/ou alkoxy en C₁-C₄, ou
R³ et R⁴ conjointement représentent un groupe alcanediyle éventuellement ramifié présentant 3 à 6 atomes de carbone,
- ainsi que des sels des composés de formule (I),
et
(b) au moins un composé du groupe de composés suivants :
4-dichloroacétyl-1-oxa-4-aza-spiro[4.5]-décane (AD-67, MON-4660), 5-chloro-quinoléine-8-oxy-acétate de (1-méthyl-hexyle) (cloquintocet-mexyl), 2,2-dichloro-N,N-di-2-propényl-acétamide (dichlormid), 1-(2,4-dichlorophényl)-5-trichlorométhyl-1H-1,2,4-triazolo-3-carboxylate d'éthyle (fenchlorazole-éthyl), 2-chloro-4-trifluorométhyl-thiazolo-5-carboxylate de phénylméthyle (flurazole), 3-dichloroacétyl-5-(2-furanyl)-2,2,-diméthyl-oxazolidine (furilazole), 4,5-dihydro-5,5-diphényl-3-isoxazolcarboxylate d'éthyle (isoxadifen-éthyl), 1-(2,4-dichloro-phényl)-4,5-dihydro-5-mëthyl-1H-pyrazolo-3,5-dicarboxylate de diéthyle (mefenpyr-diéthyl), diphénylméthoxyacétate de méthyle (MON-7400),
et/ou les composés suivants
de formule (IIa) 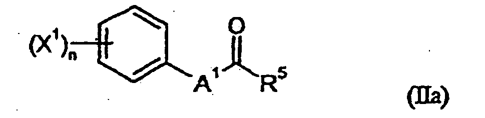
ou de formule (IIb) 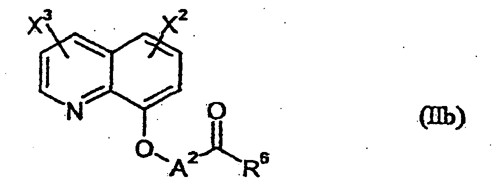 ou de formule (IIc) 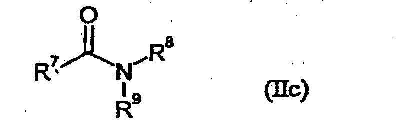 n étant un nombre compris entre 0 et 5,
A¹ représente un groupement hétérocyclique bivalent illustré ci-après 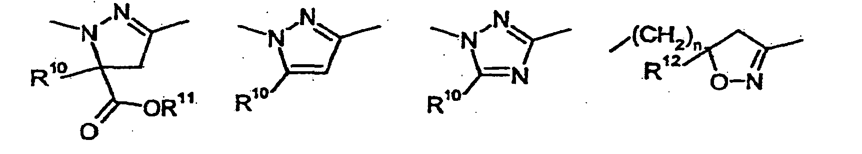
A² représente un groupe alcanediyle présentant 1 ou 2 atomes de carbone éventuellement substitué par des substituants alkyle en C₁-C₄ et/ou (alkoxy en C₁-C₄)-carbonyle,
R⁵ représente un groupe hydroxy, mercapto, amino, alkoxy en C₁-C₆, (alkyl en C₁-C₆)thio, (alkyl en C₁-C₆)amino ou di(alkyl en C₁-C₆)amino,
R⁶ représente un groupe hydroxy, mercapto, amino, un groupe alkoxy en C₁-C₆, (alcényl en C₂-C₆)oxy, (alkyl en C₁-C₆)thio, (alkyl en C₁-C₆)amino ou di(alkyl en C₁-C₆)amino chacun éventuellement substitué par des substituants alkyle en C₁-C₄, alkoxy en C₁-C₄ ou (alcényl en C₂-C₄)oxy,
R⁷ représente un groupe alkyle en C₁-C₄ à chaque fois éventuellement substitué par un substituant fluor, chlore et/ou brome,
R⁸ représente un atome d'hydrogène, un groupe alkyle en C₁-C₆, alcényle en C₂-C₆ ou alcynyle en C₂-C₆ chacun éventuellement substitué par des substituants fluor, chlore et/ou brome, (alkoxy en C₁-C₄) -alkyle en C₁-C₄, dioxolanyl-alkyle en C₁-C₄, furyle, furylalkyle en C₁-C₄, thiényle, thiazolyle, pipéridinyle, ou un groupe phényle éventuellement substitué par des substituants fluor, chlore et/ou brome ou alkyle en C₁-C₄,
R⁹ représente un atome d'hydrogène, un groupe alkyle en C₁-C₆, alcényle en C₂-C₆ ou alcynyle en C₂-C₆ chacun éventuellement substitué par des substituants fluor, chlore et/ou brome, (alkoxy en C₁-C₄) -alkyle en C₁-C₄, dioxolanyl-alkyle en C₁-C₄, furyle, furylalkyle en C₁-C₄, thiényle, thiazolyle, pipéridinyle, ou un groupe phényle éventuellement substitué par des substituants fluor, chlore et/ou brome ou alkyle en C₁-C₄, ou conjointement avec R⁸ représente un groupe alcanediyle en C₃-C₆ ou oxaalcanediyle en C₂-C₅ chacun éventuellement substitué par un groupe alkyle en C₁-C₄, phényle, furyle, un cycle benzène condensé ou par deux substituants, qui conjointement avec l'atome de carbone auquel ils sont liés forment un cycle carboné de 5 à 6 chaînons,
R¹⁰ représente un atome d'hydrogène, un groupe cyano, halogène, ou un groupe alkyle en C₁-C₄, cycloalkyle en C₃-C₆ ou phényle chacun éventuellement substitué par des substituants fluor, chlore et/ou brome,
R¹¹ représente, un atome d'hydrogène, un groupe alkyle en C₁-C₆, cycloalkyle en C₃-C₆ ou tri(alkyl en C₁-C₄)silyle éventuellement substitué par des substituants hydroxy, cyano, halogène ou alcoxy en C₁-C₄,
R¹² représente un atome d'hydrogène, un groupe cyano, halogène, ou un groupe alkyle en C₁-C₄, cycloalkyle en C₃-C₆ ou phényle chacun éventuellement substitué par des substituants fluor, chlore et/ou brome,
X¹ représente un groupe nitro, cyano, halogène, alkyle en C₁-C₄, halogénoalkyle en C₁-C₄, alkoxy en C₁-C₄ ou halogénoalkoxy en C₁-C₄,
X² représente un atome d'hydrogène, un groupe cyano, nitro, halogène, alkyle en C₁-C₄, halogénoalkyle en C₁-C₄, alkoxy en C₁-C₄, halogénoalkoxy en C₁-C₄,
X³ représente un atome d'hydrogène, un groupe cyano, nitro, halogène, alkyle en C₁-C₄, halogénoalkyle en C₁-C₄, alkoxy en C₁-C₄, halogénoalkoxy en C₁-C₄,
et/ou les composés suivantes
de formule (IId) 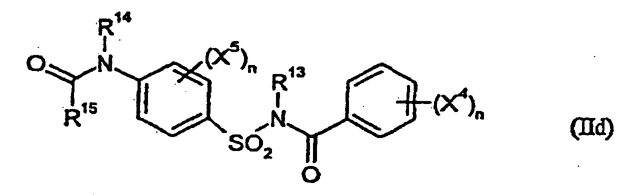 ou de formule (IIe) 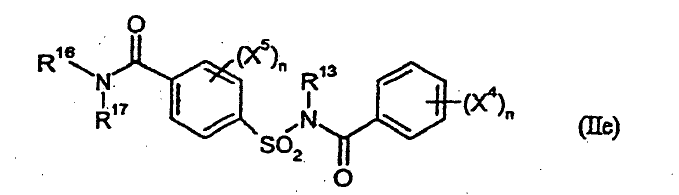
n de nouveau étant un nombre compris entre 0 et 5,
R¹³ représente un atome d'hydrogène ou un groupe alkyle en C₁-C₄,
R¹⁴ représente un atome d'hydrogène ou un groupe alkyle en C₁-C₄,
R¹⁵ représente un atome d'hydrogène, un groupe alkyle en C₁-C₆, alkoxy en C₁-C₆, (alkyl en C₁-C₆)-thio, (alkyl en C₁-C₆)amino ou di(alkyl en C₁-C₆)amino chacun éventuellement substitué par des substituants cyano, halogène ou alkoxy en C₁-C₄, ou un groupe cycloalkyle en C₃-C₆, cycloalkoxy en C₃-C₆, (cycloalkyl en C₃-C₆)thio ou (cycloalkyl en C₃-C₆)amino chacun éventuellement substitué par des substituants cyano, halogène ou alkyle en C₁-C₄,
R¹⁶ représente un atome d'hydrogène, un groupe alkyle en C₁-C₆ éventuellement substitué par des substituants cyano, hydroxy, halogène ou alkoxy en C₁-C₄, un groupe alcényle en C₃-C₆ ou alcynyle en C₃-C₆ chacun éventuellement substitué par des substituants cyano ou halogène, ou un groupe cycloalkyle en C₃-C₆ éventuellement substitué par des substituants cyano, halogène ou alkyle en C₁-C₄,
R¹⁷ représente un atome d'hydrogène, un groupe alkyle en C₁-C₆ éventuellement substitué par des substituants cyano, hydroxy, halogène ou alkoxy en C₁-C₄, un groupe alcényle en C₃-C₆ ou alcynyle en C₃-C₆ chacun éventuellement substitué par des substituants cyano ou halogène, un groupe cycloalkyle en C₃-C₆ éventuellement substitué par des substituants cyano, halogène ou alkyle en C₁-C₄, un groupe phényle éventuellement substitué par des substituants nitro, cyano, halogène, alkyle en C₁-C₄, halogénoalkyle en C₁-C₄, alkoxy en C₁-C₄ ou halogénoalkoxy en C₁-C₄, ou conjointement avec R¹⁶ représente un groupe alcanediyle en C₂-C₆ ou oxaalcanediyle en C₂-C₅ chacun éventuellement substitué par un substituant alkyle en C₁-C₄,
X⁴ représente un groupe nitro, cyano, carboxy, carbamoyle, formyle, sulfamoyle, hydroxy, amino, halogène, alkyle en C₁-C₄, halogénoalkyle en C₁-C₄, alkoxy en C₁-C₄ ou halogénoalkoxy en C₁-C₄, et
X⁵ représente un groupe nitro, cyano, carboxy, carbamoyle, formyle, sulfamoyle, hydroxy, amino, halogène, alkyle en C₁-C₄, halogénoalkyle en C₁-C₄, alkoxy en C₁-C₄ ou halogénoalkoxy en C₁-C₄.

2. Agent selon la revendication 1, **caractérisé en ce que**
Q¹ représente O (oxygène) ou S (soufre),
Q² représente 0 (oxygène) ou S (soufre),
R¹ représente un groupe méthyle, éthyle, n- ou i-propyle, n-, i-, s- ou t-butyle chacun éventuellement substitué par des substituants cyano, fluor, chlore, méthoxy ou éthoxy, un groupe propényle, butényle, propynyle ou butynyle chacun éventuellement substitué par des substituants cyano, fluor ou chlore, un groupe cyclopropyle, cyclobutyle, cyclopentyle, cyclohexyle, cyclopropylméthyle, cyclobutylméthyle, cyclopentylméthyle ou cyclohexylméthyle chacun éventuellement substitué par des substituants cyano, fluor, chlore, méthyle ou éthyle, un groupe phényle, phénylméthyle ou phényléthyle chacun éventuellement substitué par des substituants cyano, fluor, chlore, brome, méthyle, éthyle, n- ou i-propyle, trifluorométhyle, méthoxy, éthoxy, n- ou i-propoxy, difluorométhoxy ou trifluorométhoxy, ou un groupe hétérocyclyle ou hétérocyclylméthyle chacun éventuellement substitué par des substituants cyano, fluor, chlore, brome, méthyle, éthyle, n- ou i-propyle, méthoxy, éthoxy, n- ou i-propoxy, le groupe hétérocyclyle étant à chaque fois pris dans la gamme comprenant oxétanyle, thiétanyle, furyle, tétrahydrofuryle, thiényle, tétrahydrothiényle,
R² représente un atome d'hydrogène, un groupe cyano, fluor, chlore, brome, un groupe méthyle, éthyle, n- ou i-propyle, n-, i-, s- ou t-butyle, méthoxy, éthoxy, n- ou i-propoxy, méthoxycarbonyle, éthoxycarbonyle, n- ou i-propoxycarbonyle, méthylthio, éthylthio, n- ou i-propylthio, méthylsulfinyle, éthylsulfinyle, méthylsulfonyle ou éthylsulfonyle chacun éventuellement substitué par des substituants cyano, fluor, chlore, méthoxy ou éthoxy, ou un groupe propényle, butényle, propynyle, butynyle, propényloxy, butényloxy, propynyloxy ou butynyloxy chacun éventuellement substitué par des substituants cyano, fluor ou chlore,
R³ représente un atome d'hydrogène, un groupe hydroxy, mercapto, amino, cyano, fluor, chlore, brome, un groupe méthyle, éthyle, n- ou i-propyle, n-, i-, s- ou t-butyle chacun éventuellement substitué par des substituants fluor, chlore, cyano, méthoxy, éthoxy, n- ou i-propoxy, acétyle, propionyle, n- ou i butyroyle, méthoxycarbonyle, éthoxycarbonyle, n- ou i-propoxycarbonyle, un groupe éthényle, propényle, butényle, éthynyle, propynyle ou butynyle chacun éventuellement substitué par des substituants fluor, chlore et/ou brome, un groupe méthoxy, éthoxy, n- ou i-propoxy, n-, i-, s- ou t-butoxy, méthylthio, éthylthio, n- ou i-propylthio, n-, i-, s-ou t-butylthio, méthylamino, éthylamino, n- ou i-propylamino, n-, i-, s- ou t-butylamino, acétylamino ou propionylamino chacun éventuellement substitué par des substituants fluor, chlore, cyano, méthoxy, éthoxy, n- ou i-propoxy, méthoxycarbonyle, éthoxycarbonyle, n- ou i-propoxycarbonyle, un groupe propényloxy, butényloxy, éthynyloxy, propynyloxy, butynyloxy, propénylthio, buténylthio, propynylthio, butynylthio, propénylamino, buténylamino, propynylamino ou butynylamino, un groupe diméthylamino, diéthylamino ou dipropylamino, un groupe cyclopropyle, cyclobutyle, cyclopentyle, cyclohexyle, cyclopentényle, cyclohexényle, cyclopropyloxy, cyclobutyloxy, cyclopentyloxy, cyclohexyloxy, cyclopropylthio, cyclobutylthio, cyclopentylthio, cyclohéxylthio, cyclopropylamino, cyclobutylamino, cyclopentylamino, cyclohexylamino, cyclopropylméthyle, cyclobutylméthyle, cyclopentylméthyle, cyclohexylméthyle, cyclopropylméthoxy, cyclobutylméthoxy, cyclopentylméthoxy, cyclohexylméthoxy, cyclopropylméthylthio, cyclobutylméthylthio, cyclopentylméthylthio, cyclohexylméthylthio, cyclopropylméthylamino, cyclobutylméthylamino, cyclopentylméthylammo ou cyclohexylméthylamino chacun éventuellement substitué par des substituants fluor, chlore, méthyle et/ou éthyle, ou un groupe phényle, benzyle, phénoxy, benzyloxy, phénylthio, benzylthio, phénylamino ou benzylamino chacun éventuellement substitué par des substituants fluor, chlore, brome, méthyle, trifluorométhyle, méthoxy ou méthoxycarbonyle, et
R⁴ représente un atome d'hydrogène, un groupe hydroxy, amino, un groupe méthyle, éthyle, n- ou i-propyle, n-, i-, s- ou t-butyle chacun éventuellement substitué par des substituants fluor, chlore, cyano, méthoxy ou éthoxy, un groupe éthényle, propényle, butényle, propynyle ou butynyle chacun éventuellement substitué par des substituants fluor, chlore et/ou brome, un groupe méthoxy, éthoxy, n- ou i-propoxy, n-, i-, s- ou t-butoxy, méthylamino, éthylamino, n- ou i-propylamino, n-, i-, s- ou t-butylamino chacun éventuellement substitué par des substituants fluor, chlore, cyano, méthoxy ou éthoxy, un groupe propényloxy ou butényloxy, un groupe diméthylamino ou diéthylamino, un groupe cyclopropyle, cyclobutyle, cyclopentyle, cyclohexyle, cyclopropylamino, cyclobutylamino, cyclopentylamino, cyclohexylamino, cyclopropylméthyle, cyclobutylméthyle, cyclopentylméthyle ou cyclohexylméthyle chacun éventuellement substitué par des substituants fluor, chlore, méthyle et/ou éthyle, ou un groupe phényle ou benzyle chacun éventuellement substitué par des substituants fluor, chlore, méthyle, trifuorométhyle et/ou méthoxy, ou
R³ et R⁴ conjointement forment un groupe triméthylène (propane-1,3-diyle), tétraméthylène (butane-1,4-diyle) ou pentaméthylène (pentane-1,5-diyle).

3. Agent selon la revendication 1, **caractérisé en ce que**
Q¹ représente 0 (oxygène),
Q² représente O (oxygène),
R¹ représente un groupe méthyle, éthyle ou n- ou i-propyle chacun éventuellement substitué par des substituants fluor, chlore, méthoxy ou éthoxy,
R² représente un atome de fluor, de chlore, de brome, ou un groupe méthyle, éthyle ou n- ou i-propyle chacun éventuellement substitué par des substituants fluor, chlore, méthoxy ou éthoxy,
R³ représente un atome d'hydrogène, de chlore, de brome, un groupe méthyle, éthyle ou n- ou i-propyle chacun éventuellement substitué par des substituants fluor, chlore, méthoxy, éthoxy, n- ou i-propoxy, un groupe éthényle, propényle, butényle, propynyle ou butynyle chacun éventuellement substitué par des substituants fluor ou chlore, un groupe méthoxy, éthoxy, n- ou i-propoxy, méthylthio, éthylthio, n- ou i-propylthio, méthylamino, éthylamino, n- ou i-propylamino chacun éventuellement substitué par des substituants fluor, chlore, méthoxy, éthoxy, n- ou i-propoxy, un groupe propényloxy, propynyloxy, propénylthio, propynylthio, propénylamino ou propynylamino, un groupe diméthylamino ou diéthylamino, un groupe cyclopropyle, cyclopropyloxy, cyclopropylméthyle ou cyclopropylméthoxy chacun éventuellement substitué par des substituants fluor, chlore ou méthyle,
R⁴ représente un groupe méthyle, éthyle, n- ou i-propyle chacun éventuellement substitué par des substituants fluor, chlore, méthoxy ou éthoxy, un groupe éthényle, propényle ou propynyle chacun éventuellement substitué par des substituants fluor ou chlore, un groupe méthoxy, éthoxy, n- ou i-propoxy chacun éventuellement substitué par des substituants fluor, chlore, méthoxy ou éthoxy, un groupe méthylamino, ou un groupe cyclopropyle.

4. Agent selon la revendication 1, **caractérisé en ce que**
n vaut 0, 1, 2, 3 ou 4,
A² représente un groupe méthylène ou éthylène chacun éventuellement substitué par des substituants méthyle, éthyle, méthoxycarbonyle ou éthoxycarbonyle,
R⁵ représente un groupe hydroxy, mercapto, amino, méthoxy, éthoxy, n- ou i-propoxy, n-, i-, s- ou t-butoxy, méthylthio, éthylthio, n- ou i-propylthio, n-, i-, s- ou t-butylthio, méthylamino, éthylamino, n- ou i-propylamino, n-, i-, s- ou t-butylamino, diméthylamino ou diéthylamino,
R⁶ représente un groupe hydroxy, mercapto, amino, méthoxy, éthoxy, n- ou i-propoxy, n-, i-, s- ou t-butoxy, méthylthio, éthylthio, n- ou i-propylthio, n-, i-, s- ou t-butylthio, méthylamino, éthylamino, n- ou i-propylamino, n-, i-, s- ou t-butylamino, diméthylamino ou diéthylamino,
R⁷ représente un groupe méthyle, éthyle, n- ou i-propyle chacun éventuellement substitué par des substituants fluor, chlore et/ou brome ;
R⁸ représente un atome d'hydrogène, un groupe méthyle, éthyle, n- ou i-propyle, n-, i-, s- ou t-butyle, propényle, butényle, propynyle ou butynyle chacun éventuellement substitué par des substituants fluor et/ou chlore, méthoxyméthyle, éthoxyméthyle, méthoxyéthyle, éthoxyéthyle, dioxolanylméthyle, furyle, furyl-méthyle, thiényle, thiazolyle, pipéridinyle, ou un groupe phényle éventuellement substitué par des substituants fluor, chlore, méthyle, éthyle, n- ou i-propyle, n-, i-, s- ou t-butyle,
R⁹ représente un atome d'hydrogène, un groupe méthyle, éthyle, n- ou i-propyle, n-, i-, s- ou t-butyle, propényle, butényle, propynyle ou butynyle chacun éventuellement substitué par des substituants fluor et/ou chlore, méthoxyméthyle, éthoxyméthyle, méthoxyéthyle, éthoxyéthyle, dioxolanylméthyle, furyle, furyl-méthyle, thiényle, thiazolyle, pipéridinyle, ou un groupe phényle éventuellement substitué par des substituants fluor, chlore, méthyle, éthyle, n- ou i-propyle, n-, i-, s- ou t-butyle, ou conjointement avec R⁸ représente un des restes -CH₂-O-CH₂-CH₂- et -CH₂-CH₂-O-CH₂-CH₂-, qui sont éventuellement substitués par des substituants méthyle, éthyle, furyle, phényle, un cycle benzène condensé ou par deux substituants qui conjointement avec l'atome de carbone auquel ils sont liés forment un cycle carboné de 5 à 6 chaînons,
R¹⁰ représente un atome d'hydrogène, un groupe cyano, un atome de fluor, de chlore, de brome, ou un groupe méthyle, éthyle, n- ou i-propyle, cyclopropyle, cyclobutyle, cyclopentyle, cyclohexyle ou phényle chacun éventuellement substitué par des substituants fluor, chlore et/ou brome,
R¹¹ représente un atome d'hydrogène, un groupe méthyle, éthyle, n- ou i-propyle, n-, i-, s- ou t-butyle chacun éventuellement substitué par des substituants hydroxy, cyano, fluor, chlore, méthoxy, éthoxy, n- ou i-propoxy,
R¹² représente un atome d'hydrogène, un groupe cyano, fluor, chlore, brome, ou un groupe méthyle, éthyle, n- ou i-propyle, n-, i-, s- ou t-butyle, cyclopropyle, cyclobutyle, cyclopentyle, cyclohexyle ou phényle chacun éventuellement substitué par des substituants fluor, chlore et/ou brome,
X¹ représente un groupe nitro, cyano, fluor, chlore, brome, méthyle, éthyle, n- ou i-propyle, n-, i-, s- ou t-butyle, difluorométhyle, dichlorométhyle, trifluorométhyle, trichlorométhyle, chlorodifluorométhyle, fluorodichlorométhyle, méthoxy, éthoxy, n- ou i-propoxy, difluorométhoxy ou trifluorométhoxy,
X² représente un atome d'hydrogène, un groupe nitro, cyano, fluor, chlore, brome, méthyle, éthyle, n- ou i-propyle, n-, i-, s- ou t-butyle, difluorométhyle, dichlorométhyle, trifluorométhyle, trichlorométhyle, chlorodifluorométhyle, fluorodichlorométhyle, méthoxy, éthoxy, n- ou i-propoxy, difluorométhoxy ou trifluorométhoxy,
X³ représente un atome d'hydrogène, un groupe nitro, cyano, fluor, chlore, brome, méthyle, éthyle, n- ou i-propyle, n-, i-, s- ou t-butyle, difluorométhyle, dichlorométhyle, trifluorométhyle, trichlorométhyle, chlorodifluorométhyle, fluorodichlorométhyle, méthoxy, éthoxy, n- ou i-propoxy, difluorométhoxy ou trifluorométhoxy,
R¹³ représente un atome d'hydrogène, un groupe méthyle, éthyle, n- ou i-propyle,
R¹⁴ représente un atome d'hydrogène, un groupe méthyle, éthyle, n- ou i-propyle,
R¹⁵ représente un atome d'hydrogène, un groupe méthyle, éthyle, n-ou i-propyle, n-, i-, s- ou t-butyle, méthoxy, éthoxy, n- ou i-propoxy, n-, i-, s- ou t-butoxy, méthylthio, éthylthio, n- ou i-propylthio, n-, i-, s- ou t-butylthio, méthylamino, éthylamino, n- ou i-propylamino, n-, i-, s- ou t-butylamino, diméthylamino ou diéthylamino chacun éventuellement substitué par des substituants cyano, fluor, chlore, méthoxy, éthoxy, n- ou i-propoxy, un groupe cyclopropyle, cyclobutyle, cyclopentyle, cyclohexyle, cyclopropyloxy, cyclobutyloxy, cyclopentyloxy, cyclohexyloxy, cyclopropylthio, cyclobutylthio, cyclopentylthio, cyclohexylthio, cyclopropylamino, cyclobutylamino, cyclopentylamino ou cyclohexylamino chacun éventuellement substitué par des substituants cyano, fluor, chlore, brome, méthyle, éthyle, n- ou i-propyle,
R¹⁶ représente un atome d'hydrogène, un groupe méthyle, éthyle, n- ou i-propyle, n-, i- ou s-butyle chacun éventuellement substitué par des substituants cyano, hydroxy, fluor, chlore, méthoxy, éthoxy, n- ou i-propoxy, un groupe propényle, butényle, propynyle ou butynyle chacun éventuellement substitué par des substituants cyano, fluor, chlore ou brome, ou un groupe cyclopropyle, cyclobutyle, cyclopentyle ou cyclohexyle chacun éventuellement substitué par des substituants cyano, fluor, chlore, brome, méthyle, éthyle, n- ou i-propyle,
R¹⁷ représente un atome d'hydrogène, un groupe méthyle, éthyle, n- ou i-propyle, n-, i- ou s-butyle chacun éventuellement substitué par des substituants cyano, hydroxy, fluor, chlore, méthoxy, éthoxy, n- ou i-propoxy, un groupe propényle, butényle, propynyle ou butynyle chacun éventuellement substitué par des substituants cyano, fluor, chlore ou brome, un groupe cyclopropyle, cyclobutyle, cyclopentyle ou cyclohexyle chacun éventuellement substitué par des substituants cyano, fluor, chlore, brome, méthyle, éthyle, n- ou i-propyle, un groupe phényle éventuellement substitué par des substituants nitro, cyano, fluor, chlore, brome, méthyle, éthyle; n- ou i-propyle, n-, i-, s- ou t-butyle, trifluorométhyle, méthoxy, éthoxy, n- ou i-propoxy, difluorométhoxy ou trifluorométhoxy, ou conjointement avec R¹⁶ représentent un groupe butane-1,4-diyle (triméthylène), pentane-1,5-diyle, 1-oxa-butane-1,4-diyle ou 3-oxa-pentane-1,5-diyle chacun éventuellement substitué par un substituant méthyle ou éthyle,
X⁴ représente un groupe nitro, cyano, carboxy, carbamoyle, formyle, sulfamoyle, hydroxy, amino, fluor, chlore, brome, méthyle, éthyle, n- ou i-propyle, n-, i-, s- ou t-butyle, trifluorométhyle, méthoxy, éthoxy, n- ou i-propoxy, difluorométhoxy ou trifluorométhoxy, et
x⁵ représente un groupe nitro, cyano, carboxy, carbamoyle, formyle, sulfamoyle, hydroxy, amino, fluor, chlore, brome, méthyle, éthyle, n- ou i-propyle, n-, i-, s- ou t-butyle, trifluorométhyle, méthoxy, éthoxy, n- oui-propoxy, difluorométhoxy ou trifluorméthoxy.

5. Agent selon la revendication 1, **caractérisé en ce que** le composant (b) est un ou plusieurs composés pris parmi les substances actives AD-67, cloquintocet-mexyl, dichlormid, fenchlorazole-éthyl, isoxadifen-éthyl, mefenpyr-diéthyl, MON-7400, flurazole, furilazole et le composé (II d-25)

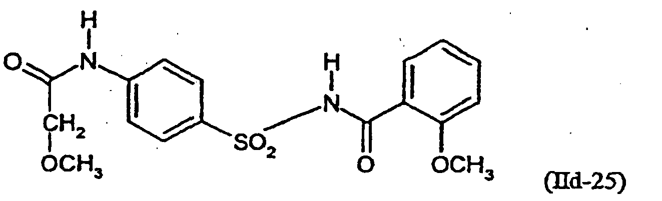

6. Agent selon la revendication 1, **caractérisé en ce que** le composé du groupe (b) est un composé de formule (IIe), où les restes R¹³, R¹⁶, R¹⁷, (X⁴)ₙ et (X⁵)ₙ possèdent les significations indiquées dans le Tableau suivant :
| R¹³ | R¹⁶ | R¹⁷ | (Positions) (X⁴)ₙ | (Positions) (X⁵)ₙ |
|---|---|---|---|---|
| H | H | CH₃ | (2) OCH₃ | - |
| H | H | C₂H₅ | (2) OCH₃ | - |
| H | H | C₃H₇-n | (2) OCH₃ | - |
| H | H | C₃H₇-n | (2) OCH₃ | - |
| H | H | 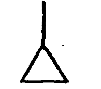 | (2) OCH₃ | - |
| H | CH₃ | CH₃ | (2) OCH₃ | - |
| H | H | CH₃ | (2) OCH₃ | - |
| | | | (5) CH₃ | |
| H | H | C₂H₅ | (2) OCH₃ | - |
| | | | (5) CH₃ | |
| H | H | C₃H₇-n | (2) OCH₃ | - |
| | | | (5) CH₃ | |
| H | H | C₃H₇ - i | (2) OCH₃ | - |
| | | | (5) CH₃ | |
| H | H | 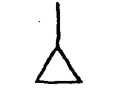 | (2) OCH₃ | - |
| | | | (5) CH₃ | |
| H | CH₃ | CH₃ | (2) OCH₃ | - |
| | | | (5) CH₃ | |
| H | H | CH₂CH=CH₂ | (2) OCH₃ | - |
| H | H | CH₂CH=CH₂ | (2) OCH₃ | - |
| | | | (5) CH₃ | |
| H | H | 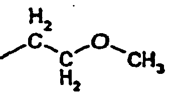 | (2) OCH₃ | - |
| H | H | 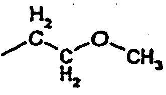 | (2) OCH₃ | - |
| | | | (5) CH₃ | |
| H | H | 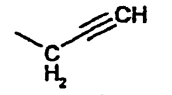 | (2) OCH₃ | - |
| H | H | 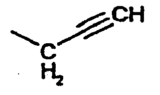 | (2) OCH₃ | - |
| | | | (5) CH₃ | |
| H | H | 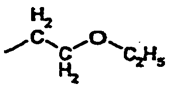 | (2) OCH₃ | - |
| H | H | 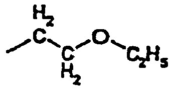 | (2) OCH₃ | - |
| | | | (5) CH₃ | |

7. Agent selon la revendication 5 ou 6, **caractérisé en ce que** le composé de formule (I) ou le sel sodique des composés de formule (I) possèdent l'une des significations des restes Q¹, Q², R¹, R², R³ et R⁴ à la formule (I) indiquées dans le Tableau suivant :
| Q¹ | Q² | R¹ | R² | R³ | R⁴ |
|---|---|---|---|---|---|
| O | O | CH₃ | CH₃ | OC₂H₅ | CH₃ |
| O | O | CH₃ | CH₃ | OCH₃ | CH₃ |
| O | O | CH₃ | CH₃ | OC3H₇-n | CH₃ |
| O | O | CH₃ | CH₃ | OC₃H₇-i | CH₃ |
| O | O | CH₃ | CH₃ | OCH₃ | 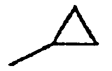 |
| O | O | CH₃ | CH₃ | OC₂H₅ | 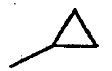 |
| O | O | CH₃ | CH₃ | OC₃H₇-n | 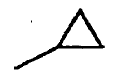 |
| O | O | CH₃ | CH₃ | OC₃H₇-i | 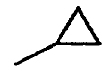 |
| O | O | CH₃ | CH₃ | 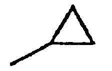 | 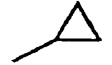 |
| O | O | CH₃ | CH₃ | CH₃ | CH₃ |
| O | O | CH₃ | CH₃ | C₂H₅ | CH₃ |
| O | O | CH₃ | CH₃ | SCH₃ | CH₃ |
| O | O | C₂H₅ | CH₃ | OCH₃ | CH₃ |
| O | O | CH₃ | CH₃ | CH₂OCH₃ | 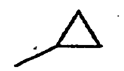 |
| O | O | C₂H₅ | CH₃ | OC₂H₅ | CH₃ |
| O | O | C₂H₅ | CH₃ | OCH₃ | 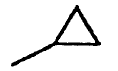 |
| O | O | CH₃ | CH₃ | C₂H₅ | OC₂H₅ |
| O | O | CH₃ | CH₃ | C₂H₅ | 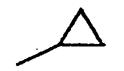 |

8. Utilisation d'un agent selon la revendication 1 dans la lutte contre les plantes indésirables.

9. Procédé pour la lutte contre les plantes indésirables, **caractérisé en ce qu'**on laisse agir l'agent selon la revendication 1 sur les plantes indésirables et/ou leur espace vital.

10. Procédé pour la préparation d'un agent herbicide **caractérisé en ce qu'**on mélange un agent herbicide selon la revendication 1 avec des agents de surface et/ou diluants.
